(19) Europäisches Patentamt / European Patent Office / Office européen des brevets

(11) **EP 4 120 255 A1**

(12) **DEMANDE DE BREVET EUROPEEN**

(43) Date de publication:
**18.01.2023 Bulletin 2023/03**

(21) Numéro de dépôt: **21305987.6**

(22) Date de dépôt: **15.07.2021**

(51) Classification Internationale des Brevets (IPC):
**G10L 19/035** *(2013.01)* **G06T 9/00** *(2006.01)*
**H04N 19/124** *(2014.01)* **H04N 19/597** *(2014.01)*
**H04N 19/94** *(2014.01)* *G10L 19/038* *(2013.01)*
**G10L 19/008** *(2013.01)*

(52) Classification Coopérative des Brevets (CPC):
**G06T 9/001; G06T 9/008; G10L 19/038;**
**H04N 19/124; H04N 19/597; H04N 19/94;**
G10L 19/008; G10L 19/035

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeur: **Orange**
**92130 Issy-les-Moulineaux (FR)**

(72) Inventeurs:
• **RAGOT, Stéphane**
**92320 CHÂTILLON (FR)**
• **YAOUMI, Mohamed**
**92320 CHÂTILLON (FR)**

(54) **QUANTIFICATION VECTORIELLE SPHERIQUE OPTIMISEE**

(57) L'invention se rapporte à un procédé de codage d'un point d'entrée sur une sphère de dimension n par codage de n-1 coordonnées sphériques de ce point d'entrée, le procédé comportant les opérations de quantification scalaire séquentielle des n-1 coordonnées sphériques (E102-1 à E102-(n-1)) afin d'obtenir au plus $2^{n-2}$ candidats à l'issue de la quantification scalaire séquentielle des n-1 coordonnées (E105), puis l'opération de sélection (E106) du meilleur candidat qui minimise une distance entre le point d'entrée et les au plus $2^{n-2}$ candidats, et détermination des indices de quantification séparés issus de la quantification scalaire séquentielle desdites coordonnées sphériques dudit meilleur candidat et de codage séquentiel (E107) des indices de quantification séparés dudit meilleur candidat. L'invention se rapporte également à un procédé de décodage correspondant, un dispositif de codage et un dispositif de décodage.

EP 4 120 255 A1

$$x = (x_1, \ldots, x_n)$$

E100

E101  Sph. $(1, \phi_1, \ldots, \phi_{n-1})$

E103-1 $N_1$   E103-2 $N_2$   ...   E103-(n-1) $N_{n-1}$

E104-1 quant. $\phi_1$   E104-2 quant. $\phi_2$   ...   E104-(n-1) quant. $\phi_{n-1}$

E102-1   E102-2   E102-(n-1)

E105  $2^{n-2}$ cand. $(1, \hat{\phi}_1(i_1), \ldots, \hat{\phi}_{n-1}(i_{n-1}))$

E106  Min dist. $(i_1(m \gg (n-3)), \ldots, i_{n-1}(m))$

E107  MUX IND.

FIG1a

**(Cont. page suivante)**

FIG.1b

**Description**

La présente invention concerne la quantification vectorielle sphérique appliquée au codage/décodage de données sonores, notamment des données spatialisées en contexte ambiophonique (noté ci-après également « ambisonique ») pour le codage de matrices de rotations par le biais d'une représentation par quaternions ou encore le codage paramétrique où des directions de source (abrégées comme « DoA » pour Direction of Arrival en anglais) sont quantifiées, mais également pour le codage audio par transformée mono servant de codage cœur pour représenter les données sonores spatialisées.

Les codeurs/décodeurs (ci-après appelés « codées ») qui sont utilisés actuellement en téléphonie mobile sont mono (un seul canal de signal pour une restitution sur un seul haut-parleur). Le codec 3GPP EVS (pour « Enhanced Voice Services ») permet d'offrir une qualité « Super-HD » (aussi appelée voix « Haute Définition Plus » ou HD+) avec une bande audio en bande super-élargie (SWB pour « super-wideband » en anglais) pour des signaux échantillonnés à 32 ou 48 kHz ou pleine bande (FB pour « Fullband ») pour des signaux échantillonnés à 48 kHz ; la largeur de bande audio est de 14,4 à 16 kHz en mode SWB (de 9,6 à 128 kbit/s) et de 20 kHz en mode FB (de 16,4 à 128 kbit/s).

La prochaine évolution de qualité dans les services conversationnels proposés par les opérateurs devrait être constituée par les services immersifs, en utilisant des terminaux tels que des smartphones équipés de plusieurs microphones ou des équipements de conférence audio spatialisée ou de visioconférence de type télé-présence ou vidéo 360°, ou encore des équipements de partage de contenus audio « live », avec un rendu sonore spatialisé en 3D autrement plus immersif qu'une simple restitution stéréo 2D. Avec les usages de plus en plus répandus d'écoute sur téléphone mobile avec un casque audio et l'apparition d'équipements audio avancés (accessoires tels qu'un microphone 3D, assistants vocaux avec antennes acoustiques, casques de réalité virtuelle ou augmentée, etc.) la captation et le rendu de scènes sonores spatialisées sont désormais assez répandus pour offrir une expérience de communication immersive.

A ce titre, la future norme 3GPP « IVAS » (pour « Immersive Voice And Audio Services ») propose l'extension du codec EVS à l'audio immersif en acceptant comme format d'entrée du codec au moins les formats de son spatialisé listés ci-dessous (et leurs combinaisons):

- Format multicanal (channel-based en anglais) de type stéréo ou 5.1 où chaque canal vient alimenter un haut-parleur (par exemple L et R en stéréo ou L, R, Ls, Rs et C en 5.1) ;
- Format objet (object-based en anglais) où des objets sonores sont décrits comme un signal audio (en général mono) associé à des métadonnées décrivant les attributs de cet objet (position dans l'espace, largeur spatiale de la source, etc.),
- Format ambisonique (scenEbased en anglais) qui décrit le champ sonore en un point donné, en général capté par un microphone sphérique ou synthétisé dans le domaine des harmoniques sphériques.

Il est également question de considérer potentiellement d'autres formats d'entrée tels que le format appelé MASA (Metadata assisted Spatial Audio) qui correspond à une représentation paramétrique d'une prise de son sur téléphone mobile équipés de plusieurs microphones.

Les signaux à traiter par le codeur/décodeur se présentent comme des successions de blocs d'échantillons sonores appelés « trames » ou « sous-trames » ci-après.

En outre, ci-après, les notations mathématiques suivent la convention suivante :

- Scalaire: $s$ ou $N$ (minuscule pour les variables ou majuscule pour les constantes)
- Vecteur : q (minuscule, gras et italique)
- Matrice : M (majuscule, gras et italique)

Par la suite, on notera la sphère $\mathbb{S}_n$ de rayon r en dimension $n+1$ définie comme

$$\mathbb{S}_n = \left\{ \boldsymbol{x} = (x_1, \ldots, x_{n+1}) \in \mathbb{R}^{n+1} \mid \|\boldsymbol{x}\| = \sqrt{{x_1}^2 + \cdots + {x_{n+1}}^2} = r \right\}$$

où $\|.\|$ désigne la norme euclidienne. Quand le rayon r ne sera pas précisé, on supposera que r = 1 (sphère unité).

On rappelle ici la définition des coordonnées sphériques en dimension 3 et 4. Pour un point $(x, y, z)$ en dimension 3 on a en général au moins deux conventions classiques de coordonnées sphériques $(r, \phi, \theta)$:

- la convention géographique : $x = r \cos\phi \cos\theta$, $y = r \cos\phi \sin\theta$, $z = r \sin\phi$ avec $r \geq 0$, $-\pi/2 \leq \phi \leq \pi/2$ et $-\pi \leq \theta \leq \pi$
- la convention physique: $x = r \sin\phi \cos\theta$, $y = r \sin\phi \sin\theta$, $z = r \cos\phi$ avec $r \geq 0$, $0 \leq \phi \leq \pi$ et $-\pi \leq \theta \leq \pi$

Le rayon r et l'azimut (ou longitude) $\theta$ sont identiques dans ces deux définitions, mais l'angle $\phi$ diffère selon qu'il est défini par rapport au plan horizontal 0xy (élévation ou latitude sur l'intervalle [-$\pi$/2, $\pi$/2]) ou à partir de l'axe 0z (co-latitude ou angle polaire sur l'intervalle [0, $\pi$]). L'azimut $\theta$ peut être défini sur un intervalle [-$\pi$, $\pi$], de façon équivalente on pourra le définir sur [0,2$\pi$] par simple opération de modulo 2$\pi$. On pourra aussi représenter les mêmes coordonnées angulaires dans une autre unité, par exemple en degrés. On notera que les symboles peuvent être différents dans la littérature (par exemple $\varphi$ au lieu de $\phi$) et/ou intervertis (par exemple $\theta$ pour la colatitude et $\varphi$ pour la la longitude).

Par ailleurs, la définition des coordonnées sphériques se généralise en dimension plus élevée. Pour un point ($w, x, y, z$) en dimension 4 on reprend ici la convention mathématique des coordonnées sphériques ($r, \phi_1, \phi_2, \phi_3$) : w = r cos $\phi_1$, x = r sin $\phi_1$ cos $\phi_2$, y = r sin $\phi_1$ sin $\phi_2$ cos $\phi_3$, z = r sin $\phi_1$ sin $\phi_2$ sin $\phi_3$, où r $\geq$ 0 est le rayon, $\phi_1$ et $\phi_2$ sont sur [0, $\pi$] et $\phi_3$ sur [-$\pi$, $\pi$] ou de façon équivalente sur [0, 2$\pi$]. On notera qu'il est possible de définir d'autres systèmes de coordonnées sphériques, par exemple pour le cas en dimension 4 on peut définir trois angles en plus du rayon r sous la forme: w = r cos $\omega$, x = r sin $\omega$ sin $\phi$ cos $\theta$, y = r sin $\omega$ sin $\phi$ sin $\theta$, z = r sin $\omega$ cos $\phi$ ; dans cette alternative, l'angle $\omega$ est identique à la coordonnée sphérique $\phi_1$ définie précédemment, par contre les 3 dernières composantes ($x, y, z$) sont vues comme un point 3D et représentées ici par la colatitude $\phi$ et l'azimut $\theta$ comme défini précédemment pour la dimension 3 avec la convention physique - les angles $\phi_1$ et $\phi_2$ sont donc différents de $\phi$ et $\theta$, à cause de la permutation des coordonnées et des conventions différentes.

De façon générale, il est possible de décomposer un point en dimension $n$ en un rayon r (correspondant à la distance à l'origine ou la norme) et $n$ - 1 coordonnées angulaires avec $n$ - 2 angles sur un intervalle de longueur $\pi$ et un intervalle de longueur 2$\pi$.

On considèrera dans l'invention plus particulièrement des discrétisations de la sphère unité $\mathbb{S}_n$ en dimension 3 et 4, où le rayon est fixé à r = 1, et les $n$ - 1 coordonnées angulaires sont quantifiées de façon séquentielle. Cependant, selon l'invention d'autres dimensions que 3 ou 4 seront possibles.

On s'intéresse dans l'invention à des exemples de réalisation de quantification vectorielle sphérique appliqués au codage audio en général, et plus particulièrement au codage de son spatialisé, dont le format ambisonique. Cela inclut aussi le codage paramétrique utilisant des directions de sources en 3D. L'invention pourra également s'appliquer à d'autres formats audio et à d'autres signaux dans lesquels des données sphériques en dimension n sont à coder, par exemple pour le codage audio par transformée où chaque sous-bande est codée par quantification vectorielle sphérique de type gain-forme.

On rappelle ci-dessous les principes de l'ambisonique et de son codage par des approches de type analyse en composantes principales (PCA pour Principal Component Analysis) et DiRAC (pour Directional Audio Coding).

Dans des variantes, on pourra appliquer l'invention à d'autres schémas de codage, en particulier pour le codage audio par tranformée.

L'ambisonique est une méthode d'enregistrement (« codage » au sens acoustique) de son spatialisé et un système de reproduction (« décodage » au sens acoustique). Un microphone ambisonique (à l'ordre 1) comprend au moins quatre capsules (typiquement de type cardioïde ou sous-cardioïde) arrangées sur une grille sphérique, par exemple les sommets d'un tétraèdre régulier. Les canaux audio associés à ces capsules s'appellent le « A-format ». Ce format est converti dans un « B-format », dans lequel le champ sonore est décomposé en quatre composantes (harmoniques sphériques) notées W, X, Y, Z, qui correspondent à quatre microphones virtuels coïncidents. La composante W correspond à une captation omnidirectionnelle du champ sonore alors que les composantes X, Y et Z, plus directives, sont assimilables à des microphones à gradients de pression orientés suivant les trois axes orthogonaux de l'espace. Un système ambisonique est un système flexible dans le sens où l'enregistrement et la restitution sont séparés et découplés. Il permet un décodage (au sens acoustique) sur une configuration quelconque de haut-parleurs (par exemple, binaural, son « surround » de type 5.1 ou périphonie avec élévation de type 7.1.4). L'approche ambisonique peut être généralisée à plus de quatre canaux en B-format et cette représentation généralisée est couramment nommée « HOA » (pour « Higher-Order Ambisonics »). Le fait de décomposer le son sur plus d'harmoniques sphériques améliore la précision spatiale de restitution lors d'un rendu sur haut-parleurs ou casque audio.

Un signal ambisonique à l'ordre M comprend K=(M+1)$^2$ composantes et, à l'ordre 1 (si M=1), on retrouve les quatre composantes W, X, Y, et Z, couramment appelé FOA (pour First-Order Ambisonics). Il existe aussi une variante dite « planaire » de l'ambisonique (W, X, Y) qui décompose le son défini dans un plan qui est en général le plan horizontal (où Z=0). Dans ce cas, le nombre de composantes est K =2M+1 canaux. L'ambisonique d'ordre 1 (4 canaux : W, X, Y, Z), l'ambisonique d'ordre 1 planaire (3 canaux : W, X, Y), l'ambisonique d'ordre supérieur sont tous désignés ci-après par « ambisonique » indistinctement pour faciliter la lecture, les traitements présentés étant applicables indépendamment du type planaire ou non et du nombre de composantes ambisoniques.

Si toutefois dans certains passages il est besoin de faire une distinction, les termes « ambisonique d'ordre 1 » et « ambisonique d'ordre 1 planaire » sont utilisés.

Différentes solutions ont été proposées pour coder des signaux ambisoniques. L'approche la plus simple consiste à un codage multi-mono, où chaque composante ambisonique est codée séparément par un codeur audio mono. On s'intéresse dans l'invention à une approche particulière de codage ambisonique, décrite dans les publications :

- P. Mahé, S. Ragot, S. Marchand, "First-order ambisonic coding with quaternion-based interpolation of PCA rotation matrices," Proc. EAA Spatial Audio Signal Processing Symposium, Paris, France, Sept. 2019, pp. 7-12
- P. Mahé, S. Ragot, S. Marchand, "First-Order Ambisonic Coding with PCA Matrixing and Quaternion-Based Interpolation," Proc. DAFx, Birmingham, UK, Sept. 2019.

Cette approche utilise la quantification et l'interpolation de matrices de rotations, comme décrit également dans la demande de brevet WO2020177981. La stratégie de ce type de codage ambisonique est de dé-corréler au maximum les canaux du signal ambisonique et de les coder ensuite séparément avec un codec cœur (par exemple multi-mono). Cette stratégie permet de limiter les artéfacts dans le signal ambisonique décodé. Plus particulièrement, on applique une décorrélation optimisée des signaux d'entrée avant codage (par exemple multi-mono). Dans cette approche, des matrices de rotation de taille 4x4 pour le cas FOA en 3D (issues d'une analyse PCA/KLT telle que décrite par exemple dans la demande de brevet suscitée) sont converties en paramètres, par exemple 6 angles d'Euler généralisés ou deux quaternions unitaires, qui sont codés.

Par ailleurs, le domaine des quaternions permet d'interpoler les matrices de transformation calculées pour l'analyse PCA/KLT plutôt que de répéter plusieurs fois par trame une décomposition en valeurs propres et vecteurs propres ; les matrices de transformation étant des matrices de rotation, au décodage, l'opération de matriçage inverse s'effectue simplement en transposant la matrice appliquée au codage.

Il existe dans ce contexte, un besoin de représenter ces matrices de rotation de façon efficace, ce qui revient, lorsque ces matrices de rotations sont représentées par des quaternions unitaires, à trouver une méthode efficace de quantification vectorielle sur une sphère $\mathbb{S}_3$ en dimension 4.

Une approche alternative au codage PCA est donnée par le codage DiRAC (Directional Audio Coding), décrite par exemple dans l'article V. Pulkki, Spatial sound reproduction with directional audio coding, Journal of the Audio Engineering Society, vol. 55, no. 6, pp. 503-516, 2007. Dans ce document, une cartographie est réalisée par le biais d'une analyse directionnelle pour trouver une direction (DoA) par sous-bandes. Cette DoA est complétée par un paramètre de « diffuseness », ce qui donne une description paramétrique de la scène sonore.

Le signal d'entrée multicanal est codé sous la forme de canaux de transport (typiquement un signal mono ou stéréo obtenu par réduction de multiples canaux captés) et des métadonnées spatiales (DoA et « diffuseness » par sous-bandes).

On suppose ici que l'analyse du signal d'entrée selon la méthode paramétrique DirAC est connue de l'homme de l'art. Les directions de sources sont représentées sous la forme de données sphériques 3D, par exemple sous la forme de coordonnées sphériques (azimut, élévation) selon la convention géographique. Il existe dans ce contexte un besoin de représenter ces informations de DoA de façon efficace, ce qui peut se formuler comme un problème de quantification vectorielle sur la sphère $\mathbb{S}_2$ en dimension 3.

De façon générale, n'importe quelle discrétisation de la sphère $\mathbb{S}_2$ peut être utilisée comme dictionnaire de quantification vectorielle sphérique. Cependant, sans structure particulière, la recherche du plus proche voisin et l'indexation dans ce dictionnaire peuvent s'avérer coûteuses à mettre en œuvre quand le débit de codage des informations DoA est trop élevé (ex : 16 bits par vecteur 3D indiquant une DoA).

Un exemple de dictionnaire structuré pouvant être utilisé pour répondre à ce problème est donné par la grille sphérique quasi-uniforme décrite à la section 3.2 de l'article Perotin et al., CRNN-based multiple DoA estimation using acoustic intensity features for Ambisonics recordings, IEEE Journal of Selected Topics in Signal Processing, 2019. Cette grille discrétise séparément l'élévation et l'azimut, avec un nombre de niveaux sur l'azimut qui dépend de la couche sphérique associée à chaque niveau d'élévation. Cette discrétisation est donnée pour une élévation $\phi$ dans [-90,90] et un azimut $\theta$ dans [-180,180] en degrés par :

$$\begin{cases} \phi_i = -90 + \dfrac{i}{I}180, & i = 0,\dots,I \\[2mm] \theta_j^i = -180 + \dfrac{j}{J^i+1}360, & j = 0,\dots,J^i \end{cases}$$

où $I = \lfloor 180/\alpha \rfloor$ et $J^i = \left\lfloor \dfrac{360}{\alpha}\cos\phi_i \right\rfloor$, et a est une résolution angulaire (en degrés). Cette grille sphérique n'est pas optimale car l'azimut $\theta_j^i$ commence toujours à -180 degrés pour chaque indice d'élévation *i*, ce qui implique un alignement de tous les points $(\phi_i, \theta_{j=0}^i)$ sur un même méridien. Or, pour qu'une grille sphérique 3D soit quasi-optimale, il est souhaitable qu'une répartition locale de points à la surface de la sphère soit similaire à un réseau 2D hexagonal, ce qui n'est clairement pas vérifié si les points sont alignés de la sorte sur un méridien.

Par ailleurs, il n'est pas décrit dans cet article de recherche optimale pour un codage utilisant cette grille ni d'indexation dans cette grille discrétisant la sphère $\mathbb{S}_2$ en dimension 3.

Il existe donc un besoin d'améliorer les méthodes de l'état de l'art de quantification de données sphériques.

L'invention vient améliorer l'état de la technique.

A cet effet, l'invention vise un procédé de codage d'un point d'entrée sur une sphère de dimension n par codage de n-1 coordonnées sphériques de ce point d'entrée, le procédé comportant les opérations suivantes :

a) quantification scalaire séquentielle des n-1 coordonnées sphériques, définissant une grille sphérique , comportant pour une coordonnée sphérique à coder :

- détermination d'un nombre de niveaux de quantification scalaire en fonction de la coordonnée sphérique à coder et le cas échéant des coordonnées sphériques précédemment codées;
- quantification scalaire de la dite coordonnée sphérique en fonction dudit nombre de niveaux correspondant à ladite coordonnée sphérique, avec pour n-2 coordonnées, la détermination de 2 candidats les plus proches pour la coordonnée sphérique à coder et donnant deux indices de quantification fonction des indices de quantification déterminés pour les coordonnées sphériques précédentes, afin d'obtenir au plus $2^{n-2}$ candidats à l'issue de la quantification scalaire séquentielle des n-1 coordonnées;

b) sélection du meilleur candidat qui minimise une distance entre le point d'entrée et les au plus $2^{n-2}$ candidats, et détermination des indices de quantification séparés issus de la quantification scalaire séquentielle desdites coordonnées sphériques dudit meilleur candidat;

c) codage séquentiel des indices de quantification séparés dudit meilleur candidat. Cette méthode de quantification met en œuvre une recherche optimale par la prise en compte de deux candidats par coordonnée sphérique pour le codage séquentiel des coordonnées sphériques. Cette recherche est optimisée en termes de complexité et/ou de stockage de données par rapport à une recherche exhaustive globale. Cette méthode apporte une meilleure performance notamment en apportant de faibles erreurs de quantification à un débit donné, comparée à une quantification complètement séparée des coordonnées sphériques sans prise en compte de plus d'un candidat.

Dans un mode de réalisation, le codage séquentiel des indices de quantification séparés comprend la détermination d'un indice de quantification global par addition d'au moins une information de cardinalité à l'indice de quantification d'une coordonnée sphérique.

Un seul indice global est ainsi déterminé et transmis au décodeur pour reconstruire le point d'entrée, ce qui limite les données à transmettre.

Dans un mode de réalisation, la quantification scalaire d'une des n-1 coordonnées sphériques inclut un décalage prédéfini.

Un tel décalage permet d'éviter un alignement sur un même « méridien » des points décodés sur la sphère et permet ainsi d'optimiser la performance de quantification.

Dans un mode particulier de réalisation, la détermination du nombre de niveaux de quantification pour au moins une coordonnée sphérique s'effectue en fonction d'un nombre total de points de la grille sphérique et de la surface d'une zone sphérique de la sphère en dimension n.

Cette approche permet d'améliorer encore la performance de la quantification en termes de stockage de données puisque la détermination du nombre de niveaux et l'indexation qui en découle est définie de façon analytique.

Dans une variante de réalisation, la détermination d'une information de cardinalité s'effectue, pour au moins une coordonnée sphérique, en fonction d'un nombre de points de la grille sphérique, et de la surface d'une zone sphérique de la sphère en dimension n.

Ainsi, il n'est pas nécessaire de stocker les informations de cardinalité pour effectuer l'indexation. Celle-ci s'effectue de façon analytique et directe.

Dans un mode particulier de réalisation, pour au moins une coordonnée sphérique, le nombre de niveaux est forcé à une valeur impaire pour un nombre différent de 1. Ainsi, ce nombre de niveaux impair permet d'avoir par exemple en dimension 3 un niveau de reconstruction en colatitude à $\pi/2$ (ou de façon équivalente un niveau de reconstruction en élévation à 0), ce qui permet de représenter le plan horizontal pour certaines applications audio 3D, comme par exemple des applications avec un contenu ambisonique artificiel dans lequel il est fréquent d'avoir une composante Z nulle.

L'invention vise également un procédé de codage d'un signal audio multicanal utilisant une matrice de rotation représentée par au moins un quaternion unitaire dans lequel le codage d'au moins un quaternion unitaire est effectué selon le procédé de codage décrit précédemment avec une valeur de n=4.

Cette méthode de codage est parfaitement adaptée au codage de ces matrices de rotation et apporte une bonne performance de quantification pour ces matrices.

L'invention vise aussi un procédé de codage d'un signal audio multicanal utilisant des informations de direction d'arrivée de sources audio et dans lequel le codage de ces informations est effectué selon le procédé de codage décrit précédemment avec une valeur de n=3.

Cette méthode de codage est parfaitement adaptée au codage des informations de direction d'arrivée de sources audio dans une représentation 3D et apporte un bon compromis entre performance de quantification et complexité/stockage pour le codage et décodage de ces informations.

L'invention vise également un procédé de codage d'un signal audio utilisant une transformation en sous-bandes fréquentielles dans lequel le codage d'au moins une sous-bande est effectué selon le procédé de codage décrit précédemment avec une valeur de n à la taille de la sous-bande.

L'invention vise également un procédé de décodage d'un point d'entrée sur une sphère de dimension n, par décodage de n-1 coordonnées sphériques de ce point d'entrée, le procédé comportant le décodage séquentiel des coordonnées sphériques, définissant une grille sphérique, à partir d'un indice de quantification global ou de n-1 indices multiplexés, par les opérations suivantes :

- détermination d'un nombre de niveaux de quantification en fonction de la coordonnée sphérique à décoder et le cas échéant des coordonnées sphériques précédemment décodées ;
- détermination des indices séparés issus de la quantification séparée desdites coordonnées sphériques en fonction des nombres de niveaux déterminés puis obtention des coordonnées sphériques correspondantes pour reconstruire un point décodé sur la sphère de dimension n. Cette méthode de décodage permet de retrouver un point sur la sphère correspondant au point d'entrée codé avec une bonne performance, notamment en termes d'erreur de quantification.

Dans un mode de réalisation, la détermination des indices séparés s'effectue à partir d'informations de cardinalité définies pour lesdites coordonnées sphériques.

Ce mode de réalisation s'applique dans le cas où un indice de quantification global est reçu. Dans un mode de réalisation, le décodage d'une des n-1 coordonnées sphériques inclut un décalage prédéfini.

Ce décalage a en effet permis d'optimiser la performance de quantification et optimise de ce fait la performance de décodage.

Dans un mode de réalisation, les informations de cardinalité sont obtenues de façon analytique à partir d'un nombre de points et de la surface d'une zone sphérique de la sphère en dimension n.

Ainsi, il n'est pas nécessaire de stocker les informations de cardinalité, ce qui optimise la mémoire de stockage et permet de retrouver les coordonnées sphériques de façon simple. L'invention vise un dispositif de codage comportant un circuit de traitement pour la mise en œuvre des étapes du procédé de codage tel que décrit précédemment.

L'invention vise aussi un dispositif de décodage comportant un circuit de traitement pour la mise en œuvre des étapes du procédé de décodage tel que décrit précédemment. L'invention se rapporte à un programme informatique comportant des instructions pour la mise en œuvre des procédés de codage ou de décodage tels que décrits précédemment, lorsqu'ils sont exécutés par un processeur.

Enfin l'invention se rapport à un support de stockage, lisible par un processeur, mémorisant un programme informatique comportant des instructions pour l'exécution du procédé de codage ou du procédé de décodage décrits précédemment.

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :

[Fig 1a] illustre sous forme d'organigramme les étapes mises en œuvre dans un procédé de codage selon un mode général de réalisation de l'invention ;

[Fig 1b] illustre sous forme d'organigramme les étapes mises en œuvre dans un procédé de décodage selon un mode général de réalisation de l'invention ;

[Fig 2a] illustre sous forme d'organigramme les étapes mises en œuvre dans un procédé de codage selon un mode de réalisation en dimension 3 de l'invention ;

[Fig 2b] illustre sous forme d'organigramme les étapes mises en œuvre dans un procédé de décodage selon un mode de réalisation en dimension 3 de l'invention ;

[Fig 3a] illustre sous forme d'organigramme les étapes mises en œuvre dans un procédé de codage selon un mode de réalisation en dimension 4 de l'invention ;

[Fig 3b] illustre sous forme d'organigramme les étapes mises en œuvre dans un procédé de décodage selon un mode de réalisation en dimension 4 de l'invention ;

[Fig 4] illustre un mode de réalisation d'un dispositif de codage mettant en œuvre un procédé de codage selon un mode de réalisation en dimension 3 de l'invention ;

[Fig 5] illustre un mode de réalisation d'un dispositif de décodage mettant en œuvre un procédé de décodage selon un mode de réalisation en dimension 3 de l'invention ;

[Fig 6] illustre un mode de réalisation d'un dispositif de codage mettant en œuvre un procédé de codage selon un mode de réalisation en dimension 4 de l'invention ;

[Fig 7] illustre un mode de réalisation d'un dispositif de décodage mettant en œuvre un procédé de décodage selon un mode de réalisation en dimension 4 de l'invention ;

[Fig 8] illustre des exemples de réalisation structurelle d'un dispositif de odage et d'un dispositif de décodage selon un mode de réalisation de l'invention.

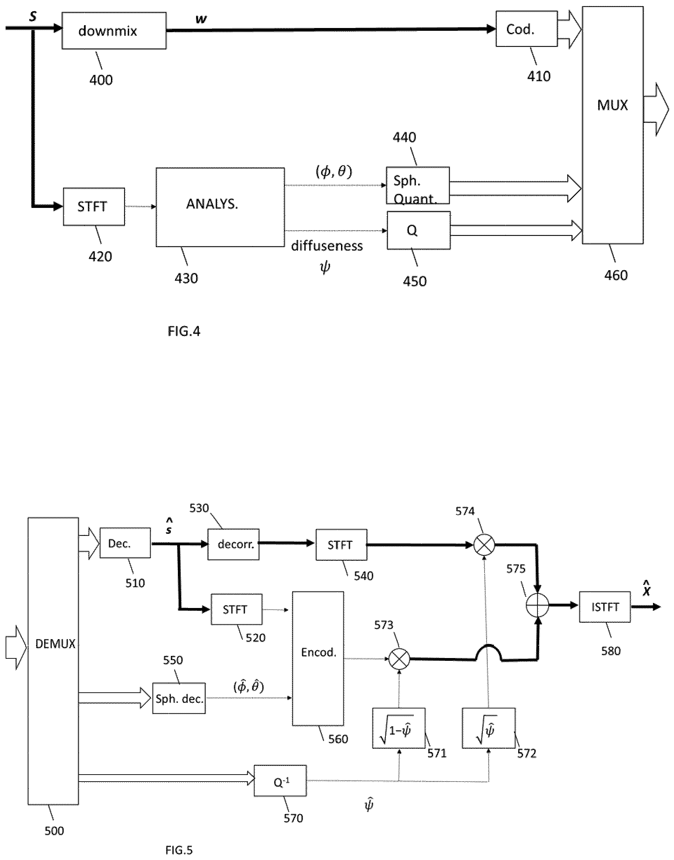

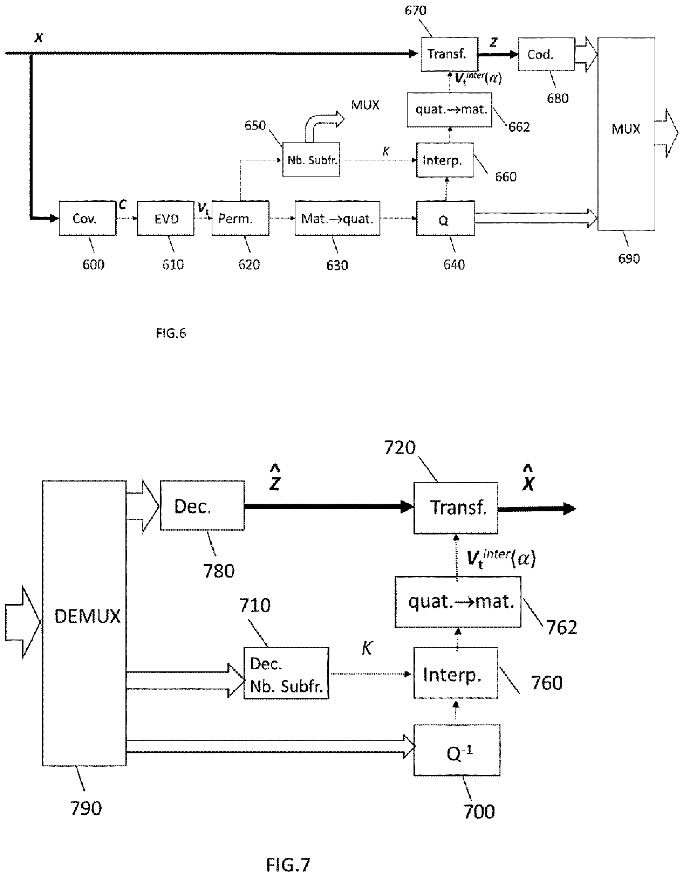

Selon l'invention on quantifie préférentiellement des données sphériques en dimension 3 et 4. Cependant, on traite d'abord également d'un mode de réalisation général en dimension $n \geq 3$. Le cas de la dimension 3 s'applique à titre d'exemple pour le codage et le décodage des directions DoA dans un codage et décodage par exemple de type DiRAC comme décrit ultérieurement en référence aux figures 4 et 5. Le cas de la dimension 4 est utilisé pour la quantification de matrices de dimension 3 et 4 dans le domaine des quaternions (unitaires) et doubles quaternions (unitaires) respectivement, par exemple pour le codage et décodage ambisonique par analyse en composantes principales comme décrit ultérieurement en référence aux figures 6 et 7. Le cas d'une dimension $n > 4$ est appliqué à titre d'exemple de réalisation au codage de sous-bandes dans un codec audio par transformée mono.

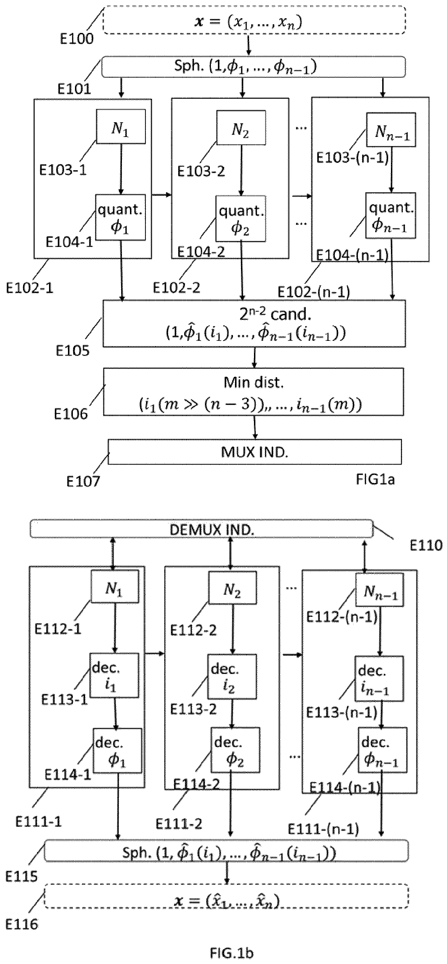

Le procédé de codage pour une dimension n est maintenant décrit en référence à la **figure 1a.**

On considère ici le cas général de données sphériques $x = (x_1, ..., x_n) \in \mathbb{R}^n$. Selon l'invention le codage peut s'appliquer avec une entrée **x** définie avec des coordonnées cartésiennes à l'étape E100 ou directement sous la forme de coordonnées sphériques $(r, \phi_1, ..., \phi_{n-1})$ à l'étape E101. On considère ici sans perte de généralité une définition mathématique à l'étape E101:

$$x_1 = r \cos \phi_1,$$

$$x_2 = r \sin \phi_1 \cos \phi_2$$

$$...$$

$$x_{n-1} = r \sin \phi_1 \sin \phi_2 ... \cos \phi_{n-1}$$

$$x_n = r \sin \phi_1 \sin \phi_2 ... \sin \phi_{n-1}$$

Dans des variantes, d'autres systèmes de coordonnées sphériques seront possibles. Les angles sont ici - sauf mention contraire - définis en radians, dans des variantes une autre unité pourra être utilisée (par exemple les degrés).

Le rayon r est par la suite considéré comme étant unitaire (r = 1) et les coordonnées sphériques seront à prendre au sens des coordonnées angulaires $\phi_1, ..., \phi_{n-1}$. Cependant, dans des variantes il serait possible de coder séparément ce rayon r pour obtenir une quantification de type gain-forme (« gain-shape » en anglais), la forme étant codée selon l'invention et le rayon étant codé à part selon des méthodes classiques qui sortent du cadre de l'invention (par exemple une quantification scalaire suivi d'un codage entropique).

Dans la suite on désignera par « grille » ou « grille sphérique » un dictionnaire de quantification vectorielle sphérique qui discrétise la sphère $\mathbb{S}_{n-1}$. Selon l'invention la grille est définie implicitement par la quantification séquentielle de coordonnées sphériques.

Selon l'invention les données sphériques en entrée du codage sont représentées par une discrétisation quasi-uniforme (ici au sens de l'uniformité de l'aire des régions de décisions et/ou de la répartition des points) de la sphère $\mathbb{S}_{n-1}$. La grille est définie par une quantification scalaire séquentielle des coordonnées $\phi_1, ..., \phi_{n-1}$.

Cette contrainte permet de diviser les étapes de codage selon les coordonnées sphériques, en codant d'abord $\phi_1$ à l'étape E102-1, puis $\phi_3$ à l'étape E102-2, ... , et enfin $\phi_{n-1}$ à l'étape E102-(n-1). Cette approche séquentielle est selon l'invention équivalente à une recherche exhaustive du plus proche voisin dans la grille sphérique complète, car les étapes E102-1 à E102-(n-2) donnent deux candidats (les deux points les plus proches de $\phi_k$), ce qui revient à définir implicitement un arbre binaire de recherche avec $2^{n-2}$ candidats (feuilles) à l'issue de l'étape E102-(n-1). On peut vérifier que cet arbre binaire permet une recherche optimale.

Le principe de chaque étape E102-k est le même, en prenant en compte le fait que les angles $\phi_1, ..., \phi_{n-2}$ ont un support de largeur $\pi$ tandis que $\phi_{n-1}$ a un support de largeur $2\pi$.

Une quantification scalaire uniforme avec le même pas de chaque angle $\phi_k$, $k = 1, ..., n - 1$, donnerait une grille de type « lat-long » dont la distribution des points n'est pas uniforme - par exemple dans le cas 3D on aurait des points de plus en plus rapprochés à proximité des pôles avec l'aberration où l'azimut serait codé au niveau des pôles Nord et Sud si le codage de l'élévation (ou la colatitude) inclut des niveaux reconstructions représentent les pôles. Ainsi selon l'invention on utilise plutôt une grille avec un nombre de niveaux de quantification scalaire $N_k$ dépendant de la coordonnée sphérique $\phi_k$ et des valeurs codées $\hat{\phi}_1, \hat{\phi}_2,...$ des coordonnées précédentes.

Selon les variantes, le nombre $N_1 \geq 1$ de niveaux de quantification scalaire pour la première coordonnée sphérique est prédéterminé selon différentes approches à l'étape E103-1, soit directement en fixant une valeur entière $N_1$ prédéterminée, soit par le biais d'une résolution angulaire a. En général on fixera les valeurs de $N_k$ (dont la valeur de $N_1$) pour vérifier une contrainte de débit alloué à ne pas dépasser pour la quantification vectorielle sphérique. Dans le mode de réalisation privilégié, on préférera une quantification scalaire dont le dictionnaire inclut les valeurs $\phi_1 = 0$, $\pi/2$ et $\pi$ comme niveaux de reconstruction, ce qui donne un nombre $N_1$ impair, pour inclure les pôles ($\phi_1 = 0$, $\pi$) et l' « équateur » ($\phi_1 = \pi/2$) parmi les valeurs codées. Les nombres $N_2, ..., N_{n-1}$ se déduisent de telle sorte que la grille soit quasi-uniforme. Ainsi on pourra prendre par exemple :

$$N_1 = 2 \left\lceil \frac{90}{\alpha} \right\rceil + 1$$

où $\alpha$ est donné en degrés (par exemple $a = 2$ degrés). Dans des variantes, d'autres méthodes de détermination de la valeur entière $N_1$ seront possibles.

Le dictionnaire de quantification scalaire pour la coordonnée $\phi_1$ est de façon préférentielle donné par l'ensemble des valeurs de reconstruction (ou mots de code):

$$\hat{\phi}_1(i) = \frac{i}{N_1 - 1} \pi, i = 0, ..., N_1 - 1$$

ce qui correspond à une quantification scalaire uniforme sur $[0, \pi]$ à $N_1$ niveaux. Dans des variantes, d'autres dictionnaires de quantification scalaire (uniforme ou non-uniforme) seront possibles, y compris des dictionnaires qui n'incluent pas les pôles ($\phi_1 = 0$ et $\pi$). Le principe de détermination de $N_k$, $k > 1$ s'appuie sur la surface élémentaire (infinitésimale) sur la sphère $\mathbb{S}_{n-1}$ qui est donnée par

$$dA = r^{n-1} \sin^{n-2} \phi_1 \; \sin^{n-3} \phi_3 \, ... \sin \phi_{n-2} \, d\phi_1 \, d\phi_2 \, ... \, d\phi_{n-2} \, d\phi_{n-1}$$

ce qui peut se réécrire, en supposant r = 1, comme :

$$dA = d\phi_1 \, (\sin \phi_1 d\phi_2) \, (\sin \phi_1 \sin \phi_2 \, d\phi_3) \, ... \, (\sin \phi_1 \sin \phi_2 \, ... \sin \phi_{n-2} \, d\phi_{n-1})$$

Ainsi on aura par exemple $N_k$ donné sous la forme générale à l'étape E103-2, ..., E103-(n-1):

$$N_k(i_1, i_2, .., i_{k-1}) = \max\left(1, \left\lceil sin\,\hat{\phi}_1(i_1)\,sin\,\hat{\phi}_2\,(i_1, i_2) \ldots sin\,\hat{\phi}_{k-1}\,(i_1, \ldots, i_{k-1}))\,\frac{180}{\alpha}\right\rceil\right),\ k = 2, \ldots, n - 2$$

$$N_{n-1}(i_1, i_2, .., i_{n-2}) = \max\left(1, \left\lceil \sin\,\hat{\phi}_1(i_1)\,\sin\,\hat{\phi}_2\,(i_1, i_2) \ldots \sin\,\hat{\phi}_{n-2}\,(i_1, \ldots, i_{n-2}))\,\frac{360}{\alpha}\right\rceil\right)$$

où les indices $i_k$ sont les indices de quantification scalaire de la coordonnée $\phi_k$ obtenus à l'étape E104-k et $\{\hat{\phi}_k(i_k), i_k = 0, \ldots, N_k(i_1, i_2, \ldots i_{k-1}) -1\}$ est le dictionnaire pré-défini de quantification scalaire qui est en fonction des coordonnées précédemment codées et représentées par les indices respectifs $i_1, i_2, \ldots, i_{k-1}$.

Le dictionnaire de quantification scalaire pour la coordonnée $\phi_k$, $k = 1, \ldots, n - 1$, est de façon préférentielle donné par :

$$\hat{\phi}_k(i_1, i_2, .., i_{k-1}, i) = \frac{i}{N_k(i_1, i_2, .., i_{k-1}) - 1}\,\pi, i = 0, \ldots, N_k(i_1, i_2, .., i_{k-1}) - 1$$

et

$$\hat{\phi}_{n-1}(i_1, i_2, .., i_{n-2}, i) = \frac{i}{N_{n-1}(i_1, i_2, .., i_{n-2})}\,2\pi, i = 0, \ldots, N_{n-1}(i_1, i_2, .., i_{n-2}) - 1$$

ce qui correspond à une quantification scalaire uniforme sur respectivement $N_k$ niveaux sur $[0,\pi]$ et $N_{n-1}$ niveaux sur $[0,2\pi]$. Dans le cas de $\hat{\phi}_{n-1}(i)$ on notera que les bornes redondantes 0 et $2\pi$ ne sont pas répétées de la nature circulaire de cette coordonnées (autrement dit, à cause du modulo $2\pi$). Dans des variantes, d'autres dictionnaires de quantification scalaire seront possibles.

Le nombre total de point dans la grille discrétisant la sphère $\mathbb{S}_{n-1}$ est donné par :

$$N_{tot} = \sum_{i_1=0}^{N_1-1} \sum_{i_2=0}^{N_2(i_1)-1} \ldots \sum_{i_{n-2}=0}^{N_{n-2}(i_1, i_2, \ldots, i_{n-2})-1} N_{n-1}(i_1, i_2, .., i_{n-2})$$

La grille sphérique est donc définie comme le dictionnaire de quantification vectorielle sphérique suivant :

$$\left\{\left(1, \hat{\phi}_1(i_1),\ \ldots, \hat{\phi}_{n-1}(i_{n-1})\right) | i_1 = 0, \ldots, N_1 - 1; \ldots; i_{n-1} = 0, \ldots, N_{n-1}(i_1, i_2, .., i_{n-1}) - 1\right\}$$

La quantification des n-1 coordonnées sphériques se fait de façon séquentielle de l'étape E104-1 à l'étape E104-(n-1). Etant données la valeur de $\phi_k$ issue de l'étape E101 et la valeur $N_k$ issue de l'étape E103-k, l'étape E104-k consiste à quantifier la coordonnée $\phi_k$ avec un dictionnaire pré-déterminé à $N_k(i_1, i_2, .., i_{k-1})$ niveaux pour retenir deux indices de quantification correspondant aux deux candidats les plus proches. Ainsi, à l'étape E104-1 on retient deux indices $i_1(0)$ et $i_1(1)$ correspondant aux deux points du dictionnaire $\{\hat{\phi}_1(i_1), i_1 = 0, \ldots, N_1 - 1\}$ les plus proches de $\phi_1$, tels que :

$$i_1(0) = \arg\min_{i=0,\ldots,N_1-1}(\phi_1 - \hat{\phi}_1(i))^2$$

$$i_1(1) = \arg\min_{\substack{i=0,\ldots,N_1-1 \\ i \neq i_1(0)}}(\phi_1 - \hat{\phi}_1(i))^2$$

On note que les indices $i_1(0)$ et $i_1(1)$ peuvent être intervertis sans que cela change le résultat optimal à l'issue du codage séquentiel.

A l'étape E104-2 on retient deux indices $i_2(2i_1(j))$ et $i_3(2i_1(j) + 1)$ correspondant aux deux points du dictionnaire $\{\hat{\phi}_2(l), l = 0, ..., N_2(i_1(j)) -1\}$ les plus proche de $\phi_2$ pour chacun des deux candidats retenus $i_1(0)$ et $i_1(1)$ à l'étape E-104-1, ce qui donne 4 indices $i_2(0)$, $i_2(1)$ et $i_3(2)$, $i_2(3)$, de sorte que :

$$i_2(0) = \arg \min_{i=0,...,N_2(i1)-1} (\phi_2 - \hat{\phi}_2(i_1(0), i))^2$$

$$i_2(1) = \arg \min_{\substack{i=0,...,N_2(i1)-1 \\ j \neq i_2(0)}} (\phi_2 - \hat{\phi}_2(i_1(0), i))^2$$

et

$$i_2(2) = \arg \min_{i=0,...,N_2(i2)-1} (\phi_2 - \hat{\phi}_2(i_1(1), i))^2$$

$$i_2(3) = \arg \min_{\substack{i=0,...,N_2(i2)-1 \\ j \neq i_2(2)}} (\phi_2 - \hat{\phi}_2(i_1(1), i))^2$$

On note que les indices $i_2(0)$ à $i_1(3)$ peuvent être permutés sans que cela change le résultat du candidat optimal à l'issue du codage.

Enfin à l'étape E104-(n-1), on ne retient que le plus proche voisin pour pour coder $\phi_{n-1}$, et cette étape est répétée pour les $2^{n-2}$ combinaisons d'indices issues des n-2 coordonnées précédentes.

On obtient ainsi un arbre binaire implicite avec le double de « candidats » à chaque étape jusqu'à l'étape n-2, pour arriver à $2^{n-2}$ combinaisons possibles de valeurs codées et donc autant de combinaisons d'indices à l'étape E104-(n-1).

On présente ici cet arbre par le biais d'un indice de combinaison m = 0,..., $2^{n-2}$ - 1 au niveau des feuilles de l'arbre binaire, à l'issue de l'étape E104-(n-1).

Pour un m donné, les indices séparés de quantification correspondants sont:

$$i_1\big(m \gg (n - 3)\big), i_2(m \gg (n - 4)), ..., i_{n-1}(m)$$

où l'opérateur $b \gg n$ correspond à un décalage binaire de la valeur entière $b$ (en représentation binaire) par $n$ bits vers la droite - autrement dit, $b \gg n$ donne le quotient de la division entière de $b$ par $2^n$. Ainsi $m \gg (n - 3)$ ne prend que deux valeurs 0 ou 1 pour $i_1$, $m \gg (n - 4)$ prend 4 valeurs possibles (de 0 à 3) pour $i_2$, etc.

On obtient donc à l'étape E105 un nombre de $2^{n-2}$ candidats $(1, \hat{\phi}_1(i_1(m \gg (n - 3))), ..., \hat{\phi}_{n-1}(i_{n-1}(m))$ qui peuvent aussi être notés de façon abrégée sous la forme $(1, \hat{\phi}_1(m), ..., \hat{\phi}_{n-1}(m))$ avec m = 0, ..., $2^{n-2}$ - 1. L'étape E106 sélectionne le candidat le plus proche du point d'entrée, soit dans le domaine des coordonnées cartésiennes, en ayant converti chaque candidat $(1, \hat{\phi}_1(i_1(m \gg (n - 3))), ..., \hat{\phi}_{n-1}(i_{n-1}(m))$ en cartésien et en minimisant une distance avec $\boldsymbol{x} = (x_1, ...,x_n)$, soit dans le domaine des coordonnées sphériques avec une distance prédéterminée qui est de façon préférentielle la distance angulaire.

Dans le cas des coordonnées cartésiennes, l'étape E106 convertit les coordonnées sphériques en $(1, \hat{\phi}_1(m), ..., \hat{\phi}_{n-1}(m))$ en coordonnées cartésiennes $\hat{\boldsymbol{x}}(m) = (\hat{x}_1(m), ..., \hat{x}_n(m))$ et on sélectionne la combinaison optimale d'indices séparés comme :

$$m^* = \hat{\boldsymbol{x}} = \arg \min_{m=0,...,2^{n-2}-1} \|\boldsymbol{x} - \hat{\boldsymbol{x}}(m)\|^2 = \arg \min_{m=0,...,2^{n-2}-1} \sum_{l=1}^{n}(x_l - \hat{x}_l(m))^2,$$

ici pour un critère d'erreur quadratique entre le point d'entrée $\boldsymbol{x} = (x_1,...,x_n)$ et chaque candidat $\hat{\boldsymbol{x}}(m) = (\hat{x}_1(m), ..., \hat{x}_n(m))$. Dans des variantes d'autres critères de distance que l'erreur quadratique pourront être utilisés. On pourra aussi de façon équivalente à une erreur quadratique maximiser le produit scalaire :

$$m^* = \arg \max_{m=0,\dots,2^{n-2}-1} \sum_{l=1}^{n} x_l \cdot \hat{x}_l(m)$$

car $\|x - \hat{x}(m)\|^2 = \|x\|^2 + \|(m)\|^2 - 2 < x, \hat{x}(m) > = 2 - 2 < x, \hat{x}(m) >$, où $<.,.>$ est le produit scalaire, les points $x$ et $\hat{x}(m)$ étant sur une sphère unité.

Dans le cas des coordonnées sphériques, on pourra utiliser la distance angulaire qui est donnée comme l'arccosinus du produit scalaire entre $x = (x_1,\dots,x_n)$ et $(\hat{x}_1(m), \dots, \hat{x}_n(m))$. Comme l'arccosinus ne modifie pas l'optimum, on peut utiliser une distance angulaire modifiée qui se réduit simplement au produit scalaire exprimé dans le domaine des coordonnées sphériques. Pour la dimension $n = 3$ cette distance est connue comme étant - ici pour la colatitude :

$$dist_{ang}\left((\phi_1,\phi_2),(\hat{\phi}_1(m),\hat{\phi}_2(m))\right) = \arccos\left(\cos\phi_1 \cos\hat{\phi}_1(m) + \sin\phi_1 \sin\hat{\phi}_1(m)\cos(\phi_2 - \hat{\phi}_2(m))\right),$$

ce qui s'adapte facilement pour l'élévation:
Ce critère donne en E106 :

$$m^* = \arg \max_{m=0,\dots,2^{n-2}-1} \cos\phi_1 \cos\hat{\phi}_1(m) + \sin\phi_1 \sin\hat{\phi}_1(m)\cos(\phi_2 - \hat{\phi}_2(m))$$

Cet exemple de distance angulaire simplifiée en produit scalaire pour $n = 3$ se généralise aux dimensions supérieures.

On trouve ainsi l'indice $m^*$ du point codé optimal qui correspond à la séquence correspondante d'indices de quantification séparés $(i_1(m^* \gg (n - 3)), \dots, i_{n-1}(m^*))$ associés au codage séquentiel de chaque coordonnée sphérique.

Cette combinaison d'indices $i_1, \dots, i_{n-1}$ (sous forme abrégée) est convertie en un train binaire à l'étape E107, soit sous la forme d'un indice global et unique *index*, soit sous la forme d'un codage et/ou multiplexage des indices de quantification séparés.

Dans un premier mode de réalisation, selon l'invention, cet indice s'obtient de façon générale sous la forme :

$$index = offset_1(i_1) + offset_2(i_1,i_2) + \cdots + offset_{n-2}(i_1,i_2,\dots,i_{n-2}) + i_{n-1}$$

où $offset_k(.)$ représente une information de cardinalité pour la k-ième coordonnée, sous la forme d'une somme cumulative de cardinalité correspondant à la somme cumulative - à partir du « pôle Nord » - du nombre de points de la grille jusqu'à la « zone sphérique » défini par la valeur codée de la k-ième coordonnée.

Ainsi l'indice global *index* est obtenu par codage séquentiel des indices de quantification séparés $i_1, i_2, \dots, i_{n-1}$ du meilleur candidat.

Dans des variantes, le dernier terme de la somme ($i_{n-1}$) pourra être permuté, pour avoir :

$$index = offset_1(i_1) + offset_2(i_1,i_2) + \cdots + offset_{n-2}(i_1,i_2,\dots,i_{n-2}) + p(i_{n-1})$$

où $p(.)$ est une permutation des entiers dans $\{0,1,\dots,N_{n-1}(i_1,i_2,\dots,i_{n-2}) - 1\}$. Sans perte de généralité, on discute dans la suite du cas où $p(i) = i$.

Par définition, $offset_1(0) = 0$ et

$$offset_1(i+1) = \sum_{i_1=0}^{i} \sum_{i_2=0}^{N_2(i_1)-1} \dots \sum_{i_{n-2}=0}^{N_{n-2}(i_1,i_2,\dots,i_{n-2})-1} N_{n-1}(i_1,i_2,\dots,i_{n-2})$$

pour $i = 0, \dots, N_1 - 1$. On peut étendre les informations de cardinalité avec la convention $offset_1(N_1) = N_{tot}$, ce qui est utile pour le décodage.

De même, $offset_2(i_1, 0) = 0$ et

$$offset_2(i_1, i+1) = \sum_{i_2=0}^{i} \cdots \sum_{i_{n-2}=0}^{N_{n-2}(i_1,i_2,..,i_{n-2})-1} N_{n-1}(i_1,i_2,..,i_{n-2})$$

Cette définition se généralise facilement pour les autres valeurs $offset_k(.)$.

Dans des variantes, d'autres méthodes seront possibles, notamment en changeant le point de départ (pôle Nord, pôle Sud, équateur) et/ou l'ordre des indices pour chaque sommation sur $i_1$, $i_2$,... des sommes cumulatives de cardinalité $offset_k(.)$.

Dans un deuxième de réalisation, selon l'invention, le nombre de niveaux $N_k(i_1, i_2,.., i_{k-1})$, $k = 2,..,n-1$ à l'étape E103-k et les informations de cardinalité $offset_k(i_1,i_2,..,i_k)$,$k = 1, ...,n-2$ à l'étape E107 sont obtenus de façon analytique à partir de la surface de zones sphériques de la sphère $\mathbb{S}_{n-1}$ et d'un nombre total de points, qui correspond par exemple au nombre total $N_{tot}$ de la grille sphérique pour la première coordonnée $\phi_1$ ; des exemples de réalisation de cette approche analytique sont détaillés ci-après pour les dimensions $n = 3$ et $4$. Ces exemples pourront être généralisés à la dimension n. Là encore, l'indice global $index$ est obtenu par codage séquentiel des indices de quantification séparés $i_1$, $i_2$, ..., $i_{n-1}$ du meilleur candidat.

Dans un troisième mode de réalisation, l'étape E107 consiste à coder séquentiellement sous forme binaire les n-1 indices $i_1(m^* » (n - 3))$, ..., $i_{n-1}(m^*)$ correspondant au meilleur candidat. Ce codage est séquentiel car le nombre de valeurs possibles ($N_k$) pour chaque indice dépend des indices précédents. Ce troisième mode de réalisation est particulièrement intéressant pour les dimensions élevées car l'utilisation de cardinalité de type $offset_k(.)$ est pertinente en dimension 3, plus compliquée en dimension 4 et elle devient encore plus complexe à mettre en œuvre en dimension plus élevée que 4.

Dans une première variante, ce codage séquentiel utilisera un codage binaire à débit fixe pour les indices $i_1$, ..., $i_{n-1}$ sur respectivement $\lceil log_2 N_1 \rceil$ bits, ..., $\lceil log_2 N_{n-1}(i_1, i_2,.., i_{n-2}) \rceil$ bits où $\lceil . \rceil$ désigne l'arrondi à l'entier supérieur, avec la convention $\lceil 0 \rceil = 0$. Le multiplexage se fait donc de façon séquentielle pour former un train binaire de longueur totale variable $\lceil log_2 N_1 \rceil + \cdots + ..., \lceil log_2 N_{n-1}(i_1, i_2,..,i_{n-2}) \rceil$ bits, en multiplexant d'abord $i_1$ puis $i_2$ et ainsi de suite jusqu'à $i_{n-1}$. On notera que lorsque $N_k = 1$ le codage prend 0 bit pour l'indice $i_k$.

Dans une seconde variante, les indices seront codés séquentiellement avec un codage entropique de type Huffman ou codage arithmétique. On pourra utiliser une estimation de la probabilité de chaque valeur (symbole) $i_k$ comprise entre 0 et $N_k - 1$, où $N_k$ en notation abrégée désigne $N_k(i_1, i_2,.., i_{k-1})$, en déterminant la surface partielle de la sphère dans la « tranche sphérique » associée à $i_k$ pour la coordonnée $\phi_k$ (le cas échéant conditionnellement aux indices $i_1$, $i_2$ ..., $i_{k-1}$), cette aire étant normalisée par l'aire totale de la sphère pour la coordonnée $\phi_1$ et par totale de la partie de sphère induite par les indices $i_1$, $i_2$ ..., $i_{k-1}$ pour les coordonnées $\phi_k$, $k = 1, ...,n-2$. On entend ici par « tranche sphérique » la zone sphérique induite pour la coordonnée $\phi_k$ et délimitée par les seuils de décision correspondant au mot de code d'indice $i_k$.

En général pour la coordonnée $\phi_{n-1}$ on pourra simplement utiliser un codage binaire à longueur fixe sur $\lceil log_2 N_{n-1}(i_1, i_2,..,i_{n-2}) \rceil$ bits en supposant une distribution équiprobable. Dans des variantes d'autres estimations des probabilités seront possibles si la distribution de la source sur la sphère en dimension 3 est supposée non uniforme.

Le procédé de décodage correspondant, pour une dimension n, est décrit en référence à la **figure 1b.**

Etant donné l'indice global à l'étape E110, on effectue un décodage séquentiel des coordonnées sphériques de l'étape E111-1 à l'étape E111-(n-1) selon une approche similaire au codage.

A l'étape E112-1, on détermine comme à l'étape de codage E103-1 un nombre de niveaux de quantification scalaire $N_1$. On détermine l'indice $i_1$ à l'étape E113-1 pour décoder la valeur $\hat{\phi}_1(i_1)$ à l'étape E114-1.

Dans le premier mode de réalisation, la détermination de $i_1$ s'appuie sur la comparaison de la valeur $index$ à un ensemble de valeurs entières $offset_1(i_1)$ où $offset_1(i_1)$ correspond à une somme cumulative de cardinalité pour la première coordonnée sphérique, comme défini précédemment pour le codage en référence à la figure 1a.

Le mode de réalisation le plus simple pour décoder $i_1$ consiste en une recherche itérative.

Pour un indice à décoder $0 \leq index < N_{tot}$, on décode $i_1$ en commençant par $i_1 = 0$ et en incrémentant successivement $i_1 \leftarrow i_1 + 1$ tant que $offset_1(i_1 + 1) > index$. En effet, la valeur de $offset_1(i_1)$ correspond à la somme cumulative des cardinalités (nombre de points) de chacune des « tranches horizontales » de la sphère en allant de la première tranche d'indice 0 à la tranche courante d'indice $i_1$ (exclusivement).

Dans un deuxième mode de réalisation, la détermination de $i_1$ s'effectue de façon analytique. La détermination exacte dépend de la dimension n. On décrit plus loin des exemples de réalisation pour la dimension 3 et 4.

On retranche à l'étape E113-1 la valeur de $offset_1(i_1)$ à $index$ :

$index \leftarrow index - offset_1(i_1)$

A l'étape E112-2, on détermine comme à l'étape E103-2 un nombre de niveaux de quantification scalaire $N_2(i_1)$, puis on détermine l'indice $i_2$ à l'étape E113-2 en comparant successivement la valeur $index$ (mise à jour à l'étape E113-1)

à $offset_2(i_1,i_2)$ correspondant à une somme cumulative de cardinalité pour la deuxième coordonnée sphérique, par incrémentation successive de la valeur de $i_2$ tant que $offset_2(i_1,i_2 + 1) > index$ dans le premier mode de réalisation ou de façon analytique dans le deuxième mode de réalisation. On obtient la valeur $\hat{\phi}_2(i_2)$ à l'étape E114-2. On retranche à l'étape E113-2 la valeur de $offset_2(i_1,i_2)$ à $index$ :

$index \leftarrow index - offset_2(i_1,i_2)$

Le décodage procède ainsi jusqu'à la dernière coordonnée pour obtenir l'indice $i_{n-1}$ de quantification correspondant à la coordonnée $\phi_{n-1}$ par soustraction de la valeur mise à jour de $index$ par $offset_{n-1}(i_1,i_2,..,i_{n-2})$, et pour décoder la valeur $\hat{\phi}_{n-1}(i_{n-1})$ à l'étape E114-(n-1).

On obtient ainsi le point décodé à l'étape E115 comme $(1,\hat{\phi}_1(i_1), ...,\hat{\phi}_{n-1}(i_{n-1}))$. ou en donnée cartésienne en E116, le point $\hat{x} = (\hat{x}_1, ..., \hat{x}_n)$.

Dans des variantes, il sera possible de réduire la complexité maximale du décodage des indices $i_1$, $i_2$... par exemple avec une recherche par dichotomie en commençant par le milieu de la table $offset_k(.)$ puis en réduisant de moitié l'intervalle de recherche vers la gauche ou à droite en fonction du résultat de comparaison - le résultat est identique mais la complexité maximale de calcul est réduite avec environ $\log_2 N_1$ comparaisons au lieu de $N_1$ comparaisons.

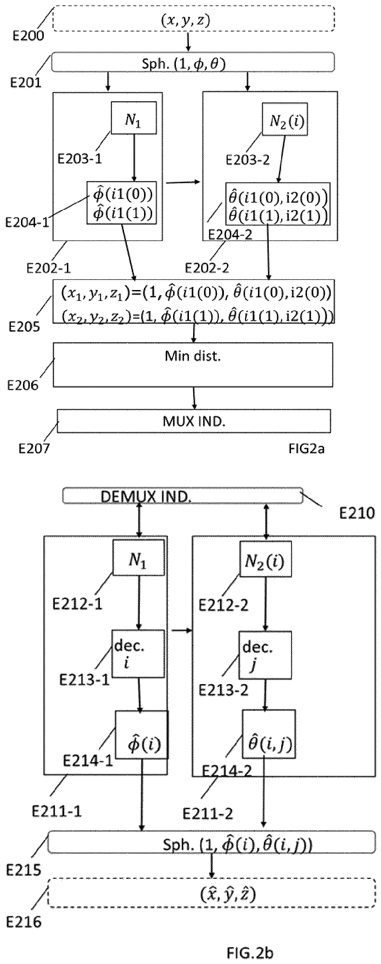

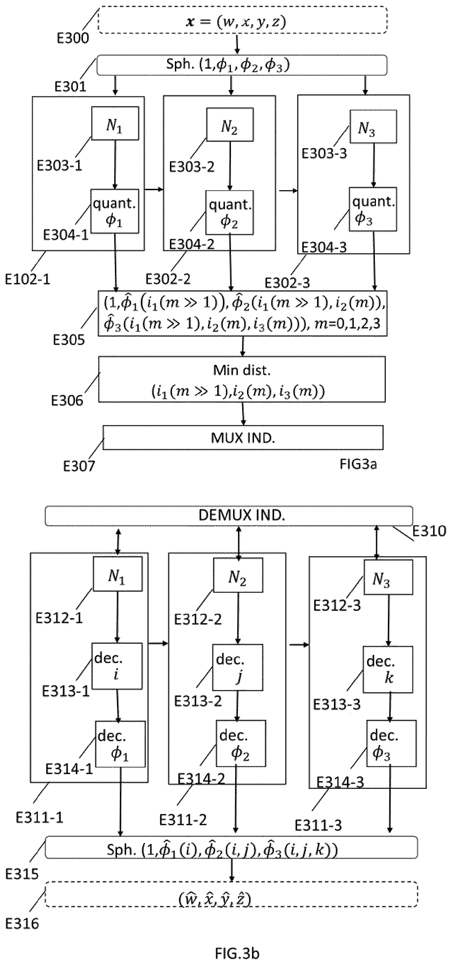

Dans un deuxième mode de réalisation, le nombre de points $N_k(i_1,i_2,..., i_{k-1})$, $k = 2,..., n - 1$ à l'étape E112-k et les informations de cardinalité $offset_k(i_1, i_2,..,i_k)$, $k = 1, ..., n - 2$ à l'étape E113-k sont obtenus de façon analytique à partir d'un nombre de points $N_{tot}$ et de la surface d'une zone sphérique de la sphère en dimension n. Des exemples de réalisation sont détaillés ci-après pour les dimensions $n = 3$ et 4. Les valeurs $offset_k(.)$ seront déterminées de façon analytique - sans être stockées - en déterminant la surface relative de zones sphériques comme détaillé en référence aux figures 2 et 3.

Dans un troisième mode de réalisation, l'étape E110 consiste à démultiplexer et décoder séquentiellement les n-1 indices séparés de quantification scalaire $i_1(m^* » (n - 3))$, ..., $i_{n-1}(m^*)$. Ce décodage est séquentiel car le nombre de valeurs possibles $(N_k)$ pour chaque indice dépend des indices précédents. Dans une première variante, ce démultiplexage et décodage séquentiel utilisera un décodage binaire à débit fixe pour l'indice $i_1$, ..., $i_{n-1}$ sur respectivement $\lceil \log_2 N_1 \rceil$ bits, ..., $\lceil \log_2 N_{n-1} (i_1, i_2, ... ,i_{n-2}) \rceil$ bits où $\lceil . \rceil$ désigne l'arrondi à l'entier supérieur, avec la convention $\lceil 0 \rceil = 0$. Le démultiplexage se fait donc de façon séquentielle pour lire un train binaire de longueur totale variable $\lceil \log_2 N_1 \rceil + \cdots + \lceil \log_2 N_{n-1}(i_1, i_2,..,i_{n-2}) \rceil$ bits. Le démultiplexage est séquentiel car on démultiplexe d'abord $i_1$ ce qui permet de déterminer $N_2(i_1)$, cette information est donnée au démultiplexage pour pouvoir démultiplexer $i_2$, etc.

Dans une seconde variante, les indices seront démultiplexés et décodés séquentiellement avec un décodage entropique de type Huffman ou décodage arithmétique. On pourra utiliser une estimation de la probabilité de chaque valeur (symbole) $i_k$ comprise entre 0 et $N_k - 1$ (en notation abrégée) en déterminant la surface partielle de la sphère dans la tranche associée à $i_k$ pour la coordonnée $\phi_k$ (le cas échéant conditionnellement aux indices $i_1$, $i_2$ ..., $i_{k-1}$), cette aire étant normalisée par totale de la sphère pour la coordonnée $\phi_1$ et par totale de la partie de sphère induite par les indices $i_1$, $i_2$ ..., $i_{k-1}$ pour les coordonnées $\phi_k$, $k = 1,..., n - 2$.

En général pour la coordonnée $\phi_{n-1}$ on pourra simplement démultiplexer un code à longueur fixe sur $\lceil \log_2 N_{n-1}(i_1, i_2,.., i_{n-2}) \rceil$ bits en supposant une distribution équiprobable.

Dans des variantes d'autres estimations des probabilités seront possibles si la distribution de la source sur la sphère en dimension 3 est supposée non uniforme.

Les **figures 2a** et **2b** sont maintenant décrites pour illustrer, dans un premier temps, le cas de la quantification 3D, où $n = 3$.

Sans perte de généralité, on prend ici la définition des coordonnées sphériques en 3D selon la convention physique qui est souvent utilisée dans le domaine de l'acoustique et de l'audio 3D. On omet le rayon qui est ici fixé à 1 en ne gardant que l'azimut et la colatitude (ou l'élévation dans des variantes) dans le cas où on code une direction de sources (ou DoA) comme dans un schéma de type DiRAC.

Dans des variantes et pour certaines applications (ex : quantification d'une sous-bande en codage par transformée), il sera possible de coder un rayon séparément (correspondant à un niveau d'amplitude moyenne par sous-bande par exemple).

La **figure 2a** décrit un procédé de codage d'un point d'entrée sur une sphère de dimension 3. Les composantes $(x,y,z)$ d'un vecteur cartésien 3D (point d'entrée de l'étape E200) sont mises sous forme de coordonnées sphériques $(r, \phi, \theta)$ en E201. A cette étape E201, on effectue de façon optionnelle une conversion des coordonnées sphériques, par exemple pour convertir une élévation et un azimut en degrés vers une colatitude et un azimut en radians.

Dans le mode de réalisation privilégié, les angles $\phi$, $\theta$ correspondent respectivement à la colatitude et l'azimut, ce qui ne correspond pas aux angles $\phi_1$ et $\phi_2$ définis en référence à la figure 1 pour le cas de la dimension $n = 3$, car dans cette dimension l'interprétation physique des pôles Nord et Sud ($\phi = 0$ et $\pi$ respectivement) est importante.

Par la suite, le point 3D pourra être noté indifféremment $(x,y,z)$, $(r, \phi, \theta)$ ou $(\phi,\theta)$ quand le point est sur la sphère unité $(r = 1)$.

Sans perte de généralité les angles à coder sont définis en radians - cependant le paramètre de résolution $\alpha$ utilisé dans certaines variantes est lui donné en degrés pour faciliter son interprétation. Dans des variantes, les différents modes de réalisation pourront utiliser une autre unité, par exemple les degrés, pour les angles à coder. Dans des variantes, la colatitude (définie à partir de l'axe Oz) pourra être remplacée par une élévation (définie à partir du plan horizontal 0xy), et d'autres systèmes de coordonnées sphériques équivalents (obtenus par exemple par permutation ou inversion de coordonnées cartésiennes) pourront être utilisés selon l'invention - il suffira d'appliquer les conversions nécessaires dans la définition des dictionnaires de quantification scalaire, le nombre de niveaux, etc. Le codage et le décodage selon l'invention s'applique à toutes les définitions de coordonnées sphériques, on peut ainsi remplacer $\phi$, $\theta$ par d'autres coordonnées sphériques, en adaptant la conversion entre coordonnées cartésiennes et coordonnées sphériques.

Selon l'invention les données sphériques d'entrée sur la sphère $\mathbb{S}_2$ sont représentées par une discrétisation quasi-uniforme (ici au sens de l'uniformité de des régions de décisions et de la répartition des points) de la sphère $\mathbb{S}_2$ . La grille (ou dictionnaire de quantification vectorielle sphérique) est ainsi définie par une quantification scalaire séquentielle des coordonnées sphériques $\phi$, $\theta$, dans le sens où on discrétise une première coordonnée $\phi$ par quantification scalaire, puis une seconde coordonnée $\theta$ de façon conditionnelle, en fonction de la valeur codée de la première coordonnée.

Sans perte de généralité, les angles $\phi$, $\theta$ seront définis en radians. Dans des variantes une autre unité que les radians, par exemple les degrés, pourra être utilisée.

Plusieurs types et variantes des grilles sphériques sont définis selon l'invention. Elles ont toute en commun le fait de discrétiser séquentiellement la colatitude puis l'azimut par quantification scalaire, avec une discrétisation uniforme de l'azimut selon un nombre de niveaux dépendant de la valeur codée de la colatitude.

On code séquentiellement les coordonnées $\phi$ puis $\theta$, avec un dictionnaire $\{\hat{\phi}(i),\, i = 0,..., N_1 - 1\}$ de quantification scalaire pré-déterminé avec $N_1$ niveaux pour $\phi$ et un ensemble de dictionnaires $\{\hat{\theta}(i,j),\, j = 0, ..., N_2(i) - 1\}$ de quantification scalaire uniforme pré-déterminés avec $N_2(i)$ niveaux pour $\theta$ en fonction de l'indice $i$ de la colatitude codée. On peut donc voir chacune des variantes des grilles 3D selon l'invention comme un ensemble de « zones sphérique » ou « tranches horizontales » discrétisées induites de la quantification de la colatitude (les limites de chaque tranches sont données par les seuils de décision de la quantification de la colatitude, hors pôles), ces tranches étant ensuite elles-mêmes divisées en « régions » équiréparties en azimut avec un nombre de « régions » dépendant de la tranche en colatitude. Le nombre total de points de la sphère discrétisée selon les différents nombres de niveaux déterminés, encore appelée nombre total de point dans la grille 3D est dans tous les cas :

$$N_{tot} = \sum_{i=0}^{N_1-1} N_2(i)$$

La grille sphérique est donc définie comme le dictionnaire de quantification vectorielle sphérique suivant :

$$\left\{ \left(1, \hat{\phi}(i), \hat{\theta}(i,j)\right) | i = 0, ..., N_1 - 1; j = 0, ..., N_2(i) - 1 \right\}$$

Si le codage s'effectuait de façon totalement séparée (et non séquentiel comme dans l'invention) avec une indépendance du codage de $\phi$ puis $\theta$, la recherche du plus proche voisin dans la grille correspondrait à une division de la sphère en « rectangles sphériques » ; selon l'invention, il est cependant prévu de façon préférentielle d'effectuer un codage séquentiel où deux candidats sont retenus pour la colatitude, ce qui change la forme des régions de décisions avec en général une majorité de « régions de décison » de forme hexagonale, et un résultat optimal équivalent à une recherche exhaustive.

Comme décrit plus loin, l'algorithme de codage (spécifiquement, de recherche du plus proche voisin) et de décodage (quantification « inverse ») est commun à tous les types de grille, par contre la détermination de l'indice global (l'indexation) et le décodage de l'indice global dépendent du mode de réalisation.

Le type de dictionnaire de quantification scalaire utilisé pour coder la colatitude peut être uniforme (avec ou sans pôles) ou non-uniforme.

Trois modes de réalisation sont définis comme dans le cas général décrit aux figures la et 1b. On notera que dans le deuxième mode de réalisation, la grille est définie de façon spécifique pour simplifier l'étape de détermination de l'indice global de quantification (indexation) qui opère sans stockage des informations de cardinalité. Dans ce cas le nombre de niveaux pour le codage de l'azimut et les informations de cardinalité nécessaires à l'indexation sont obtenus de façon analytique à partir de la surface partielle de la sphère $\mathbb{S}_2$ et du nombre total de points $N_{tot}$.

Dans un premier mode de réalisation, la grille est définie par exemple à partir d'une résolution angulaire $\alpha$ (en

degrés pour faciliter son interprétation) comme suit.

En 202-1, la colatitude est codée par quantification scalaire sur $N_1$ niveaux de reconstruction. De façon préférentielle, on utilise une quantification scalaire uniforme sur l'intervalle $[0,\pi]$ (en incluant les valeurs 0, $\pi/2$ et $\pi$ comme niveaux de reconstruction):

$$\hat{\phi}(i) = \frac{i}{N_1 - 1}\pi, i = 0, \dots, N_1 - 1$$

où $N_1$ est défini en E203-1 par $N_1 = 2\left[\frac{90}{\alpha}\right] + 1$ pour avoir un nombre impair de niveaux $N_1$ (et donc inclure les pôles Nord et Sud et l'équateur) et $[.]$ est l'arrondi à l'entier le plus proche. Cette contrainte d'un nombre de niveaux impair, pour avoir spécifiquement un niveau de reconstruction égal à $\pi/2$ dans le dictionnaire de quantification scalaire, est motivée par le fait que dans les applications audio 3D, il est intéressant de représenter spécifiquement le plan horizontal ($\phi = \pi/2$) car de nombreux contenus ambisoniques artificiels sont souvent définis avec une composante Z nulle. La définition ci-dessus du dictionnaire $\{\hat{\phi}(i)\}$ implique également que les pôles Nord et Sud (correspondant à $\phi= 0$ et $\pi$) sont aussi spécifiquement inclus dans le dictionnaire ; l'inclusion des pôles permet une représentation complète de la sphère, l'impact est minime car seuls 2 points de la grille sont associés aux pôles.

L'azimut $\theta$ est codé par quantification scalaire sur $N_2(i)$ niveaux en E202-2. De façon préférentielle on utilise une quantification scalaire uniforme en E202-2 avec un dictionnaire de quantification scalaire uniforme en tenant compte de la nature cyclique de l'intervalle $[0,2\pi]$ si bien qu'il n'est pas nécessaire d'avoir les deux bornes 0 et $2\pi$ redondantes comme niveaux de reconstruction :

$$\hat{\theta}(i,j) = \delta(i) + \frac{j}{N_2(i)}2\pi, \ j = 0, \dots, N_2(i) - 1$$

où $N_2$ est par exemple défini en E203-2 par $N_2(i) = \max\left(1, \left[\frac{360}{\alpha}\sin\hat{\phi}(i)\right]\right)$ et $\delta(i)$ est un décalage prédéterminé selon l'invention. Par définition, lorsque les pôles sont inclus dans le dictionnaire $\{\hat{\phi}(i)\}$, on a $N_2(0) =1$ et $N_2(N_1 - 1) = 1$.

Le décalage $\delta(i)$ est défini pour « tourner » la « tranche horizontale » de la sphère (délimitée par les seuils de décision de colatitude) associée à chaque colatitude d'indice $i$ de sorte que les azimuts codés soient le moins alignés possibles d'une tranche successive à l'autre.

En pratique, on peut définir de façon équivalente le même dictionnaire en deux blocs de traitement avec un dictionnaire simplifié (sans décalage) :

$$\hat{\theta}_{simp}(i,j) = \frac{j}{N_2(i)}2\pi, \ j = 0, \dots, N_2(i)$$

en appliquant le décalage $\delta(i)$ comme pré- et post-traitement d'une quantification scalaire uniforme avec le dictionnaire $\{\hat{\theta}_{simp}(i,j)\}$ (voir la description du codage en référence à la figure 2a ci-dessous).

Dans la formulation ci-dessus du dictionnaire simplifié $\{\hat{\theta}_{simp}(i,j)\}$, on notera qu'un niveau de quantification $j = N_2(i)$ redondant est volontairement ajouté, sachant que $\hat{\theta}_{simp}(i,0) = \hat{\theta}_{simp}(i,N_2(i))$ ; cette redondance permet de tenir compte de façon efficace de la nature cyclique de l'intervalle $[0,2\pi]$ en minimisant les opérations de modulo.

Le nombre total de points dans la grille $\{(\hat{\phi}(i), \hat{\theta}(i,j)) \mid i = 0, \dots, N_1 - 1, j = 0, \dots, N_2(i) - 1\}$ est donné par :

$$N_{tot} = \sum_{i=0}^{N_1-1} N_2(i)$$

ce qui donne un débit de $log_2 N_{tot}$ bits.

On donne dans le **tableau 1** des exemples de résolutions $\alpha$ (en degrés) pour obtenir un nombre de points $N_{tot}$ permettant de s'approcher au mieux d'un débit cible (en bits) dans une grille où $N_1$ est fonction de a. Les valeurs de a sont ici indicatives et dans des variantes d'autres valeurs pourront être utilisées. On notera qu'en général un certain nombre de niveaux possibles ne sont pas utilisés à cause de la contrainte de construction séquentielle de la grille 3D.

**Tableau 1**

| Débit cible R (bits) | Nombre maximal de niveaux $2^R$ | $\alpha$ (en degrés) | Nombre de points $N_{tot}$ |
|---|---|---|---|
| 8 | 256 | 12.5419921875 | 255 |
| 10 | 1024 | 6.29052734375 | 1021 |
| 12 | 4096 | 3.1580429077148438 | 4068 |
| 14 | 16384 | 1.592926025390625 | 16122 |
| 16 | 65536 | 0.7929811477661133 | 65326 |

Dans des variantes, on pourra remplacer l'arrondi à l'entier le plus proche [.] dans la définition de $N_1$ et/ou $N_2(i)$ où $i$ est une ou plusieurs valeurs de l'ensemble $i = 0, ..., N_1 - 1$, par un arrondi à l'entier inférieur ou supérieur ; cela permet d'ajuster en particulier le nombre de points $N_{tot}$ dans la grille sphérique. Dans ce cas la convention d'arrondi utilisée doit bien sûr être appliquée à l'identique au codage et au décodage pour la détermination des valeurs de $N_1$ et/ou $N_2(i)$. Sans perte de généralité, on garde par la suite la convention où [.] correspond à l'arrondi à l'entier le plus proche.

Etant donnés $N_1$ et le dictionnaire de quantification scalaire pour la colatitude $\{\hat\phi(i)\}$, on peut déterminer $\delta(i)$ selon différentes méthodes. De façon générale, on fixe dans le cas préférentiel où les pôles et l'équateur sont inclus dans le dictionnaire de colatitude, $\delta(0) = \delta((N_1 - 1)/2) = \delta(N_1 - 1) = 0$. En effet, les pôles ne sont associés qu'à un seul point puisque $N_2(0) = N_2((N_1 - 1)/2) = 1$ dans le mode de réalisation privilégié où $\phi = 0$ et $\pi$ sont inclus dans $\{\hat\phi(i)\}$, le décalage associé n'est donc pas pertinent. Il est intéressant de garder un décalage nul dans le plan horizontal pour avoir des directions 3D plus facilement interprétables, quand $\phi = \pi/2$ est inclus dans $\{\hat\phi(i)\}$.

De plus on impose dans une première réalisation de la détermination de $\delta(i)$ que le décalage soit symétrique ou antisymétrique pour les hémisphères Nord et Sud, soit :

$$\delta((N_1 - 1)/2 + i) = \delta((N_1 - 1)/2 - i) \text{ ou } -\delta((N_1 - 1)/2 - i),\ i = 1, ..., (N_1 - 1)/2 - 1.$$

Dans une première réalisation, le décalage $\delta(i)$ est optimisé de façon séquentielle pour $i = 1, ..., N_1 - 2$ par apprentissage par « tranches horizontales » successives, à partir de la « tranche horizontale » juste au-dessus de l'équateur jusqu'à la tranche juste avant le pôle Nord. A l'itération $i$, on cherche $\delta((N_1 - 1)/2 + i)$ pour minimiser l'erreur de quantification pour une zone sphérique délimitée par les élévations $\hat\phi((N_1 - 1)/2 + i)$ et $\hat\phi((N_1 - 1)/2 + i + 1)$. Cette erreur peut être estimée par simulation de Monte Carlo d'une source aléatoirement distribuée selon une loi uniforme sur la surface de la sphère (par exemple par tirage Gaussien en dimension 3 et normalisation), en ne retenant que les échantillons aléatoires dont l'élévation est entre $\hat\phi((N_1 - 1)/2 + i)$ et $\hat\phi((N_1 - 1)/2 + i + 1)$; ces échantillons aléatoires sont codés selon l'invention en testant différentes valeurs candidates de $\delta((N_1 - 1)/2 + i)$.

Cela revient à appliquer le codage décrit à la figure 2a uniquement pour des données d'entrée dont l'élévation est entre $\hat\phi((N_1 - 1)/2 + i)$ et $\hat\phi((N_1 - 1)/2 + i + 1)$. Ce codage est répété pour autant de valeur $\delta((N_1 - 1)/2 + i)$ à tester, la valeur de $\delta((N_1 - 1)/2 + i + 1)$ étant connue à l'itération précédente. On mesure l'erreur de quantification par exemple en termes d'erreur quadratique moyenne, et on retient la valeur candidate de $\delta((N_1 - 1)/2 + i)$ correspondant au minimum - par exemple, on pourra faire varier $\delta((N_1 - 1)/2 + i)$ sur un intervalle $\left[0, \dfrac{j}{N_2(i)} 2\pi\right]$ divisé en 1000 pas équidistants.

Le **tableau 2** donne un exemple de décalage obtenu par un tel apprentissage (ou procédé d'optimisation) pour le cas d'une grille 3D sur 8 bits (définie au tableau 1). Il apparaît que ce mode de réalisation requiert de stocker les $N_1$ valeurs de $\delta(i)$. Dans des variantes, il sera possible de ne stocker que les valeurs $i = 1, ..., (N_1 - 1)/2 - 1$ non nulles et non redondantes, avec la convention $((N_1 - 1)/2 + i) = \delta((N_1 - 1)/2 - i)$, $i = 1, ..., (N_1 - 1)/2 - 1$. Dans des variantes, on pourra prendre une convention antisymétrique autour de l'équateur.

**Tableau 2**

| i | Décalage $\delta(i)$ (selon l'invention) |
|---|---|
| 0 | 0 |
| 1 | 0.48171087355043485 |

(suite)

| i | Décalage $\delta(i)$ (selon l'invention) |
|---|---|
| 2 | 0.0837758040957278 |
| 3 | 0.3036872898470134 |
| 4 | 0.09424777960769375 |
| 5 | 0.05074880440414277 |
| 6 | 0.11893172188589932 |
| 7 | 0 |
| 8 | 0.11893172188589932 |
| 9 | 0.05074880440414277 |
| 10 | 0.09424777960769375 |
| 11 | 0.3036872898470134 |
| 12 | 0.0837758040957278 |
| 13 | 0.48171087355043485 |
| 14 | 0 |

Dans des variantes, d'autres méthodes de détermination du décalage $\delta(i)$, $i = 1, ..., N_1 - 2$ seront possibles. Par exemple, on pourra maximiser itérativement la distance circulaire minimale (modulo $2\pi$) entre les deux ensembles de valeurs discrètes d'azimut

$$\hat{\theta}(i,j) = \delta(i) + \frac{j}{N_2(i)}2\pi, \; j = 0, ..., N_2(i)\text{-}1$$

et

$$\hat{\theta}(i+1,j) = \delta(i+1) + \frac{j}{N_2(i+1)}2\pi, \; j = 0, ..., N_2(i+1)\text{-}1$$

où $i$ va de $(N_1 - 1)/2 - 1$ jusqu' à 2 et $\hat{\theta}(i+1,j)$ est supposé connu à l'itération $i$ avec $\delta(i + 1)$ fixé et constant. Pour un i on détermine :

$$\delta(i) \leftarrow \arg \max_{0 \leq \delta(i) \leq (\hat{\theta}(i,1) - \hat{\theta}(i,0))} \left( \min_{j1=0,...,N_2(i)-1, j2=0,...,N_2(i+1)-1} d_{mod}(\hat{\theta}(i,j1), \hat{\theta}(i+1,j2)) \right)$$

où $\delta(i + 1)$ est connu à chaque étape (en partant de $\delta((N_1 - 1)/2) = 0$) et $d_{mod}(.)$ est la distance circulaire modulo $2\pi$ - dans le cas où plusieurs valeurs de $\delta(i)$ atteignent l'optimum on retiendra préférentiellement la plus faible. Ce mode de réalisation (alternatif) requiert en théorie de stocker les valeurs de $\delta(i)$.

Dans des variantes, on définira le décalage $\delta(i)$ à des valeurs prédéterminées pour ne pas avoir à stocker ces valeurs.

$$\delta(i) = \frac{\pi}{N_2(i)},$$

Dans une première variante, on gardera la contrainte $\delta(0) = \delta((N_1 - 1)/2) = \delta(N_1 - 1) = 0$ et on fixera $i = 1, ..., (N_1 - 1)/2$, soit la moitié du pas de quantification scalaire d'azimut étant donné l'indice i de colatitude (hors pôles et équateur). De plus on prendra $\delta((N_1 - 1)/2 + i) = \delta((N_1 - 1)/2 - i)$ ou $-\delta((N_1 - 1)/2 - i)$, $i = 1, ..., (N_1 - 1)/2 - 1$.

Dans une deuxième variante, on fixera $\delta(i) = \frac{\pi}{N_2(i)},$ $i = 1, 3, (N_1 - 1)/2 - 1$ (valeurs impaires de $i$) et $\delta(i) = 0$

pour, $i = 0, 2, (N_1 - 1)/2$ (valeurs impaires de $i$). De plus on prendra $\delta((N_1 - 1)/2 + i) = \delta((N_1 - 1)/2 - i)$ ou $-\delta((N_1 - 1)/2 - i$, $i = 1, ..., (N_1 - 1)/2$.

Dans une troisième variante, le décalage est mis à $\delta(i) = 0$ et d'autres aspects de l'invention sont mis à œuvre.

Dans d'autres variantes, d'autres valeurs de $\delta(i)$ pourront être utilisées.

Dans un mode particulier, on pourra directement fixer le nombre de niveaux $N_1$ à une valeur entière (de préférence impaire), sans chercher à approximer une résolution angulaire a. On peut déduire de $N_1$ une résolution

$$\alpha = \frac{180}{N_1 - 1}$$

angulaire, qui correspond dans e mode particulier au pas de quantification : (en degrés). La détermination du nombre de niveaux $N_2(i)$ est reprise avec cette valeur de $\alpha$ avec $N_2(i) = \max(1, [2(N_1 - 1) \sin\hat{\phi}(i)])$.

Ce mode particulier a cependant le défaut d'avoir en général moins de finesse dans l'allocation du nombre de points par couches sphériques pour atteindre un certain débit cible.

On donne dans le **tableau 3** des exemples de nombre de points $N_{tot}$ pour des valeurs $N_1$ permettant de s'approcher d'un débit cible (en bits) dans une grille où $N_1$ est donné directement.

**Tableau 3**

| Débit cible R (bits) | Nombre maximal de niveaux $2^R$ | $N_1$ | Nombre de points $N_{tot}$ |
|---|---|---|---|
| 8 | 256 | 15 | 248 |
| 10 | 1024 | 29 | 998 |
| 12 | 4096 | 57 | 3998 |
| 14 | 16384 | 113 | 15974 |
| 16 | 65536 | 227 | 65038 |

Dans des variantes, on pourra prendre $N_1 = \left[\frac{180}{\alpha}\right]$, cependant cela ne garantit pas que l'équateur (correspondant à $\phi = \pi/2$) soit inclus dans le dictionnaire de quantification. Dans ce cas, certaines variantes d'indexation - décrites plus loin - supposant l'inclusion de l'équateur ne pourront pas être mises en œuvre.

Dans d'autres variantes, on pourra ne pas représenter les pôles, en définissant par exemple les niveaux de reconstruction de la colatitude comme :

$$\hat{\phi}(i) = \frac{i+1}{N_1 + 1}\pi, \qquad i = 0, ..., N_1 - 1$$

Dans ce cas, certaines variantes d'indexation - décrites plus loin - supposant l'inclusion des pôles ne pourront pas être mises en œuvre ou devront être adaptées.

On présente maintenant un procédé de codage des coordonnées sphériques $(\phi, \theta)$ d'un point d'entrée sur une sphère en dimension 2 illustré à la figure 2a.

On décrit à présent un algorithme de recherche optimal pour l'erreur quadratique (ou la distance euclidienne), ce qui correspond à la longueur de la corde entre $(\phi, \theta)$ et $\{(\hat{\phi}(i), \hat{\theta}(i,j))\}$, ou la distance angulaire qui est associée à la longueur de l'arc de cercle entre ces points.

La quantification des coordonnées sphériques et la recherche s'effectue de façon séquentielle comme suit :

- Etant donné un point 3D $(x, y, z)$ en E200 supposé sur $S_2$ (avec un rayon 1), on détermine d'abord $\phi$ en E201 comme :

$$\phi = \arccos z$$

- On code d'abord la colatitude $\phi$ en E202-1. Pour que la recherche soit optimale, il convient de retenir les 2 valeurs $\hat{\phi}(i_1(0))$ et $\hat{\phi}(i_1(1))$ les plus proches (la plus proche d'indice $i1(0)$ et la seconde plus proche $i_1(1)$) à l'étape E204-1:

$$i_1(0) = \arg \min_{i=0,\dots,N_1-1} (\phi - \hat{\phi}(i))^2$$

$$i_1(1) = \arg \min_{\substack{i=0,\dots,N_1-1 \\ i \neq i_1(0)}} (\phi - \hat{\phi}(i))^2$$

Dans des variantes, on pourra déterminer $i_1(0)$ et $i_1(1)$ par quantification directe - on donne ci-dessous un exemple de réalisation pour le cas d'un dictionnaire scalaire uniforme de la forme $\hat{\phi}(i) = \dfrac{i}{N_1-1}\pi$ :

o si $\phi = 0$, $i_1(0) = 0$ et $i_1(0) = 1$
∘ sinon :

- si $\phi = \pi$, $i_1(0) = N_1 - 1$, $i_1(1) = N_1 - 2$
- sinon : $i_1(0) = \lfloor \phi/s \rfloor$ et $i_1(1) = \lceil \phi/s \rceil$, où $\lfloor . \rfloor$ et $\lceil . \rceil$ désignent l'arrondi à l'entier inférieur et supérieur (respectivement) et $s = \dfrac{\pi}{N_1-1}$ est le pas de quantification scalaire

On note dans tous le cas que les indices $i_1(0)$ et $i_1(1)$ peuvent être permutés sans que cela change le résultat du codage.
On obtient ainsi deux indices correspondant aux deux points du dictionnaire $\{\hat{\phi}(i_1(0)), \hat{\phi}(i_1(1))\}$ les plus proches de $\phi$.
Ensuite on détermine l'azimut en E201

$$\theta = \begin{cases} \arccos y/\sqrt{y^2 + z^2} & z \geq 0 \\ 2\pi - \arccos y/\sqrt{y^2 + z^2} & z < 0 \end{cases}$$

défini dans $[0,2\pi]$. Dans des variantes, on pourra utiliser la fonction arctan sur 4 quadrants (notée arctan2):

$$\theta = \arctan2 (y, x)$$

mais dans ce cas l'azimuth $\theta$ est défini dans $[-\pi, \pi]$ et il faudra adapter le dictionnaire de quantification (avec un décalage de $-\pi$).

- On code l'azimut $\theta$ par quantification scalaire uniforme en E204-2 avec un nombre de niveaux adaptatif $N_2(i)$ où $i$ = $i_1(0)$ ou $i_1(1)$, comme décrit précédemment à l'étape E203-2, pour obtenir en E204-2, les deux valeurs $\hat{\theta}(i_1(0), i_2(0))$ et $\hat{\theta}(i_1(1), i_2(1))$, respectivement.

De manière privilégiée, la quantification scalaire uniforme en E204-2 est mise en œuvre en deux blocs de traitement avec un dictionnaire simplifié (sans décalage):

$$\hat{\theta}_{simp}(i,j) = \frac{j}{N_2(i)} 2\pi, \quad j = 0, \dots, N_2(i)$$

On applique d'abord le décalage $-\delta(i)$ à l'entrée :

$$\theta' = mod_{2\pi}(\theta - \delta(i_1(m)))$$

où $mod_{2\pi}(x)$ est l'opération modulo $2\pi$, puis on quantifie dans le dictionnaire :

$$i_2(m) = \arg \min_j \left\| \theta' - \hat{\theta}_{simp}(i_1(m), j) \right\|^2, \; m = 0, 1.$$

Cette quantification dans le dictionnaire pourra être réalisée directement comme suit pour une entrée $\theta \in [0, 2\pi]$ :

   o Si $\theta = 0$, $i_2(m) = 0$ et $i_1(m) = 1$
    ∘ sinon :

        ▪ si $\theta = 2\pi$, $i_2(m) = N_2(i_1(m))$

        ▪ sinon : $i_2(m) = [\theta/s]$, où [.] désigne l'arrondi à l'entier le plus proche et $s = \dfrac{2\pi}{N_2(i_1(m))}$ est le pas de quantification scalaire
        ▪ Si $i_2(m) = N_2(i_1(m))$, $i_2(m) \leftarrow 0$

Le niveau de reconstruction correspondant est :

$$\hat{\theta}\big(i_1(m), i_2(m)\big) = \hat{\theta}_{simp}(i, j) + \delta\big(i_1(m)\big) = \frac{i_2(m)}{N_2(i)} 2\pi + \delta\big(i_1(m)\big)$$

Cela correspond donc à une quantification scalaire avec le dictionnaire $\{\hat{\theta}(i,j)\}$, ou de façon équivalente avec le dictionnaire $\{\hat{\theta}_{simp}(i,j)\}$ et un pré-traitement $mod_{2\pi}(\theta - \delta(i_1(m)))$ et un post-traitement $\hat{\theta}_{simp}(i,j) + \delta(i_1(m))$.

- On obtient à l'étape E205, deux candidats ($2^{n-2}$ avec n=3) $\hat{x}(m) = (\hat{\phi}(i_1(m)), \hat{\theta}(i1(m), i_2(m)))$, m=0 ou 1.
- A l'étape E206, on sélectionne le candidat $\hat{x}(m)$, m=0, 1 le plus proche de $x = (x,y,z)$ et

$$\hat{x}(m) = \big(r \sin \hat{\phi}(i_1(m)) \cos \hat{\theta}(i_1(m), i_2(m)),$$

$$r \sin \hat{\phi}(i_1(m)) \sin \hat{\theta}(i_1(m), i_2(m)), \quad r \cos \hat{\phi}(i_1(m))\big)$$

en coordonnées cartésiennes.

Le critère de distance peut être la distance euclidienne $\|x - \hat{x}(m)\|^2$ qui est à minimiser ou le produit scalaire $x.\hat{x}(m)$ qui est à maximiser. Par exemple :

$$m^* = \arg \min_{m=0,1} \sum_{l=1}^{3} (x_l - \hat{x}_l(m))^2$$

Les indices de quantification sélectionnés en E206 correspondent au point sélectionné : $(i_1(m^*), i_2(m^*))$ avec $m^* = 0$ ou 1.
Dans des variantes on peut effectuer la dernière étape sans repasser par les coordonnées cartésiennes, en calculant une distance directement dans le domaine des coordonnées sphériques. On pourra évaluer une distance dans le domaine des coordonnées sphériques entre $(\phi, \theta)$ et $\{(\hat{\phi}(i_1(m)), \hat{\theta}(i_1(m), i_2(m)))\}$. Partant de la distance angulaire

$$dist_{ang}\big((\phi_1, \phi_2), (\hat{\phi}_1(m), \hat{\phi}_2(m))\big)$$

$$= \arccos\big(\cos \phi_1 \cos \hat{\phi}_1(m) + \sin \phi_1 \sin \hat{\phi}_1(m) \cos(\phi_2 - \hat{\phi}_2(m))\big)$$

on pourra donc minimiser :

$$m^* = \arg \max_{m=0,1} \cos \phi \cos \hat{\phi}(i_1(m)) + \sin \phi \sin \hat{\phi}(i_1(m)) \cos\big(\theta - \hat{\theta}(i_1(m), i_2(m))\big)$$

Pour simplifier les notations, on notera dans la suite de la description de la figure 2a ces indices comme $(i,j)$ pour désigner respectivement les indices sélectionnés $(i_1(m^*), i_2(m^*))$ avec $m^* = 0$ ou 1.

L'étape d'indexation E207 est maintenant décrite selon différentes méthodes. On détermine à cette étape un indice de quantification global en fonction des indices séparés $(i,j)$ issus de la quantification séparée des coordonnées sphériques pour le point le plus proche sélectionné.

A partir des indices $(i,j)$, où ,$0 \leq i \leq N_1 - 1$ et $0 \leq j \leq N_2(i)$-1, on détermine en E207 un indice unique $0 \leq index < N_{tot}$ à transmettre.

Dans une réalisation préférentielle du premier mode de réalisation, on utilise un pré-stockage (tabulation) des sommes cumulatives de cardinalité définies par $offset_1(0) = 0$ et $offset_1(i) = \sum_{l=0}^{i-1} N_2(l)$ de zones (ou « ensembles de tranches horizontales ») sphériques successives. Cette somme $offset_1(i)$ peut s'interpréter comme la cardinalité d'une zone sphérique discrétisée (le nombre de points de la grille partielle allant de la colatitude d'indice 0 à la colatitude d'indice i).

On donne au **tableau 4** un exemple de table $\{offset_1(i)\}$ pour le cas d'une grille 3D (pour $a$ = 12.5419921875, avec $N_1$ = 15).

**Tableau 4**

| i | $N_2(i)$ | $offset_1(i)$ |
|---|---|---|
| 0 | 1 | 0 |
| 1 | 6 | 1 |
| 2 | 12 | 7 |
| 3 | 18 | 19 |
| 4 | 22 | 37 |
| 5 | 26 | 59 |
| 6 | 28 | 85 |
| 7 | 29 | 113 |
| 8 | 28 | 142 |
| 9 | 26 | 170 |
| 10 | 22 | 196 |
| 11 | 18 | 218 |
| 12 | 12 | 236 |
| 13 | 6 | 248 |
| 14 | 1 | 254 |
| 15 | - | 255 |

Cette somme cumulative précalculée et stockée en mémoire sert pour déterminer l'indice de l'élévation. Ainsi l'indice global est calculé comme :

$$index = offset_1(i) + j$$

Ainsi l'indice global *index* est obtenu par codage séquentiel des indices de quantification séparés *i,j* du meilleur candidat.

Dans ce cas la valeur 0 correspond au pôle Nord et la valeur $offset_1(N_1 - 1)$ correspond au pôle Sud. La valeur $offset_1(N_1) = N_{tot}$ est ici définie pour permettre le décodage de *index* (voir plus loin en référence à la figure 2b).

Dans des variantes on pourra ne pas stocker les valeurs $offset_1(i)$ mais les calculer « en ligne » (au fil de l'eau) à partir de leur définition : $offset_1(i) = \sum_{l=0}^{i-1} N_2(l)$.

Cela rajoute cependant une complexité de calcul qui peut être non négligeable si la grille comprend beaucoup de points.

Dans des variantes, on pourra indexer à partir du pôle Sud en inversant l'ordre des indices sur l'élévation de $N_1$ - 1 à 0 au lieu de 0 à $N_1$ - 1, et de façon générale la somme définissant $offset_1(i) = \sum_{l=0}^{i-1} N_2(l)$ pourra être effectué avec n'importe quelle permutation prédéterminée des indices $l$. Ainsi, dans d'autres variantes, on pourra permuter l'ordre d'indexation des « tranches sphériques ». Plutôt que d'indexer en partant du pôle Nord jusqu'au pôle Sud en passant par l'équateur, on commence par l'équateur, puis on code l'hémisphère Nord (sans l'équateur), puis l'hémisphère Sud.

Dans une variante, on aura $offset_1(0)$ = 0 et $offset_1(N_1)$ = $N_{tot}$, puis on indexera d'abord l'équateur en fixant $offset_1(1) = N_2((N_1 - 1)/2)$, puis on pourra coder l'hémisphère Nord (sans l'équateur) avec ($offset_1(N_1)$ - $offset_1(1)$)/2 points pour les indices $i = 0, \ldots, \frac{(N_1-1)}{2} - 1$, puis on pourra coder l'hémisphère Sud (sans l'équateur) et en partant du pôle Sud où l'indice $i > (N_1 -1)/2$ est « inversé » : $i' = N_1 - 1 - i$.

Dans un deuxième mode de réalisation, les étapes de codage sont identiques à celles du premier mode de réalisation, sauf pour l'étape de détermination du nombre $N_2(i)$ en E203-2 et l'étape d'indexation en E207 qui sont spécifiques à ce deuxième mode de réalisation et détaillées ci-après.

Les valeurs $N_2(i)$ donnant le nombre de valeurs d'azimut codées dans chaque « tranche sphérique » associée à la colatitude codée d'indice $i$ seront fixées dans ce deuxième mode de réalisation pour permettre une indexation analytique.

Les dictionnaires sont définis de façon préférentielle comme dans le premier mode de réalisation:

$$\hat{\phi}(i) = \frac{i}{N_1-1}\pi,$$

$i = 0, \ldots, N_1$ - 1, où par exemple $N_1 = 2\left[\frac{90}{\alpha}\right] + 1$ — dans des variantes $N_1$ pourra être un entier de préférence impair

$$\hat{\theta}(i,j) = \delta(i) + \frac{j}{N_2(i)}2\pi, \quad j = 0, \ldots, N_2(i) - 1.$$

où le décalage $\delta(i)$ est fixé comme décrit dans le premier mode de réalisation et $N_2(i)$ est défini ci-dessous en fonction de la surface partielle sur la sphère, des valeurs $\hat{\phi}(i)$ et d'un nombre total $N_{tot}$.

Typiquement les valeurs de $N_1$ et le nombre total $N_{tot}$ nécessaires à la détermination de $N_2(i)$ pourront être initialisées comme déterminées dans le premier mode de réalisation : par exemple $N_1 = 227$ et $N_{tot} = 65326$ pour $\alpha$ =0.7929811477661133 comme au tableau 1 (avec 210 valeurs non utilisées pour un débit cible de 16 bits), mais il sera aussi possible de fixer des valeurs différentes comme $N_1 = 229$ et $N_{tot} = 65536$ en particulier pour limiter le nombre de points non utilisés pour un débit donné.

On décrit maintenant le principe de la détermination analytique du nombre de niveaux $N_2(i)$ de codage pour l'azimut et du nombre cumulatif de points $offset_1(i)$ jusqu'à une certaine tranche sphérique d'indice $i$ (exclusivement).

Différentes méthodes de détermination du nombre de niveaux $N_2(i)$ sont définies. Elles ont toutes en commun d'utiliser un arrondi à un entier prédéfini (par exemple l'entier le plus proche) d'une estimation d'un nombre de points de la grille à partir d'un nombre total de points et de la surface d'une zone sphérique délimitée par des valeurs (seuils) en colatitude, cette surface étant elle-même normalisée par la surface d'une zone sphérique qui est par exemple la sphère complète ou la sphère complète hors calottes polaires.

La surface d'un élément autour du point ($\theta, \phi$) sur la sphère $\mathbb{S}_2$ est donnée par $dA = r^2 \sin \phi \, d\theta d\phi$ où $\phi$ est ici la colatitude (si l'élévation était utilisée, on aurait un terme en cos $\phi$). La surface partielle définie par une zone sphérique délimitée par deux plans horizontaux induits par un intervalle de colatitude [$\phi_{min}, \phi_{max}$], où $0 \leq \phi_{min} < \phi_{max} \leq \pi$, l'azimut étant sur [$0,2\pi$], est donnée par:

$$A(\phi_{min}, \phi_{max}) = r^2 \int_0^{2\pi} d\theta \int_{\phi_{min}}^{\phi_{max}} \sin \phi \, d\phi = 2\pi r^2(\cos \phi_{min} - \cos \phi_{max})$$

On retrouve en particulier le résultat connu que la surface de la sphère $\mathbb{S}_2$ de rayon r est $A_{tot} = A(0, \pi) = 4\pi r^2$ (pour $\phi_{min}$= 0 et $\phi_{max} = \pi$).

Pour un nombre de points $N_{tot}$ dans la grille sphérique (ou dictionnaire de quantification vectorielle sphérique), chaque « région de décision » associée à un point de la grille est ici approximée par un « rectangle sphérique » à des fins d'indexation (ce qui correspond à une décision non séquentielle de codage séparé des coordonnées sphériques). Chacune de ces régions doit idéalement avoir une surface de $4\pi r^2/N_{tot}$ si la grille est uniforme.

Pour une discrétisation uniforme de la colatitude avec :

$$\hat{\phi}(i) = \frac{i}{N_1 - 1}\pi, i = 0, ..., N_1 - 1$$

on peut donc estimer en E203-2 le nombre de points sur la grille compris dans une zone sphérique (ou « tranche sphérique ») d'indice $i$ délimitée par les deux plans horizontaux associés aux seuils de décision $\phi_{min} = (\hat{\phi}(i) + \hat{\phi}(i-1))/2$ et $\phi_{max} = (\hat{\phi}(i) + \hat{\phi}(i+1))/2$ par une simple règle de trois, sous la forme :

$$\frac{A(\phi_{min}, \phi_{max})}{A_{tot}}N_{tot} = \left(\cos\frac{\hat{\phi}(i) + \hat{\phi}(i-1)}{2} - \cos\frac{\hat{\phi}(i) + \hat{\phi}(i+1)}{2}\right)\frac{N_{tot}}{2}$$

ce qui peut être arrondi à un entier (par exemple l'entier le plus proche, ou inférieur, ou supérieur, etc.).

On peut également estimer en E203-2 le nombre de points sur la grille compris dans une zone sphérique comprise entre le pôle Nord et la limite de la « tranche sphérique » d'indice $i$ délimitée le plan horizontal associé au seuil de décision $\phi_{max} = (\hat{\phi}(i) + \hat{\phi}(i+1))/2$, comme :

$$\frac{A(0, \phi_{max})}{A_{tot}}N_{tot} = \left(1 - \cos\frac{\hat{\phi}(i) + \hat{\phi}(i+1)}{2}\right)\frac{N_{tot}}{2}$$

ce qui peut être arrondi à un entier.

Avec ces résultats, on peut définir en E203-2 les valeurs $N_2$ dans le deuxième mode de réalisation sous la forme :

$$N_2(i) = \max\left(1, \left[\left(1 - \cos\left(\frac{i+0.5}{N_1-1}\pi\right)\right)\frac{N_{tot}}{2}\right] - \left[\left(1 - \cos\left(\frac{i-0.5}{N_1-1}\pi\right)\right)\frac{N_{tot}}{2}\right]\right), \ i = 0, ..., N_1 - 1$$

Ce nombre de niveaux est obtenu par une estimation (arrondie) du nombre de points dans la grille à partir du nombre total $N_{tot}$ et de la surface d'une zone sphérique (normalisée) entre le pôle Nord et la limite supérieure de la « tranche sphérique » d'indice $i$ délimitée le plan horizontal associé au seuil de décision $\phi_{max} = (\hat{\phi}(i) + \hat{\phi}(i+1))/2$ - cette surface étant normalisée par la surface totale de la sphère.

Dans des variantes, on pourra prendre en E203-2 :

$$N_2(i) = \max\left(1, \left[\left(\cos\left(\frac{i-0.5}{N_1-1}\pi\right) - \cos\left(\frac{i+0.5}{N_1-1}\pi\right)\right)\frac{N_{tot}}{2}\right]\right), \qquad i = 0, ..., N_1 - 1$$

Ce nombre de niveaux est obtenu par une estimation (arrondie) du nombre de points dans la grille à partir du nombre total $N_{tot}$ et de la surface d'une zone sphérique (ou « tranche sphérique ») d'indice $i$ délimitée par les deux plans horizontaux associés aux seuils de décision $\phi_{min} = (\hat{\phi}(i) + \hat{\phi}(i-1))/2$ et $\phi_{max} = (\hat{\phi}(i) + \hat{\phi}(i+1))/2$.

Dans des variantes, il sera possible de définir en E203-2 séparément le nombre de niveaux pour les pôles et hors pôles sous la forme :

$$N_2(0) = N_2(N_1 - 1) = 1$$

$$N_2(i) = \left\lceil \left( \cos\left(\frac{i-0.5}{N_1-1}\pi\right) - \cos\left(\frac{i+0.5}{N_1-1}\pi\right) \right) \frac{N_{tot}-2}{\cos\left(\frac{0.5}{N_1-1}\pi\right) - \cos\left(\frac{N_1-0.5}{N_1-1}\pi\right)} \right\rceil,$$

$$i = 1, \ldots, N_1 - 2$$

Ce nombre de niveaux (hors pôles) est obtenu par une estimation (arrondie) du nombre de points dans la grille à partir du nombre total (modifié) $N_{tot}$ - 2 et de la surface d'une zone sphérique entre le pôle Nord et la limite de la « tranche sphérique » d'indice $i$ délimitée par le plan horizontal associé au seuil de décision $\phi_{max} = (\hat{\phi}(i) + \hat{\phi}(i+1))/2$ - cette surface étant normalisée par la surface de la zone sphérique délimitée par les deux plans horizontaux associés aux seuils de décision $\phi_{min} = (\hat{\phi}(0) + \hat{\phi}(1))/2$ et $\phi_{max} = (\hat{\phi}(N_1-2) + \hat{\phi}(N_1-1))/2$. Dans des variantes, il sera également possible d'ajuster la détermination de $N_2(i)$ en modifiant le type d'arrondi (entier inférieur ou supérieur au lieu de l'entier le plus proche) pour certains valeurs de $i$, voire d'ajuster la valeur de $N_{tot}$. Par exemple, on pourra prendre une définition modifiée en E203-2 pour $i$ = 1 :

$$N_2(1) = \left\lfloor \left(1 - \cos\left(\frac{1+0.5}{N_1-1}\pi\right)\right)\frac{N_{tot}}{2} \right\rfloor - \left\lfloor \left(1 - \cos\left(\frac{1-0.5}{N_1-1}\pi\right)\right)\frac{N_{tot}}{2} \right\rfloor,$$

où $\lfloor . \rfloor$ est l'arrondi à l'entier inférieur.

En général les valeurs $N_2(i)$ obtenues dans cette seconde étape sont différentes des valeurs

$$N_2(i) = \max\left(1, \left\lceil \frac{360}{\alpha}\sin\hat{\phi}(i) \right\rceil\right)$$ définies dans le premier mode de réalisation, même si $N_{tot}$ est défini comme dans le premier mode de réalisation.

Avec les valeurs $N_2(i)$ ainsi définies, les dictionnaires d'azimut peuvent donc être déterminés comme:

$$\hat{\theta}(i,j) = \delta(i) + \frac{j}{N_2(i)}2\pi, \quad j = 0, \ldots, N_2(i) - 1$$

où $N_2(i)$ est déterminé selon le deuxième mode de réalisation.

En général, on obtient par construction l'égalité suivante (où $N_{tot}$ est une valeur entière donnée pour la détermination des valeurs $N_2(i)$):

$$N_{tot} = \sum_{i=0}^{N_1-1} N_2(i)$$

Si cette égalité n'est pas vérifiée, en particulier pour des valeurs $N_{tot}$ faibles, il faudra ajuster certains paramètres, par exemple ajuster la valeur de $N_{tot}$ ou ajuster le calcul de l'arrondi dans la définition de $N_2(i)$ ou fixer directement la valeur $N_2(i)$ pour certaines valeurs de $i$. Dans ce deuxième mode de réalisation l'indexation en E207 est simplifiée. L'indice global est calculé comme :

$$index = offset_1(i) + j$$

Ainsi l'indice global $index$ est obtenu par codage séquentiel des indices de quantification séparés $i, j$ du meilleur candidat.

Pour la définition préférentielle de $\hat{\phi}(i)$ utilisée ici avec une quantification scalaire uniforme et en arrondissant à l'entier le plus proche:

$$offset_1(0) = 0$$

$$offset_1(i) = \left[\left(1 - \cos\left(\frac{i-0.5}{N_1-1}\pi\right)\right)\frac{N_{tot}}{2}\right], i = 1, \ldots, N_1 - 1$$

Ainsi, les valeurs $offset_1(i)$, pour au moins certains indices $i$, sont obtenues par une estimation (arrondie) du nombre de points dans la grille à partir du nombre total ($N_{tot}$) et de la surface d'une zone sphérique entre le pôle Nord et la limite inférieure de la « tranche sphérique » d'indice $i$ délimitée le plan horizontal associé au seuil de décision $\phi_{min}$ = $(\hat{\phi}(i) - \hat{\phi}(i + 1))/2$ - cette surface étant normalisée par la surface totale de la sphère.

Dans des variantes, on pourra définir par exemple :

$$offset_1(0) = 0$$

$$offset_1(i) = \left[\left(\cos\left(\frac{i-0.5}{N_1-1}\pi\right) - \cos\left(\frac{i+0.5}{N_1-1}\pi\right)\right)\frac{N_{tot}-2}{\cos\left(\frac{0.5}{N_1-1}\pi\right)-\cos\left(\frac{N_1-0.5}{N_1-1}\pi\right)}\right], i = 1, \ldots, N_1 - 2$$

$$offset_1(N_1 - 1) = N_{tot} - 1$$

Ici, les valeurs $offset_1(i)$, pour au moins certains indices $i$, sont obtenues par une estimation (arrondie) du nombre de points dans la grille à partir du nombre total modifié $N_{tot}$ - 2 et de la surface d'une zone sphérique entre le pôle Nord et la limite inférieure de la « tranche sphérique » d'indice $i$ délimitée le plan horizontal associé au seuil de décision $\phi_{min}$ = $(\hat{\phi}(i) + \hat{\phi}(i + 1))/2$ - cette surface étant normalisée par la surface de la zone sphérique délimitée par les deux plans horizontaux associés aux seuils de décision $\phi_{min}$ = $(\hat{\phi}(0) + \hat{\phi}(1))/2$ et $\phi_{max}$ = $(\hat{\phi}(N_1 - 2) + \hat{\phi}(N_1 - 1))/2$.

On notera que ce deuxième mode de réalisation requiert une précision de calcul suffisante - dans le calcul des fonctions trigonométriues - afin de bien déterminer les valeurs de $N_2(i)$ et $offset_1(i)$.

Dans des variantes du deuxième mode de réalisation, le dictionnaire de quantification scalaire $\{\hat{\phi}(i)\}$ pourra être différent, dans ce cas on adaptera les termes $\cos\left(\frac{i+0.5}{N_1-1}\pi\right)$ et $\cos\left(\frac{i-0.5}{N_1-1}\pi\right)$ dans la définition de $N_2(i)$ et $offset_1(i)$ en cos $((\hat{\phi}(i) + \hat{\phi}(i + 1))/2)$ et cos $((\hat{\phi}(i) + \hat{\phi}(i - 1))/2)$, respectivement. On note ici que les valeurs $(\hat{\phi}(i) + \hat{\phi}(i + 1))/2$ correspondent en fait à des seuils de décision de quantification scalaire ; ces seuils définissent les limites d'intégration pour déterminer le nombre de points à partir de la surface partielle sur la sphère jusqu'à une certaine tranche sphérique.

Dans un troisième mode de réalisation, toutes les étapes de codage E201 à E206 sont identiques aux deux modes précédents et l'étape E207 consiste à coder séquentiellement sous forme binaire les 2 indices $i_1(m^* \gg 1)$, $i_2(m^*)$ abrégés en $i,j$ correspondant au meilleur candidat. Ce codage est séquentiel car le nombre de valeurs possibles $N_2(i)$ pour l'azimut dépend de l'indice $i$ de la colatitude.

Dans une première variante, ce codage séquentiel utilisera un codage binaire à débit fixe de $i, j$ sur respectivement $\lceil \log_2 N_1 \rceil$ bits et $\lceil \log_2 N_2(i) \rceil$ bits où $\lceil . \rceil$ désigne l'arrondi à l'entier supérieur, avec la convention $\lceil 0 \rceil$ = 0. Le multiplexage se fait donc de façon séquentielle pour former un train binaire de longueur totale variable $\lceil \log_2 N_1 \rceil + \lceil \log_2 N_2(i) \rceil$ bits. On multiplexe d'abord $i$, puis on multiplexe $j$. On notera que lorsque $N_2(i)$ = 1 le codage prend 0 bit pour l'indice $j$, donc ce codage n'est pas nécessaire.

Dans une seconde variante, les indices $i, j$ seront codés séquentiellement avec un codage entropique de type Huffman ou codage arithmétique. On pourra utiliser une estimation de la probabilité de chaque valeur de l'indice $i$ comprise entre 0 et $N_1$ en déterminant la surface partielle de la sphère dans la tranche associée à $i_k$ pour coordonnée $\phi_k$ l'indice, cette aire étant normalisée par l'aire totale de la sphère pur cette même coordonnée $\phi_k$, soit :

$$Prob(0) = \frac{A(0, \phi_{max})}{A_{tot}} = \frac{1}{2}\left(1 - \cos\frac{\hat{\phi}(0) + \hat{\phi}(1)}{2}\right)$$

$$Prob(i) = \frac{A(\phi_{min}, \phi_{max})}{A_{tot}} = \frac{1}{2}\left(\cos\frac{\hat{\phi}(i) + \hat{\phi}(i-1)}{2} - \cos\frac{\hat{\phi}(i) + \hat{\phi}(i+1)}{2}\right), i = 1, \ldots, N_1 - 2$$

$$Prob(N_1 - 1) = \frac{A(\phi_{min}, \pi)}{A_{tot}} = \frac{1}{2}\left(\cos\frac{\hat{\phi}(N_1 - 1) + \hat{\phi}(N_1 - 2)}{2} + 1\right)$$

dans le cas d'un dictionnaire incluant les pôles.

Si $N_2(i) > 1$, le codage de l'indice $j$ pourra simplement être effectué à longueur fixe car dans ce cas l'estimation de probabilité serait équiprobable ($Prob(j|i) = 1/N_2(i)$ si $N_2(i) > 1$) pour une distribution uniforme sur la sphère. Dans des variantes d'autres estimations des probabilités $Prob(i)$ et $Prob(j|i)$ seront possibles si la distribution de la source sur la sphère en dimension 3 est supposée non uniforme.

Dans des variantes où l'élévation est codée au lieu de la colatitude on effectuera les conversions adéquates des définitions de $N_2(i)$ et $offset_1(i)$ (en changeant les termes de cosinus en sinus, etc.) et du dictionnaire de quantification $\{\hat{\phi}(i)\}$.

Le procédé de décodage correspondant, pour la dimension 3, est maintenant décrit en référence à la **figure 2b.**

On suppose d'abord une indexation selon le premier mode de réalisation décrite en référence à la figure 2a.

Etant donné l'indice global *index* à l'étape E210, on effectue un décodage séquentiel des deux coordonnées sphériques aux étapes E211-1 et E211-2.

A l'étape E212-1, on détermine comme à l'étape de codage E203-1 un nombre de niveaux de quantification scalaire $N_1$ selon l'une des variantes décrites au codage (soit en fixant une résolution, soit directement).

Le décodage de l'indice $i$ se fait selon la méthode de codage utilisée.

On se focalise d'abord sur le décodage dans un premier mode de réalisation.

L'indice $i$ de la colatitude se retrouve en E213-1 par une recherche dans la table de cardinalité :

$$i = \max\{l \in \{0, \ldots, N_1 - 1\} | \; index < offset_1(l + 1))\}$$

Pour ce faire, on définit la convention :

$$offset_1(N_1) = N_{tot}$$

On pourra déterminer la valeur de $offset_1(i)$ comme décrit au codage à l'étape E207.

La table de cardinalité a, dans une variante de réalisation, été stockée en mémoire en totalité ou en partie.

Dans une variante de réalisation, elle peut être calculée au fil de l'eau à partir de sa définition:

$$offset_1(i) = \sum_{l=0}^{i-1} N_2(l).$$

Dans des variantes on pourra ne stocker ou calculer « en ligne » (au fil de l'eau) que $(N_1 - 1)/2 + 1$ valeurs de la table $offset_1(i)$ comme décrit pour le codage.

On reconstruit la colatitude décodée en E214-1 comme :

$$\hat{\phi}(i) = \frac{i}{N_1 - 1}\pi$$

Dans des variantes, d'autres dictionnaires de quantification uniforme ou non-uniforme $\{\hat{\phi}(i)\}$ seront possibles de façon identique au codage.

L'indice $j$ de l'azimut se retrouve en E213-2 par soustraction selon la formule suivante : $j = index - offset_1(i)$ à partir de l'indice global *index* et de l'indice de colatitude décodé $i$. Dans des variantes d'indexation décrites pour le codage en référence à la figure 2a, le décodage de l'indice $j$ sera adapté en fonction de la méthode d'indexation utilisée.

On détermine la valeur du décalage $\delta(i)$ comme défini au codage et on reconstruit l'azimut $\hat{\theta}(i, j)$ en E214-2 comme :

$$\hat{\theta}(i, j) = \delta(i) + \frac{j}{N_2(i)}2\pi$$

On obtient ainsi les coordonnées sphériques $(\hat{\phi}(i), \hat{\theta}(i, j))$ du point décodé en E215.

A cette étape E215, on effectue de façon optionnelle une conversion des coordonnées sphériques, par exemple pour convertir une colatitude et un azimut en radians en une élévation et un azimut en degrés.

On peut ensuite reconstruire le point décodé $(\hat{x}, y, \hat{z})$ en E216 comme :

$$\hat{x} = r \sin \hat{\phi}(i) \cos \hat{\theta}(i,j), \qquad \hat{y} = r \sin \hat{\phi}(i) \sin \hat{\theta}(i,j), \quad \hat{z} = r \cos \hat{\phi}(i)$$

où, sans perte de généralité, r = 1. L'étape E216 sera adaptée à d'autres systèmes de coordonnées sphériques et d'autres unités que les radians le cas échéant.

Dans des variantes, la dernière étape E216 de conversion de coordonnées sphériques à coordonnées cartésiennes sera optionnelle.

Dans un deuxième mode de réalisation, les étapes de décodage sont identiques à celles du premier mode de réalisation, sauf pour l'étape de détermination de l'indice $i$ en E213-1, l'étape de détermination du nombre $N_2(i)$ en E212-2, et l'étape de détermination de l'indice $j$ en E213-2.

Le décodage de l'indice $i$ en E213-1 dans un deuxième mode de réalisation se fait de façon analytique en prenant la valeur :

$$i = \left\lceil \frac{N_1 - 1}{\pi} \arccos\left( 1 - \frac{index + 0.5}{\frac{N_{tot}}{2}} \right) \right\rceil$$

en supposant que l'indice a été obtenu avec la définition au codage :

$$index = offset_1(i) + j$$

où $offset_1(i)$ est obtenu directement de façon analytique :

$$offset_1(0) = 0$$

$$offset_1(i) = \left\lfloor \left(1 - \cos\left(\frac{i-0.5}{N_1-1}\pi\right)\right) \frac{N_{tot}}{2} \right\rfloor, i = 1, \dots, N_1 - 1$$

Le décodage analytique de l'indice $i$ correspond donc à appliquer une fonction inverse de $\left\lfloor \left(1 - \cos\left(\frac{i-0.5}{N_1-1}\pi\right)\right) \frac{N_{tot}}{2} \right\rfloor$ en fonction de $i$.

Dans les variantes où $offset_1(i)$ est défini différemment la fonction inverse sera adaptée par l'homme de l'art de façon évidente.

Dans des variantes, on définira aussi :

$$offset_1(N_1) = N_{tot}$$

et on pourra appliquer le décodage de l'indice $i$ en E213-1 et de l'indice $j$ en E213-2 comme dans le premier mode de réalisation à partir des valeurs $offset_1(i)$ calculées au « fil de l'eau » ou préstockées. On perd alors l'avantage d'une détermination directe de l'indice $i$ en E213-1 par fonction inverse, mais on garde l'avantage d'une détermination analytique de $offset_1(i)$. Le nombre de niveaux à l'étape E212-2 pour le codage de l'azimut est donné comme au codage en E203-2 . On rappelle plusieurs variantes possibles :

$$N_2(i) = \max\left( 1, \left\lfloor \left(1 - \cos\left(\frac{i+0.5}{N_1-1}\pi\right)\right) \frac{N_{tot}}{2} \right\rfloor - \left\lfloor \left(1 - \cos\left(\frac{i-0.5}{N_1-1}\pi\right)\right) \frac{N_{tot}}{2} \right\rfloor \right), i = 0, \dots, N_1 - 1$$

ou

$$N_2(i) = \max\left(1, \left[\left(\cos\left(\frac{i-0.5}{N_1-1}\pi\right) - \cos\left(\frac{i+0.5}{N_1-1}\pi\right)\right)\frac{N_{tot}}{2}\right]\right), \quad i = 0, \ldots, N_1 - 1$$

ou

$$N_2(0) = N_2(N_1 - 1) = 1$$

$$N_2(i) = \left[\left(\cos\left(\frac{i-0.5}{N_1-1}\pi\right) - \cos\left(\frac{i+0.5}{N_1-1}\pi\right)\right)\frac{N_{tot}-2}{\cos\left(\frac{0.5}{N_1-1}\pi\right) - \cos\left(\frac{N_1-0.5}{N_1-1}\pi\right)}\right],$$

$$i = 1, \ldots, N_1 - 2$$

L'indice *j* de l'azimut se retrouve en E213-2 par soustraction selon la formule suivante : *j = index - offset₁(i)* soit $j = index - offset_1(i)$

On note que dans le deuxième mode de réalisation la valeur *offset₁(i)* est déterminée de façon analytique avec :

$$offset_1(0) = 0$$

$$offset_1(i) = \left[\left(1 - \cos\left(\frac{i-0.5}{N_1-1}\pi\right)\right)\frac{N_{tot}}{2}\right], i = 1, \ldots, N_1 - 1$$

On ne rappelle pas ici les variantes définies au codage, le décodage en E213-2 doit suivre la même définition de $N_2(i)$ et *offset₁(i)* qu'au codage.

Dans des variantes, il sera possible de stocker ces valeurs *offset₁(i)*.

Dans des variantes du deuxième mode de réalisation, le dictionnaire de quantification scalaire $\{\hat{\phi}(i)\}$ pourra être différent, dans ce cas on adaptera les termes $\cos\left(\frac{i+0.5}{N_1-1}\pi\right)$ et $\cos\left(\frac{i-0.5}{N_1-1}\pi\right)$ dans la définition de $N_2(i)$ et *offset₁(i)* en cos (($\hat{\phi}(i)$ + $\hat{\phi}(i+1)$)/2) et cos (($\hat{\phi}(i)$ + $\hat{\phi}(i-1)$)/2), respectivement. La détermination de l'indice *i* sera également adaptée en fonction de $\hat{\phi}(i)$.

Dans un troisième mode de réalisation, l'étape E210 consiste à démultiplexer et décoder séquentiellement les 2 indices *i, j*. Ce décodage est séquentiel car le nombre de valeurs possibles $N_2(i)$ pour l'azimut dépend de l'indice de colatitude *i*. Dans une première variante, ce démultiplexage et décodage séquentiel utilisera un décodage binaire à débit fixe pour les indices *i* et *j* sur respectivement ⌈log₂ $N_1$⌉ bits et ⌈log₂ $N_2(i)$⌉ bits où ⌈.⌉ désigne l'arrondi à l'entier supérieur, avec la convention ⌈0⌉ = 0. Le démultiplexage se fait donc de façon séquentielle pour lire un train binaire de longueur totale variable [log₂ $N_1$⌉ + [log₂ $N_2(i)$⌉ bits, on démultiplexe d'abord *i*, ce qui permet de déterminer $N_2(i)$ et ansi pouvoir démultiplexer *j*. Cela explique que les flèches entre décodage (E211-k) et démultiplexage (E210) soit à double sens.

Dans une seconde variante, les indices seront démultiplexés et décodés séquentiellement avec un décodage entropique de type Huffman ou décodage arithmétique. On pourra utiliser une estimation de la probabilité de chaque valeur (symbole) *i* comprise entre 0 et $N_1$ - 1 en déterminant la surface partielle de la sphère dans la « tranche sphérique » associée à *i* pour la colatitude, cette aire étant normalisée par l'aire totale de la sphère pour cette même coordonnée $\phi_k$, soit :

$$Prob(0) = \frac{A(0, \phi_{max})}{A_{tot}} = \left(1 - \cos\frac{\hat{\phi}(0) + \hat{\phi}(1)}{2}\right)$$

$$Prob(i) = \frac{A(\phi_{min}, \phi_{max})}{A_{tot}} = \left( \cos \frac{\hat{\phi}(i) + \hat{\phi}(i-1)}{2} - \cos \frac{\hat{\phi}(i) + \hat{\phi}(i+1)}{2} \right), i = 1, \dots, N_1 - 2$$

$$Prob(N_1 - 1) = \frac{A(\phi_{min}, \pi)}{A_{tot}} = \left( \cos \frac{\hat{\phi}(N_1 - 1) + \hat{\phi}(N_1 - 2)}{2} + 1 \right)$$

dans le cas d'un dictionnaire incluant les pôles.

Le codage de l'indice *j* pourra simplement être effectué à longueur fixe car dans ce cas l'estimation de probabilité serait équiprobable (*Prob(j|i)* = 1/$N_2(i)$ si $N_2(i)$ > 1) pour une distribution uniforme sur la sphère. Dans des variantes d'autres estimations des probabilités *Prob(i)* et *Prob(j|i)* seront possibles si la distribution de la source sur la sphère en dimension 3 est supposée non uniforme.

Dans des variantes selon l'invention, la colatitude $\phi$ sur [0, $\pi$] est remplacée par une élévation sur [-$\pi$/2, $\pi$/2]. Dans ce cas, le nombre de niveaux est exprimé en fonction du cosinus au lieu du sinus, par exemple

$$N_2(i) = \max\left(1, \left\lceil \frac{360}{\alpha} \cos \hat{\phi}(i) \right\rceil\right).$$ Il suffit dans ce cas d'appliquer la conversion correspondante (colatitude $\phi$ à

élévation par la conversion $\frac{\pi}{2} - \phi$ et vice-versa), en particulier la fonction sinus (resp. cosinus) pour le calcul du nombre de points sur chaque zone sphérique est remplacée par une fonction cosinus (resp. sinus).

La colatitude ou l'élévation pourront être dans des variantes dans une unité autre que les radians, par exemple en degrés.

Les figures 3a et 3b sont maintenant décrites pour illustrer le cas de la quantification en dimension 4.

La **figure 3a** décrit un procédé de codage d'un point d'entrée sur une sphère de dimension 4.

On omet le rayon qui est ici fixé à 1. Dans des variantes et pour certaines applications (ex : quantification d'une sous-bande en codage par transformée), il sera possible de coder un rayon séparément (correspondant à un niveau d'amplitude moyenne par sous-bande par exemple).

Pour un point d'entrée sur la sphère unité 4D (a, *b, c, d*) ou (w, x, y z) en E300, on reprend ici sans perte de généralité la définition mathématique des coordonnées sphériques (E301) en dimension 4 pour un point 4D (*a, b, c, d*):

$$a = \cos \phi_1$$

$$b = \sin \phi_1 \cos \phi_2$$

$$c = \sin \phi_1 \sin \phi_2 \cos \phi_3$$

$$d = \sin \phi_1 \sin \phi_2 \sin \phi_3$$

où $\phi_1$ est sur [0, $\pi$] ou [0, $\pi$/2] selon l'invention, $\phi_2$ sur [0, $\pi$] et $\phi_3$ sur [0, 2$\pi$].

A cette étape E301, on effectue de façon optionnelle une conversion des coordonnées sphériques, par exemple pour obtenir des angles en degrés ou pour convertir les coordonnées sphériques d'une convention à une autre.

Selon l'invention les données sphériques d'entrée sont représentées par une discrétisation quasi-uniforme (ici au sens de l'uniformité de l'aire des régions de décisions et de la répartition des points) de la sphère $\mathbb{S}_3$. La grille est ainsi définie par une quantification scalaire séquentielle des coordonnées sphériques $\phi_1$, $\phi_2$, $\phi_3$.

Dans un premier mode de réalisation, la grille est définie à partir d'une résolution angulaire $\alpha$ (en degrés) comme suit en généralisant le premier mode de réalisation du cas 3D au cas 4D. L'angle $\phi_1$ est codé par quantification scalaire uniforme en E302-1 sur $N_1$ niveaux de reconstruction sur l'intervalle [0, $\pi$] (en incluant les bornes 0 et $\pi$ comme niveaux de reconstruction):

$$\hat{\phi}_1(i) = \frac{i}{N_1 - 1}\pi, i = 0, \dots, N_1 - 1$$

où $N_1$ est défini en E303-1 par $N_1 = 2\left[\frac{90}{\alpha}\right] + 1$ pour avoir un nombre impair de niveaux $N_1$ et [.] est l'arrondi à l'entier le plus proche. La résolution angulaire est donc de $\frac{\pi}{N_1 - 1}$. En E302-2, l'angle $\phi_2$ est codé par quantification scalaire uniforme sur $N_2(i)$ niveaux sur l'intervalle [0, $\pi$] (en incluant les bornes 0 et $\pi$ comme niveaux de reconstruction):

$$\hat{\phi}_2(i,j) = \frac{j}{N_2(i) - 1}\pi, \ j = 0, \dots, N_2(i) - 1$$

où $N_2$ est défini en E303-2 par $N_2(i) = \max\left(1, \left[\frac{180}{\alpha}\sin\hat{\phi}_1(i)\right]\right)$.

Par définition $N_2(0) = 1$ et $N_2(N_1 - 1) = 1$.

Dans des variantes, on pourra s'assurer que le nombre $N_2$ donne des valeurs impaires (pour inclure l' « équateur » de la sphère 3D induite par la relation $\phi_1 = \hat{\phi}_1(i)$) quand $N_2 > 1$, soit :

$$N_2(i) = \max\left(1, 2\left[\frac{90}{\alpha}\sin\hat{\phi}_1(i)\right] + 1\right)$$

Ainsi, le nombre de niveaux de reconstruction $N_2(i)$ dépend de la valeur de $\hat{\phi}_1(i)$

En E304-3, l'angle $\phi_3$ est codé par quantification scalaire uniforme sur $N_3(i,j)$ niveaux en tenant compte de la nature cyclique de l'intervalle [0,2$\pi$] :

$$\hat{\phi}_3(i,j,k) = \delta(i,j) + \frac{k}{N_3(i,j)}2\pi, \ k = 0, \dots, N_3(i,j) - 1$$

où $N_3$ est défini en E303-3 par $N_3(i,j) = \max\left(1, \left[\frac{360}{\alpha}\sin\hat{\phi}_1(i)\sin\hat{\phi}_2(i,j)\right]\right)$ et $\delta(i, j)$ est un décalage prédéterminé selon l'invention. De façon préférentielle, comme le cas de la dimension 4 est bien plus complexe que la dimension 3, on préfèrera fixer $\delta(i)$ à des valeurs non stockées, par exemple:

- $\delta(i, (N_2(i) - 1)/2) = 0$ et $\delta(i,j) = \frac{\pi}{N_3(i,j)}$, $i = 1, \dots, N_2(i, j) - 2$, soit la moitié du pas de quantification scalaire (hors pôles et équateur).
- $\delta(i, j) = 0$

L'avantage de ces deux variantes est qu'elles ne nécessitent pas de stocker les valeurs de $\delta(i, j)$. Cependant, dans des variantes il sera possible de stocker des valeurs $\delta(i)$ obtenues par apprentissage comme dans le cas 3D.

Par définition $N_3(0,0) = 1$ et $N_3(N_1 - 1,0) = 1$ pour les dictionnaires définis préférentiellement.

Le nombre de points dans la grille $\{(\hat{\phi}_1(i), \hat{\phi}_2(i,j), \hat{\phi}_3(i,j,k))\}$ est donc :

$$N_{tot} = \sum_{i=0}^{N_1 - 1}\sum_{j=0}^{N_2(i) - 1} N_3(i,j)$$

La grille sphérique est donc définie comme le dictionnaire de quantification vectorielle sphérique suivant :

$$\left\{\left(1,\hat{\phi}_1(i),\hat{\phi}_2(i,j),\hat{\phi}_3(i,j,k)\right)\,|\,i=0,\dots,N_1-1;\,j=0,\dots,N_2(i)-1,\,k=0,\dots,N_3(i,j)-1\right\}$$

On donne dans le **tableau 5** des exemples de résolutions a (en degrés) pour obtenir un nombre de points $N_{tot}$ permettant de s'approcher au mieux d'un débit cible (en bits). Les valeurs de a sont ici indicatives et dans des variantes d'autres valeurs pourront être utilisées.

**Tableau 5**

| Débit cible (bits) | $2^R$ | $\alpha$ (en degrés) | $N_{tot}$ |
|---|---|---|---|
| 12 | 4096 | 9.3658447265625 | 4094 |
| 15 | 32768 | 4.8005828857421875 | 31599 |
| 18 | 262144 | 2.403336524963379 | 262142 |
| 21 | 2097152 | 1.2040135264396667 | 2096223 |
| 24 | 16777216 | 0.6047395206987858 | 16776471 |

Dans des variantes, on pourra directement fixer le nombre de niveaux $N_1$ (à une valeur impaire). La résolution angulaire correspond alors au pas de quantification : $\alpha=\frac{180}{N_1-1}.$ On en dérive facilement les valeurs de $N_2(i)$ et $N_3(i,j)$ :

$$N_2(i)=\max\left(1,\left[(N_1-1)\sin\hat{\phi}_1(i)\right]\right)$$

$$N_3(i,j)=\max\left(1,\left[2(N_1-1)\sin\hat{\phi}_1(i)\sin\hat{\phi}_2(i,j)\right]\right)$$

On donne dans le **tableau 6** des exemples de nombre de points $N_{tot}$ pour des valeurs $N_1$ permettant de s'approcher d'un débit cible (en bits).

**Tableau 6**

| Débit cible (bits) | $2^R$ | $N_1$ | $N_{tot}$ |
|---|---|---|---|
| 12 | 4096 | 19 | 3708 |
| 15 | 32768 | 37 | 29012 |
| 18 | 262144 | 75 | 255704 |
| 21 | 2097152 | 149 | 2054388 |
| 24 | 16777216 | 297 | 16479056 |

On décrit maintenant un algorithme de recherche optimale pour l'erreur quadratique moyenne, ce qui correspond à la longueur de la corde entre $(\phi_1, \phi_2, \phi_3)$ et $\{(\hat{\phi}_1(i), \hat{\phi}_2(i,j), \hat{\phi}_3(i,j,k))\}$, ou une quantité associée à la distance angulaire (ou distance géodésique), ce qui correspond à la longueur d'une portion de grand cercle entre ces deux points - le rayon unitaire est omis. Dans des variantes, d'autres définitions de coordonnées sphériques en dimension 4 seront possibles, y compris en permutant et/ou inversant le signe des coordonnées cartésiennes associées à l'entrée du codage et la sortie du décodage.

Dans ce qui suit, dans le calcul de la fonction arccos, on pourra s'assurer que la variable notée ici x de la fonction arccos $x$ vérifie $-1 \le x \le 1$ pour éviter des problèmes numériques, si ce n'est pas le cas on forcera $x=1$ si $x>1$ et $x=-1$ si $x<-1$.

La quantification des coordonnées sphériques et la recherche s'effectue de façon séquentielle du fait des dépendances entre coordonnées sphériques successives dans la définition de la grille. Pour éviter les divisions par zéro, selon l'invention on procède à une détermination séquentielle de $\phi_1, \phi_2, \phi_3$ :

- Etant donné un point 4D *(w, x, y, z)* en E300, supposé sur la sphère $\mathbb{S}_3$ (avec un rayon 1), on détermine d'abord $\phi_1$ en E301 comme :

$$\phi_1 = \arccos w$$

- On code d'abord l'angle $\phi_1$ en E302-1.

o Si $||w| - 1| < \varepsilon$ avec par exemple $\varepsilon = 10^{-7}$, alors on peut directement coder $\phi_1$ en 0 ($i = 0$) si $w>0$ ou $\pi$ ($i = N_1 - 1$) si $w<0$, et les angles $\phi_2$, $\phi_3$ sont codés à des valeurs par défaut pré-déterminées (nulles). Cela évite en particulier de devoir gérer les problèmes de précision numérique avec d'éventuelles division par 0 dans le calcul des coordonnées $\phi_2$, $\phi_3$. Le point décodé $(\hat{w}(m), \hat{x}(m), \hat{y}(m), \hat{z}(m))$, m =0, peut être reconstruit en convertissant $(\phi_1(i), 0, 0)$ en coordonnées cartésiennes (avec un rayon de la sphère à 1). Le codage est alors terminé. On notera qu'on a retenu dans ce cas « dégénéré » un seul candidat au lieu des 4 candidats pour le cas général.
o Sinon, si $||w| - 1| < \varepsilon$ n'es pas vérifié, pour que la recherche 4D soit optimale, il convient de retenir les 2 valeurs $\hat{\phi}_1(i)$ les plus proches (la plus proche d'indice $i_1(0)$ et la seconde plus proche $i_1(1)$) à l'étape E304-1:

$$i_1(0) = \arg \min_{i=0,\ldots,N_1-1} (\phi_1 - \hat{\phi}_1(i))^2$$

$$i_1(1) = \arg \min_{\substack{i=0,\ldots,N_1-1 \\ i \neq i_1(0)}} (\phi_1 - \hat{\phi}_1(i))^2$$

Dans des variantes, on pourra déterminer $i_1(0)$ et $i_1(1)$ par quantification directe - on donne ci-dessous un

$$\hat{\phi}_1(i) = \frac{i}{N_1-1}\pi:$$

exemple de réalisation pour le cas d'un dictionnaire scalaire uniforme de la forme

∘ si $\phi_1 = 0$, $i_1(0) = 0$ et $i_1(1) = 1$
∘ sinon :

- si $\phi_1 = \pi$, $i_1\text{-}(0) = N_1 - 1$, $i_1(1) = N_1 - 2$
- sinon : $i_1(0) = \lfloor \phi_1/s \rfloor$ et $i_1(1) = \lceil \phi_1/s \rceil$, où $\lfloor . \rfloor$ et $\lceil . \rceil$ désignent l'arrondi à l'entier inférieur et supérieur (respectivement) et s = $\dfrac{\pi}{N_1-1}$ est le pas de quantification scalaire

On obtient ainsi deux indices correspondant aux deux points du dictionnaire $\{\hat{\phi}_1(i_1(0)), \hat{\phi}_1(i_1(1))\}$ les plus proche de $\phi_1$.

- Ensuite on code en E304-2, l'angle $\phi_2$ défini en E301 par :

$$\phi_2 = \arccos b/\sqrt{b^2 + c^2 + d^2}$$

∘ Si $\left| \left| x/\sqrt{x^2 + y^2 + z^2} \right| - 1 \right| < \varepsilon$ avec par exemple $\varepsilon = 10^{-7}$, on peut directement coder $\phi_2$ en 0 ($i_2(0) = i_2(1) = 0$) si $x>0$ ou $\pi$ ($i_2(0) = N_1(i_1(0)) - 1$, $i_2(1) = N_2(i_1(1)) - 1$) si $x<0$, et $\phi_3$ est codé à une valeur par défaut pré-déterminée (nulle). On sélectionne le candidat $(\hat{w}(m), \hat{x}(m), \hat{y}(m), \hat{z}(m))$, m = 0 ou 1 le plus proche de $(w,x,y,z)$ après conversion de coordonnées sphériques à cartésiennes de $(\phi_1(i_1(0)), \phi_2(i_1(0), i_2(0)), 0)$ et $(\phi_1(i_1(1)), \phi_2(i_1(1), i_2(1)), 0)$.
Le critère de distance peut être la distance euclidienne ou le produit scalaire.
Les indices de quantification sélectionnés correspondant au point sélectionné :

$(i_1(m), i_2(m), 0)$, m = 0 ou 1. L'indice global est :

*index = offset$_1$(i$_1$(m)) + offset$_2$(i$_1$(m), i$_2$(m))* si le candidat d'indice m est le plus proche. Le codage est alors terminé. On notera qu'on a retenu dans ce cas « dégénéré » un candidat parmi deux possibles au lieu des 4 candidats pour le cas général.

$\circ$ Sinon, si $\left| \left| x/\sqrt{x^2 + y^2 + z^2} \right| - 1 \right| < \varepsilon$ n'est pas vérifié, pour que la recherche 4D soit optimale, il convient de retenir 4 candidats $\hat{\phi}_2(i_1(m) \gg 1, i_2(m))$, m = 0, ...,3 en E304-2:

$$i_2(0) = \arg \min_{i=0,...,N_2(i_1(0))-1} (\phi_2 - \hat{\phi}_2(i_1(0), i))^2$$

$$i_2(1) = \arg \min_{\substack{i=0,...,N_2(i_1(0))-1 \\ j \neq i_2(0)}} (\phi_2 - \hat{\phi}_2(i_1(0), i))^2$$

et

$$i_2(2) = \arg \min_{i=0,...,N_2(i_1(1))-1} (\phi_2 - \hat{\phi}_2(i_1(1), i))^2$$

$$i_2(3) = \arg \min_{\substack{i=0,...,N_2(i_1(1))-1 \\ j \neq i_2(2)}} (\phi_2 - \hat{\phi}_2(i_1(1), i))^2$$

Dans des variantes, on pourra déterminer $i_2(2l)$ et $i_1(2l + 1)$, pour $l$ = 0,1, par quantification directe - on donne ci-dessous un exemple de réalisation pour le cas d'un dictionnaire scalaire uniforme de la forme $\hat{\phi}_2(i,j) = \frac{j}{N_2(i)-1}\pi$:

$\circ$ si $\phi_2 = 0$, $i_2(2l) = 0$ et $i_2(2l + 1) = 1$
$\circ$ sinon :

- si $\phi_2 = \pi$, $i_2(2l) = N_1 - 1$, $i_2(2l + 1) = N_1 - 2$
- sinon : $i_2(0) = \lfloor \phi_2/s \rfloor$ et $i_2(1) = \lceil \phi_2/s \rceil$, où $\lfloor . \rfloor$ et $\lceil . \rceil$ désignent l'arrondi à l'entier inférieur et supérieur (respectivement) et s = $\frac{\pi}{N_2(i_1(l))-1}$ est le pas de quantification scalaire

- Ensuite on code en E303-3, l'angle $\phi_3$ défini en E301 par:

$$\phi_3 = \begin{cases} \arccos y/\sqrt{y^2 + z^2} & z \geq 0 \\ 2\pi - \arccos y/\sqrt{y^2 + z^2} & z < 0 \end{cases}$$

Dans des variantes, on pourra utiliser la fonction arctan sur 4 quadrants (notée arctan2):

$$\phi_3 = \arctan2 (z, y)$$

mais dans ce cas l'angle $\phi_3$ est défini dans $[-\pi, \pi]$ et il faudra adapter le dictionnaire de quantification (avec un décalage de $-\pi$).

On code en E302-3 l'angle $\phi_3$ par quantification scalaire uniforme avec un nombre de niveaux adaptatif $N_3(i,j)$ comme décrit précédemment où $i = i_1(m \gg 1)$ et $j = i_2(m)$, m = 0,..,3, pour obtenir 4 valeurs correspondantes en E304-3 $\hat{\phi}_3(i_1(m \gg 1),i_2(m), i_3(m))$, m = 0,..,3.

Cela peut se réaliser comme décrit dans le cas 3D pour l'étape E204-2, en remplaçant $\theta$ par $\phi_3$, $N_2(i)$ par $N_3(i,j)$ et $\delta(i_1(m))$ par $\delta(i_1(m \gg 1), i_2(m))$.

- On obtient à l'étape 305, quatre candidats ($2^{n-2}$ avec n=4) $(\hat{\phi}_1(i_1(m \gg 1)), \hat{\phi}_2(i_2(m)),\hat{\phi}_3(i_3(m)))$ où les indices sont donnés par les différentes combinaisons de m = 0, ...,3.
- On sélectionne en E306 le candidat $(\hat{w}(m), \hat{x}(m), \hat{y}(m), \hat{z}(m))$, m = 0 à 3, le plus proche de $(w,x,y,z)$ après conversion de coordonnées shériques à cartésiennes de $(1, \phi_1(i_1(m \gg 1)), \phi_2(i_2(m)), \phi_3(i_3(m)))$.

Les indices de quantification sélectionnés correspondent au point sélectionné :
$(i_1(m \gg 1), i_2(m), i_3(m))$.

L'indice global est obtenu en E307 sous la forme générique suivante:

$$index = offset_1(i) + offset_2(i,j) + k$$

où $i = i_1(m \gg 1)$, $j = i_2(m)$, et $k = i_3(m)$.

Ainsi l'indice global *index* est obtenu par codage séquentiel des indices de quantification séparés *i, j, k* du meilleur candidat.

Les valeurs $offset_1(i)$ et $offset_2(i,j)$ sont par exemple, comme décrit pour le cas 3D, des sommes cumulatives de cardinalité pour les indices de quantification respectifs i et j des coordonnées sphériques $\phi_1$ et $\phi_2$.

Dans des variantes on peut effectuer la dernière étape sans repasser par les coordonnées cartésiennes, en calculant une distance (géodésique) directement dans le domaine des coordonnées sphériques.

Dans des variantes, la conversion de coordonnées cartésiennes (*w, x, y, z*) à coordonnées sphériques sera optionnelle et on pourra directement coder des coordonnées sphériques.

Dans un deuxième mode de réalisation, les étapes de codage sont identiques à celles du premier mode de réalisation, sauf pour l'étape de détermination des nombres $N_2(i)$ et $N_3(i,j)$ en E303-2 et E303-3 et l'étape d'indexation en E307 qui sont spécifiques à ce deuxième mode de réalisation et détaillées ci-après.

Dans un deuxième mode de réalisation, on pourra fixer le nombre de niveaux de quantification scalaire $N_2(i)$ et $N_3(i,j)$ et les informations de cardinalité $offset_1(i)$ et $offset_2(i, j)$ de façon analytique comme décrit ci-dessous.

Dans le deuxième mode de réalisation, les dictionnaires de quantification scalaire sont définis de façon préférentielle comme:

$$\hat{\phi}_1(i) = \frac{i}{N_1-1}\pi, \quad i = 0, ...,N_1 - 1, \text{ où par exemple} \quad N_1 = 2\left[\frac{90}{\alpha}\right] + 1$$

$$\hat{\phi}_2(i,j) = \frac{j}{N_2(i)-1}\pi, \quad j = 0, ...,N_2(i) - 1, \text{ où } N_2(i) \text{ est fixé comme décrit ci-dessous}$$

$$\hat{\phi}_3(i,j,k) = \delta(i,j) + \frac{k}{N_3(i,j)}2\pi, \quad k = 0, ..., N_3(i, j) - 1, \text{ où } N_3(i,j) \text{ est fixé comme décrit ci-dessous et et } \delta(i, j) \text{ est un}$$

décalage prédéterminé selon l'invention comme dans le premier mode de réalisation. Dans des variantes, d'autres définitions seront possibles.

On rappelle que l'aire de la surface de la sphère $\mathbb{S}_3$ de rayon r est $A_{tot} = 2\pi^3 r^3$.

On donne ci-dessous l'aire partielle d'une zone sphérique « complète » définie par l'intervalle $[0,\phi_1]$ sur la première coordonnée :

$$A_1(0, \phi_1^{max}) = r^3 \int_0^{\phi_1^{max}} \int_{\phi_2=0}^{\pi} \int_{\phi_3=0}^{2\pi} \sin^2\phi_1 \sin\phi_2\, d\phi_1 d\phi_2 d\phi_3 = 2\pi r^3 \left(\phi_1^{max} - \frac{1}{2}\sin(2\phi_1^{max})\right)$$
et

l'aire partielle d'une zone sphérique « incomplète » définie par les intervalles $[0, \phi_1]$ sur la première coordonnée et $[0, \phi_2^{max}]$ sur la deuxième coordonnée :

$$A_2(0, \phi_1^{max}, 0, \phi_2^{max}) = r^3 \int_0^{\phi_1^{max}} \int_0^{\phi_2^{max}} \int_{\phi_3=0}^{2\pi} \sin^2 \phi_1 \sin \phi_2 \, d\phi_1 d\phi_2 d\phi_3$$

$$= \pi r^3 \left( \phi_1^{max} - \frac{1}{2}\sin(2\phi_1^{max}) \right) (1 - \cos \phi_2^{max})$$

Les valeurs $N_2(i)$ et $N_3(i,j)$ donnant le nombre de valeurs de la coordonnée codée $\phi_2$ et $\phi_3$ dans chaque « tranche sphérique » associée à la coordonnée $\phi_1$ codée d'indice $i$ seront fixées dans ce cas pour permettre une indexation analytique sous la forme comme décrit ci-après.

Ceci permet de définir le nombre total de points :

$$N_{tot} = \sum_{i=0}^{N_1-1} \sum_{j=0}^{N_2(i)-1} N_3(i,j)$$

Dans le deuxième mode de réalisation, on définit les valeurs $N_2$ et $N_3$ en E303-2 et E303-3 sous la forme :

$$N_2(i) = \max \left( 1,2 \left\lceil \frac{90}{\alpha} \sin \hat{\phi}_1(i) \right\rceil + 1 \right)$$

En suivant l'exemple donné précédemment pour le cas 3D on détermine : $N_3(i,j)$ =1 si $i$ = 0 ou $N_1$ - 1, ou si j = 0 ou $N_2(i)$ - 1

$$N_3(i,j) = \left[ \left( 1 - \cos\left( \frac{j+0.5}{N_2(i)-1}\pi \right) \right) \frac{N_{subtot}(i)}{2} \right] - \left[ \left( 1 - \cos\left( \frac{i-0.5}{N_2(i)-1}\pi \right) \right) \frac{N_{subtot}(i)}{2} \right]$$

autrement où

$$N_{subtot}(i) = \left[ \left( \frac{i+0.5}{N_1-1}\pi - \frac{1}{2}\sin\left( \frac{i+0.5}{N_1-1}2\pi \right) \right) \frac{N_{tot}}{\pi} \right] - \left[ \left( \frac{i-0.5}{N_1-1}\pi - \frac{1}{2}\sin\left( \frac{i-0.5}{N_1-1}2\pi \right) \right) \frac{N_{tot}}{\pi} \right]$$

pour $i$ = 1, ..., $N_1$ - 2.

Dans des variantes, d'autres méthodes de détermination de $N_{subtot}(i)$ seront possibles, cette valeur étant critique pour le bon fonctionnement du décodage.

La détermination des sommes de cardinalité en E307 est donnée par :

$$offset_1(0) = 0$$

$$offset_1(i) = \left[ \left( \frac{i-0.5}{N_1-1}\pi - \frac{1}{2}\sin\left( \frac{i-0.5}{N_1-1}2\pi \right) \right) \frac{N_{tot}}{\pi} \right], i = 1, ..., N_1 - 1$$

et

$$offset_2(i,0) = 0$$

$$offset_2(i,j) = \left[ \left( 1 - \cos\left( \frac{j-0.5}{N_2(i)-1}\pi \right) \right) \frac{N_{subtot}(i)}{2} \right],$$

Dans un troisième mode de réalisation, tous les étapes de codage E301 à E306 sont identiques et l'étape E307 consiste à coder en binaire séquentiellement les 3 indices $i_1(m^* » 2)$, $i_2(m^*)$, $i_3(m^*)$ abrégés en $i, j, k$ correspondant au meilleur candidat. Ce codage est séquentiel car les nombres de valeurs possibles $N_2(i)$ et $N_3(i,j)$ pour les coordonnées $\phi_2$ et $\phi_3$ dépendent respectivement de l'indice $i$ et des indices $i, j$. On multiplexe d'abord l'indice $i$, puis l'indice $j$ et enfin l'indice *k.*

Dans une première variante, ce codage séquentiel utilisera un codage binaire à débit fixe de *i, j, k* sur respectivement ⌈log₂ *N*₁⌉ bits, ⌈log₂ *N*₂(*i*)⌉ et ⌈log₂ *N*₃(*i, j*)⌉ bits où ⌈.⌉ désigne l'arrondi à l'entier supérieur, avec la convention ⌈0⌉ = 0. Le multiplexage se fait donc de façon séquentielle pour former un train binaire de longueur totale variable ⌈log₂ *N*₁⌉ + ⌈log₂ *N*₂(*i*)⌉ + ⌈log₂ *N*₃(*i, j*)⌉ bits. On notera que lorsque *N*₂(*i*) = 1 le codage prend 0 bit pour l'indice *j* et lorsque *N*₃(*i,j*) = 1 le codage prend 0 bit pour l'indice *k,* aucun bit n'est donc à mutiplexer dans ce cas.

Dans une seconde variante, les indices *i, j, k* seront codés séquentiellement avec un codage entropique de type Huffman ou codage arithmétique. On pourra utiliser une estimation de la probabilité de chaque valeur de l'indice *i* comprise entre 0 et *N*₁ en déterminant la surface partielle de la sphère dans la tranche associée à l'indice *i* pour la coordonnée $\phi_1$, cette aire étant normalisée par l'aire totale de la sphère pour cette même coordonnée $\phi_1$, soit :

$$Prob(0) = \frac{A_1(0, \phi_1^{max})}{A_{tot}} = \frac{1}{\pi}\left(\phi_1^{max} - \frac{1}{2}\sin(2\phi_1^{max})\right) \text{ avec } \phi_1^{max} = (\hat{\phi}_1(0) + \hat{\phi}_1(1))/2$$

$$Prob(i) = \frac{A(\phi_{min}, \phi_{max})}{A_{tot}} = \frac{1}{\pi}\left(\phi_1^{max} - \frac{1}{2}\sin(2\phi_1^{max}) - \phi_1^{min} - \frac{1}{2}\sin(2\phi_1^{min})\right), i = 1, \dots, N_1 - 2,$$

avec

$$\phi_1^{max} = (\hat{\phi}_1(i) + \hat{\phi}_1(i+1))/2 \text{ et } \phi_1^{min} = (\hat{\phi}_1(i) + \hat{\phi}_1(i+1))/2$$

$$Prob(N_1 - 1) = \frac{A(\phi_{min}, \pi)}{A_{tot}} = \frac{1}{\pi}\left(\pi - \phi_1^{min} - \frac{1}{2}\sin(2\phi_1^{min})\right), \quad \text{où} \quad \phi_1^{min} = (\hat{\phi}_1(N_1 - 2) + \hat{\phi}_1(N_1 - 1))/2$$

Le codage de l'indice *j* pourra utiliser une probabilité comme pour l'indice dans le cas 3D :

$$Prob(j = 0|i) = \frac{A(0, \phi_{max})}{A_{tot}} = \frac{1}{2}\left(1 - \cos\frac{\hat{\phi}_2(0) + \hat{\phi}_2(1)}{2}\right)$$

$$Prob(j|i) = \frac{A(\phi_{min}, \phi_{max})}{A_{tot}} = \frac{1}{2}\left(\cos\frac{\hat{\phi}_2(i) + \hat{\phi}_2(i-1)}{2} - \cos\frac{\hat{\phi}_2(i) + \hat{\phi}_2(i+1)}{2}\right), i = 1, \dots, N_2(i) - 2$$

$$Prob(j = N_2(i) - 1|i) = \frac{A(\phi_{min}, \pi)}{A_{tot}} = \frac{1}{2}\left(\cos\frac{\hat{\phi}_2(N_1 - 1) + \hat{\phi}_2(N_1 - 2)}{2} + 1\right)$$

dans le cas d'un dictionnaire incluant les pôles.

Le codage de l'indice *k* pourra simplement être effectué à longueur fixe car dans ce cas l'estimation de probabilité serait équiprobable (*Prob(k|i, j*) = 1/*N*₃(*i,j*) si *N*₃(*i,j*) > 1) pour une distribution uniforme sur la sphère. Dans des variantes d'autres estimations des probabilités *Prob(i), Prob(j|i)* et *Prob(k|i, j*) seront possibles si la distribution de la source sur la sphère en dimension 4 est supposée non uniforme.

Le procédé de décodage correspondant, pour la dimension 4, est maintenant décrit en référence à la **figure 3b.**

On décrit d'abord le décodage pour un premier mode de réalisation.

Etant donné l'indice global *index* à l'étape E310, on effectue un décodage séquentiel des trois coordonnées sphériques aux étapes E311-1, E311-2 et E311-3.

A l'étape E312-1, on détermine comme à l'étape de codage E303-1 un nombre de niveaux de quantification scalaire *N*₁.

L'indice *i* de l'angle $\phi_1$ se retrouve en E313-1 par une recherche dans la table de cardinalité :

$$i = \max\{l \in \{0, \dots, N_1 - 1\}|\ index < offset_1(l+1)\}$$

Pour ce faire, on définit la convention :

$$offset_1(N_1) = N_{tot}$$

La table de cardinalité a, dans un mode de réalisation, été stockée en mémoire en totalité ou en partie.

Dans des variantes on pourra ne pas stocker les valeurs $offset_1(i)$ et/ou $offset_2(i, j)$ mais les calculer « en ligne » (au fil de l'eau).

Dans des variantes on pourra ne stocker ou calculer « en ligne » (au fil de l'eau) que $(N_1 - 1)/2 + 1$ valeurs de la table $offset_1(i)$. Le même principe s'applique à $offset_2(i, j)$.

On reconstruit l'angle $\phi_1$ décodé en E314-1 comme :

$$\hat{\phi}_1(i) = \frac{i}{N_1 - 1}\pi$$

En E312-2, on calcule le nombre de niveaux de reconstruction par exemple $N_2(i) = \max\left(1, \left\lceil \frac{360}{\alpha} \sin \hat{\phi}_1(i) \right\rceil\right)$. Dans des variantes, d'autres dictionnaires pourront être définis comme au codage.

L'indice $j$ de de l'angle $\phi_2$ se retrouve en E313-2 par soustraction selon $index \leftarrow index - offset_1(i)$ et en effectuant une recherche dans une autre table de cardinalité cumulative :

$$j = \max\{l \in \{0, \dots, N_2(i) - 1\}|\ index < offset_2(i, l+1)\}$$

On reconstruit l'angle $\phi_2$ décodé en E314-2 comme :

$$\hat{\phi}_2(i, j) = \frac{j}{N_2(i) - 1}\pi$$

On calcule en E312-3 le nombre de niveaux de reconstruction $N_3(i,j) = \max\left(1, \left\lceil \frac{360}{\alpha} \sin \hat{\phi}_1(i) \sin \hat{\phi}_{2,i}(j) \right\rceil\right)$.

L'indice $k$ de l'angle $\phi_3$ se retrouve en E313-3 par soustraction selon $k = index - offset_2(i,j)$. On détermine la valeur du décalage $\delta(i, j)$, on reconstruit ensuite l'angle $\phi_3$ en E314-3 comme :

$$\hat{\phi}_3(i, j, k) = \delta(i, j) + \frac{k}{N_3(i,j)} 2\pi, \quad k = 0, \dots, N_3(i,j)\text{-}1$$

On obtient ainsi les coordonnées sphériques $(\hat{\phi}_1(i), \hat{\phi}_2(i,j), \hat{\phi}_3(i,j,k))$ du point décodé, en E315. A cette étape E315, on effectue de façon optionnelle une conversion des coordonnées sphériques, par exemple pour convertir les angles décodés en degrés ou adapter la convention à une définition des coordonnées sphériques.

En E316, on peut ensuite reconstruire le point décodé comme :

$$\hat{w} = \cos \hat{\phi}_1(i)$$

$$\hat{x} = \sin \hat{\phi}_1(i) \cos \hat{\phi}_2(i, j)$$

$$\hat{y} = \sin \widehat{\phi}_1(i) \sin \widehat{\phi}_2(i,j) \cos \widehat{\phi}_3(i,j,k)$$

$$\hat{z} = \sin \phi_1 \sin \widehat{\phi}_2(i,j) \sin \widehat{\phi}_3(i,j,k)$$

L'étape E316 sera adaptée à d'autres systèmes de coordonnées sphériques et d'autres unités que les radians le cas échéant.

Dans des variantes, la dernière étape de conversion de coordonnées sphériques à coordonnées cartésiennes sera optionnelle.

Dans un deuxième mode de réalisation, les étapes de décodage sont identiques à celles du premier mode de réalisation, sauf pour l'étape de détermination des indices $i_1$, $i_2$ et $i_3$, noté ici *i, j, k,* en E313-1, E313-2 et E313-3 et l'étape de détermination du nombre $N_3(i,j)$ en E313-3. Le décodage de l'indice i en E313-1 dans un deuxième mode de réalisation peut se faire de façon analytique en prenant la valeur :

$$i = \left\lceil \frac{N_1 - 1}{\pi} f^{-1}\left( \frac{index + 0.5}{\frac{N_{tot}}{\pi}} \right) \right\rceil$$

où

$$f(x) = x - \frac{1}{2} \sin 2x \text{ pour } x \epsilon [0, \pi]$$

et $f^{-1}(x)$ est l'inverse de cette fonction $f(x)$.

Cependant, il n'existe pas de solution analytique évidente pour $f^{-1}(x)$.

Dans un mode de réalisation, on pourra déterminer stocker les valeurs de $f(x)$ pour x = *i.* $\pi/(N_f$ - 1) où $N_f$ est par exemple fixe à 10000. En pratique, il faut une précision numérique suffisante pour que le décodage de *i* fonctionne correctement.

Dans un autre mode de réalisation, on utilisera une approximation par morceaux par série de Taylor. On divise l'intervalle [0, $\pi$/2 en plusieurs sous-intervalles et on approxime $f^{-1}(x)$ par exemple sous la forme :

$$f(x) \approx \begin{cases} \frac{2}{3} x^3, & x \epsilon [0, \pi/12] \\ \frac{\pi}{12} - \frac{\sqrt{3}}{4} + x/2, & x \epsilon [0, \frac{3\pi}{12}] \\ \frac{\pi}{8} - \frac{1}{2} + x, & x \epsilon [\frac{3\pi}{12}, \frac{3\pi}{4}] \\ 2x - \frac{\pi}{2}, & x \epsilon [\frac{3\pi}{4}, \frac{\pi}{2}] \end{cases}$$

et on ajoute la propriété $f(\pi - x) = \pi - f(x)$. On peut ainsi facilement déterminer $f^{-1}(x)$ par morceaux en inversant simplement chacune terme sur chaque sous-intervalle, avec la propriété $f^{-1}(\pi - x) = \pi - f^{-1}(x)$. Dans des variantes il sera possible d'utiliser plus de sous-intervalles.

Le nombre de niveaux à l'étape E312-2 pour le décodage de $\hat{\phi}_2(i,j)$ est donné par exemple par :

$$N_2(i) = \max\left( 1, 2\left\lceil \frac{90}{\alpha} \sin \hat{\phi}_1(i) \right\rceil + 1 \right)$$

L'indice j se retrouve en E313-2 après avoir mis à jour l'indice global:
*index ← index - offset$_1$(i)*
de façon analytique comme dans le cas 3D selon la formule suivante :

$$j = \left\lceil \frac{N_2(i) - 1}{\pi} \arccos\left(1 - \frac{index + 0.5}{\frac{N_{subtot}(i)}{2}}\right) \right\rceil$$

où

$$N_{subtot}(i) = \left\lceil \left(\frac{i + 0.5}{N_1 - 1}\pi - \frac{1}{2}\sin\left(\frac{i + 0.5}{N_1 - 1}2\pi\right)\right)\frac{N_{tot}}{\pi} \right\rceil - \left\lceil \left(\frac{i - 0.5}{N_1 - 1}\pi - \frac{1}{2}\sin\left(\frac{i - 0.5}{N_1 - 1}2\pi\right)\right)\frac{N_{tot}}{\pi} \right\rceil$$

pour $i = 1,...,N_1 - 2$.

Dans des variantes, d'autres méthodes de détermination de $N_{subtot}(i)$ seront possibles, cette valeur étant critique pour le bon fonctionnement du décodage.

Si $i = 0$ ou $i = N_1 - 1$, le décodage de l'indice $j$ en E313-2 se réduit à fixer $j = 0$.

Le nombre de niveaux à l'étape E312-3 pour le décodage de $\hat{\phi}_3(i, j, k)$ est donné par : $N_3(i,j) = 1$ si $i = 0$ ou $N_1 - 1$, ou si $j = 0$ ou $N_2(i) - 1$

$$N_3(i,j) = \left\lceil \left(1 - \cos\left(\frac{j+0.5}{N_2(i)-1}\pi\right)\right)\frac{N_{subtot}(i)}{2} \right\rceil - \left\lceil \left(1 - \cos\left(\frac{i-0.5}{N_2(i)-1}\pi\right)\right)\frac{N_{subtot}(i)}{2} \right\rceil$$

autrement.

L'indice $k$ se retrouve en E313-3 par soustraction selon la formule suivante : $k = index - offset_2(i, j)$ avec

$$offset_2(i, 0) = 0$$

$$offset_2(i, j) = \left\lceil \left(1 - \cos\left(\frac{j - 0.5}{N_2(i) - 1}\pi\right)\right)\frac{N_{subtot}(i)}{2} \right\rceil,$$

Là encore, si $i = 0$ ou $i = N_1 - 1$, ou si $j = 0$ ou $j = N_2(i) - 1$, le décodage de l'indice $k$ en E313-3 se réduit à fixer k = 0.

Dans un troisième mode de réalisation, l'étape E310 consiste à démultiplexer et décoder séquentiellement les 3 indices $i, j, k$. Ce codage est séquentiel car les nombres de valeurs possibles $N_2(i)$ et $N_3(i,j)$ pour les coordonnées $\phi_2$ et $\phi_3$ dépendent respectivement de l'indice $i$ et des indices $i, j$. Dans une première variante, ce démultiplexage et décodage séquentiel utilisera un décodage binaire à débit fixe pour les indices $i, j, k$ sur respectivement $\lceil\log_2 N_1\rceil$ bits, $\lceil\log_2 N_2(i)\rceil$ et $\lceil\log_2 N_3(i,j)\rceil$ bits où $\lceil.\rceil$ désigne l'arrondi à l'entier supérieur, avec la convention $\lceil0\rceil = 0$. Le démultiplexage se fait donc de façon séquentielle pour lire un train binaire de longueur variable $\lceil\log_2 N_1\rceil + \lceil\log_2 N_2(i)\rceil + \lceil\log_2 N_3(i, j)\rceil$ bits.

Dans une seconde variante, les indices seront démultiplexés et décodés séquentiellement avec un décodage entropique de type Huffman ou décodage arithmétique. On pourra utiliser une estimation de la probabilité de chaque valeur (symbole) $i$ comprise entre 0 et $N_1 - 1$ en déterminant la surface partielle de la sphère dans la tranche associée à l'indice i pour la coordonnée $\phi_1$, cette aire étant normalisée par l'aire totale de la sphère pour cette même coordonnée $\phi_1$, soit :

$$Prob(0) = \frac{A_1(0,\phi_1^{max})}{A_{tot}} = \frac{1}{\pi}\left(\phi_1^{max} - \frac{1}{2}\sin(2\phi_1^{max})\right) \text{ avec } \phi_1^{max} = (\hat{\phi}_1(0) + \hat{\phi}_1(1))/2$$

$$Prob(i) = \frac{A(\phi_{min},\phi_{max})}{A_{tot}} = \frac{1}{\pi}\left(\phi_1^{max} - \frac{1}{2}\sin(2\phi_1^{max}) - \phi_1^{min} - \frac{1}{2}\sin(2\phi_1^{min})\right), i = 1,...,N_1 - 2,$$

avec

$$\phi_1^{max} = (\hat{\phi}_1(i) + \hat{\phi}_1(i + 1))/2 \text{ et } \phi_1^{min} = (\hat{\phi}_1(i) + \hat{\phi}_1(i + 1))/2$$

$$Prob(N_1 - 1) = \frac{A(\phi_{min}, \pi)}{A_{tot}} = \frac{1}{\pi}\left(\pi - \phi_1^{min} - \frac{1}{2}\sin\left(2\phi_1^{min}\right)\right), \quad \text{où} \quad \phi_1^{min} = (\hat{\phi}_1(N_1 - 2) + \hat{\phi}_1(N_1 - 1))/2$$

Le décodage de l'indice j pourra utiliser une probabilité comme pour l'indice dans le cas 3D :

$$Prob(j = 0|i) = \frac{A(0, \phi_{max})}{A_{tot}} = \frac{1}{2}\left(1 - \cos\frac{\hat{\phi}_2(0) + \hat{\phi}_2(1)}{2}\right)$$

$$Prob(j|i) = \frac{A(\phi_{min}, \phi_{max})}{A_{tot}} = \frac{1}{2}\left(\cos\frac{\hat{\phi}_2(i) + \hat{\phi}_2(i-1)}{2} - \cos\frac{\hat{\phi}_2(i) + \hat{\phi}_2(i+1)}{2}\right), i$$
$$= 1, \ldots, N_2(i) - 2$$

$$Prob(j = N_2(i) - 1|i) = \frac{A(\phi_{min}, \pi)}{A_{tot}} = \frac{1}{2}\left(\cos\frac{\hat{\phi}_2(N_1 - 1) + \hat{\phi}_2(N_1 - 2)}{2} + 1\right)$$

dans le cas d'un dictionnaire incluant les pôles.

Le décodage de l'indice *k* pourra simplement être effectué à longueur fixe car dans ce cas l'estimation de probabilité serait équiprobable (*Prob(k|i, j)* = *1/N_3(i, j)* si $N_3(i,j)$ > 1) pour une distribution uniforme sur la sphère. Dans des variantes d'autres estimations des probabilités *Prob(i), Prob(j|i)* et *Prob(k|i, j)* seront possibles si la distribution de la source sur la sphère en dimension 4 est supposée non uniforme.

Dans des variantes, une autre définition des coordonnées sphériques sur pourra être utilisé et l'invention sera adaptée en conséquence (par exemple en changeant des termes cosinus en sinus, sinus en cosinus, arccos en arcsin, etc., le cas échéant).

Dans des variantes, les angles pourront être dans une autre unité, par exemple en degrés.

La **figure 4** illustre un mode de réalisation d'un codeur comportant un dispositif de codage mettant en œuvre le procédé de codage tel que décrit ci-dessus pour la dimension 3.

Le signal d'entrée S est ici un signal ambisonique d'ordre 1, avec des canaux typiquement organisés dans l'ordre W Y Z X (selon la convention ACN) avec une normalisation par exemple selon la convention SN3D. Le signal est décomposé en trames, qui sont supposées ici de 20 ms, par exemple 960 échantillons par canal à 48 kHz.

Dans cet exemple de réalisation, le codage est paramétrique et consiste à une réduction du nombre de canaux (bloc 400), où on ne code (bloc 410) ici qu'un seul canal par exemple avec le codec 3GPP EVS à 24.4 kbit/s, et à un codage de métadonnées spatiales, qui correspondent ici à des paramètres de type DiRAC (DoA et « diffuseness »).

Le signal d'entrée est décomposé (bloc 420) en sous-bandes fréquentielles par une transformée de Fourier avec 50% de recouvrement et un fenêtrage sinusoïdal connu de l'état de l'art. On suppose ici une découpe en bandes de Bark, par exemple 20 sous-bandes réparties en fréquences selon l'échelle Bark connues de l'état de l'art.

On notera qu'il est important d'aligner temporellement le codage du signal downmix et l'application des données spatiales, la compensation temporelle adéquate n'est pas détaillée ici elle dépend du retard de codage (bloc 410) et de l'analyse temps/fréquence (bloc 420). Dans des variantes d'autres types de bancs de filtres pourront être utilisés.

Dans chaque trame et chaque sous-bande on estime deux paramètres (bloc 430) - pour alléger les notations on n'utilise pas d'indice de trame ni de sous-bandes pour les différents paramètres: la direction de la source dominante (DoA) en termes d'élévation ($\phi$) et d'azimut ($\theta$), et la « diffuseness » $\psi$ comme décrit dans l'article précité de Pulkki. L'estimation de la DoA s'effectue en général par le biais du vecteur intensité active avec une moyenne temporelle, dans des variantes on pourra mettre en œuvre d'autres méthodes d'estimation de $\phi$, $\theta$, $\psi$.

La DoA est codée dans chaque trame et chaque sous-bande; selon l'invention ce codage prend comme entrée directement les coordonnées sphériques par sous-bandes (1, $\phi$, $\theta$). A noter qu'on suppose ici - sans perte de généralité - que $\phi$ représente une élévation en degrés (entre -90 et +90 degrés) et non une colatitude, et $\theta$ est un azimut entre -180 et 180 degrés. On pourra par exemple prendre une grille avec un débit cible de 16 bits pour avoir une résolution inférieure à 1 degrés. Le codage dans le bloc 440 suit les étapes de la figure 2a.

Dans le mode de réalisation privilégié on utilise une mise en œuvre minimisant le stockage pour l'indexation avec le deuxième mode de réalisation de la quantification vectorielle sphérique en dimension 3.

On commence en E201 par adapter la définition des coordonnées sphériques pour revenir à une colatitude $\phi$ en radians sur [0, $\pi$] et un azimut $\theta$ en radians sur [0, $2\pi$]:

$$\phi \leftarrow \frac{\pi}{2} - \frac{\phi}{180}\pi$$

$$\theta \leftarrow mod_{2\pi}\left(\frac{\theta}{180}\pi\right)$$

où $mod_{2\pi}(\theta)$ est l'opération modulo $2\pi$ ramenant sur $[0,2\pi]$ qui peut ici se simplifier en : si $\theta < 0$, $mod_{2\pi}(\theta) = \theta + 2\pi$

On part de $N_{tot}$ = 65536 (soit $2^{16}$) et

$$\hat{\phi}(i) = \frac{i}{N_1 - 1}\pi, i = 0, \ldots, N_1 - 1$$

où $N_1$ est défini en E203-1 par $N_1$ = 229, et

$$\hat{\theta}(i,j) = \delta(i) + \frac{j}{N_2(i)}2\pi, \ \ j = 0, \ldots, N_2(i)\text{-}1$$

où $\delta(i)$ est donné par :

$$\delta((N_1 - 1)/2) = \delta(0) = \delta(N_1) = 0$$

$$\delta(i) = \delta\left(i + \frac{N_1 - 1}{2}\right) = \frac{\pi}{N_2(i)}, \ i = 1, \ldots, \frac{N_1 - 1}{2} - 1$$

et $N_2$ est défini en E203-2 par

$$N_2(i) = \max\left(1, \left[\left(1 - \cos\left(\frac{i+0.5}{N_1-1}\pi\right)\right)\frac{N_{tot}}{2}\right] - \left[\left(1 - \cos\left(\frac{i-0.5}{N_1-1}\pi\right)\right)\frac{N_{tot}}{2}\right]\right), \ i = 0, \ldots, N_1 - 1$$

Le codage de $\phi$ et $\theta$ s'effectue comme décrit en référence à la figure 2a, avec au plus deux candidats. L'indice global sur 16 bits (de 0 à 65535) est déterminé ici selon le deuxième mode de réalisation :

$$index = offset_1(i) + j$$

où $offset_1(i)$ est obtenu directement de façon analytique :

$$offset_1(0) = 0$$

$$offset_1(i) = \left[\left(1 - \cos\left(\frac{i-0.5}{N_1-1}\pi\right)\right)\frac{N_{tot}}{2}\right], i = 1, \ldots, N_1 - 1$$

Dans des variantes, on pourra utiliser le premier mode de réalisation de la quantification vectorielle sphérique en dimension 3 avec :

-   $$N_1 = 2\left[\frac{90}{\alpha}\right] + 1$$  avec $\alpha$ = 0.7929811477661133 ce qui donne $N_1$ = 227

$$N_2(i) = \max\left(1, \left[\frac{360}{\alpha} \sin \hat{\phi}(i)\right]\right)$$

-

$$\delta((N_1 - 1)/2) = \delta(0) = \delta(N_1) = 0, et\ \delta(i) = \delta\left(i + \frac{N_1 - 1}{2}\right) = \frac{\pi}{N_2(i)}, i = 1, ..., \frac{N_1 - 1}{2} - 1$$

L'indexation peut être réalisée avec les valeurs $offset_1(i)$ stockées et listées comme suit pour $i = 0,...,N_1$ :
{ 0, 1, 7, 20, 39, 64, 96, 134, 178, 228, 285, 348, 417, 492, 574, 662, 756, 856, 962, 1074, 1193, 1318, 1449, 1586, 1729, 1878, 2033, 2194, 2360, 2532, 2710, 2894, 3084, 3279, 3480, 3687, 3899, 4117, 4340, 4569, 4803, 5043, 5288, 5538, 5793, 6054, 6320, 6591, 6867, 7148, 7434, 7725, 8021, 8321, 8626, 8936, 9250, 9569, 9892, 10220, 10552, 10888, 11228, 11573, 11922, 12275, 12632, 12992, 13356, 13724, 14096, 14471, 14850, 15232, 15618, 16007, 16399, 16794, 17192, 17593, 17997, 18404, 18814, 19226, 19641, 20059, 20479, 20901, 21326, 21753, 22182, 22613, 23046, 23481, 23918, 24356, 24796, 25237, 25680, 26124, 26569, 27016, 27464, 27913, 28363, 28813, 29264, 29716, 30168, 30621, 31074, 31528, 31982, 32436, 32890, 33344, 33798, 34252, 34705, 35158, 35610, 36062, 36513, 36963, 37413, 37862, 38310, 38757, 39202, 39646, 40089, 40530, 40970, 41408, 41845, 42280, 42713, 43144, 43573, 44000, 44425, 44847, 45267, 45685, 46100, 46512, 46922, 47329, 47733, 48134, 48532, 48927, 49319, 49708, 50094, 50476, 50855, 51230, 51602, 51970, 52334, 52694, 53051, 53404, 53753, 54098, 54438, 54774, 55106, 55434, 55757, 56076, 56390, 56700, 57005, 57305, 57601, 57892, 58178, 58459, 58735, 59006, 59272, 59533, 59788, 60038, 60283, 60523, 60757, 60986, 61209, 61427, 61639, 61846, 62047, 62242, 62432, 62616, 62794, 62966, 63132, 63293, 63448, 63597, 63740, 63877, 64008, 64133, 64252, 64364, 64470, 64570, 64664, 64752, 64834, 64909, 64978, 65041, 65098, 65148, 65192, 65230, 65262, 65287, 65306, 65319, 65325, 65326}

D'autres variantes de l'invention pourront être mises en œuvre pour coder la DoA.

Dans des variantes, les définitions de $\hat{\phi}(i)$, $\hat{\alpha}(i, j)$, $\delta(i)$ et $N_2(i)$ pourront être adaptés de façon évidente si les angles $\phi$, $\theta$ sont donnés en degrés et correspondent à l'élévation et l'azimut. Dans ce cas la conversion en E201 ne sera pas nécessaire.

La « diffuseness » $\psi$ est un paramètre compris entre 0 et 1, elle est ici codée (bloc 450) par quantification scalaire uniforme sur, par exemple, 6 bits (64 valeurs) en l'arrondissant à la valeur la plus proche :

$$\hat{\psi} = 63.ind$$

où l'indice de quantification $ind$ = 0, ...,63 est :

$$ind = [\psi/63]$$

Dans des variantes, différentes méthodes de codage, comme une quantification scalaire uniforme ou non-uniforme, ou une quantification vectorielle codant conjointement $\psi$ dans plusieurs sous-bandes, avec ou sans codage entropique, pourront être utilisées.

Le budget de codage des métadonnées spatiales est donc 20 x (16+6)=440 bits par trame, soit 22 kbit/s.

Le train binaire du codage du signal downmix et les paramètres spatiaux codés sont multiplexés (bloc 460) pour former le train binaire de chaque trame. Le débit de codage est ici dans cet exemple de réalisation de 46.4 kbit/s.

Dans des variantes, d'autres débits de codage de la DoA seront possibles.

La **figure 5** illustre un mode de réalisation d'un décodeur comportant un dispositif de décodage mettant en œuvre le procédé de décodage tel que décrit ci-dessus pour la dimension 3.

Après démultiplexage du train binaire (bloc 500), on décode le signal downmix (bloc 510), ici par décodage EVS à 24.4 kbit/s.

Les paramètres spatiaux sont décodés (blocs 550 et bloc 570).

Le décodage dans le bloc 550 suit les étapes de la figure 2b.

Dans le mode de réalisation privilégié, l'élévation sera donc décodée selon le deuxième mode de réalisation de la quantification vectorielle en dimension 3 à partir de l'indication *index* pour chaque trame et sous-bande (bloc 550) comme deux sous-indices $i$ et $j$ selon le deuxième mode de réalisation, avec $N_{tot}$ = 65536 en E213-1:

$$i = \left\lceil \frac{N_1 - 1}{\pi} \arccos\left(1 - \frac{index + 0.5}{\frac{N_{tot}}{2}}\right) \right\rceil$$

Le nombre de niveaux en E212-2 est :

$$N_2(i) = \max\left(1, \left\lceil\left(1 - \cos\left(\frac{i + 0.5}{N_1 - 1}\pi\right)\right)\frac{N_{tot}}{2}\right\rceil - \left\lceil\left(1 - \cos\left(\frac{i - 0.5}{N_1 - 1}\pi\right)\right)\frac{N_{tot}}{2}\right\rceil\right)$$

La colatitude est décodée comme :

$$\hat{\phi}(i) = \frac{i}{N_1 - 1}\pi, i = 0, \ldots, N_1 - 1$$

L'indice *j* de l'azimut se retrouve en E213-2: *j = index - offset$_1$(i)*

L'azimut est décodé comme :

$$\hat{\theta}(i, j) = \delta(i) + \frac{j}{N_2(i)}2\pi, \quad j = 0, \ldots, N_2(i) - 1$$

où $\delta(i)$ est identique à la définition dans le bloc 440. On rajoute également en E215 une étape de conversion inverse :

$$\hat{\phi} \leftarrow \left(\frac{\pi}{2} - \hat{\phi}(i)\right)\frac{180}{\pi}$$

$$\hat{\theta} \leftarrow \frac{\hat{\theta}(i,j)}{\pi}180 \quad \text{puis } \hat{\theta} \leftarrow \hat{\theta} - 360 \text{ si } \hat{\theta} > 180$$

Dans une variante de réalisation, les paramètres DoA seront décodés suivant le premier mode de réalisation de la quantification vectorielle en dimension 3 selon l'invention, avec en particulier les mêmes définitions de $N_1$, $N_2(i)$, $\delta(i)$ et *offset$_1$(i)* qu'au codeur.

D'autres variantes de l'invention pourront être mises en œuvre pour coder la DoA. Dans des variantes, les définitions de $\hat{\phi}(i)$, $\hat{\theta}(i, j)$, $\delta(i)$ et $N_2(i)$ pourront être adaptés de façon évidente si les angles $\phi$, $\hat{\theta}$ sont donnés en degrés et correspondent à l'élévation et l'azimut. Dans ce cas la conversion en E215 ne sera pas nécessaire.

Ce signal décodé $\hat{s}$ est ensuite décomposé en temps/fréquences (bloc 520 identique au bloc 420) pour le spatialiser comme une source ponctuelle (onde plane) dans le bloc (bloc 560) qui génère un signal ambisonique d'ordre 1 spatialisé comme:

$$X(\hat{\phi}, \hat{\theta}) = \begin{bmatrix} 1 \\ \cos\hat{\phi}\cos\hat{\theta} \\ \cos\hat{\phi}\sin\hat{\theta} \\ \sin\hat{\phi} \end{bmatrix} . \hat{s}$$

en notant que les angles décodés (élévation $\hat{\phi}$ et azimut $\hat{\theta}$) sont en degrés.

A partir du signal décodé on effectue une décorrélation (bloc 530) pour avoir une version « diffuse » (correspondant à une largeur de source maximale) ; cette décorrélation réalise également une augmentation du nombre de canaux pour obtenir en sortie du bloc 530 un signal ambisonique d'ordre 1 (au format ACN, SN3D par exemple) avec 4 canaux (W, Y, Z, X). Le signal décorrélé est décomposé en temps/fréquences (bloc 540).

On ne détaille pas ici la réalisation de la décorrélation, on pourra prendre des filtres décorrélateurs passe-tout mis en œuvre par convolution par des réponses impulsionnelles prédéterminées ; dans des variantes, on pourra également intervertir les blocs 530 et 540 pour avoir une décorrélation (et augmentation du nombre de canaux) dans le domaine fréquentiel. Les signaux issus des blocs 540 et 560 sont combinés (bloc 575) par sous-bande, après application d'un facteur d'échelle (blocs 573 et 574) obtenus à partir de la « diffuseness » décodée (blocs 571 et 572) ; ce mélange adaptatif permet de « doser » la largeur de source et le caractère diffus du champ sonore dans chaque sous-bande. Le signal mélangé est converti en temporel (bloc 580) par transformée de Fourier inverse et addition-recouvrement. Dans des variantes d'autres types de bancs de filtres pourront être utilisés.

On notera qu'il est important d'aligner temporellement le décodage et la décorrélation du signal downmix et l'application des données spatiales, les compensations temporelles adéquates ne sont pas détaillées ici elles dépendent du retard de décodage (bloc 510) et de l'analyse temps/fréquence (blocs 520, 540) et de la décorrélation (bloc 530).

La **figure 6** illustre un mode de réalisation d'un codeur comportant un dispositif de codage mettant en œuvre le procédé de codage tel que décrit ci-dessus pour la dimension 4.

Dans ce un mode de réalisation de l'invention la quantification d'un double quaternion est effectué comme décrit précédemment pour le codage sur la sphère $\mathbb{S}_3$.

La figure 6 illustre une méthode de codage dans le cas où la représentation par quaternions est utilisée pour le codage des matrices de rotation. Le codage se déroule en plusieurs étapes

- Les signaux des canaux (par exemple W, Y, Z, X pour le cas FOA) sont supposés être sous une forme matricielle X avec une matrice $n \times L$ (pour $n$ canaux ambisoniques (ici 4) et L échantillons par trame). On peut optionnellement pré-traiter ces canaux par exemple par un filtre passe-haut.
- On applique à ces signaux une analyse en composantes principales PCA ou de façon équivalente une transformée de Karhunen Loeve (KLT), avec estimation de matrice de covariance (bloc 600) et décomposition en valeurs propres notée EVD pour « *Eigen Value Decomposition* » en anglais (bloc 610), pour obtenir des valeurs propres et une matrice de vecteurs propres à partir d'une matrice de covariance des $n$ signaux.
- La matrice de vecteurs propres, obtenue pour la trame courante t, subit des permutations signées (bloc 620) pour qu'elle soit la plus alignée possible avec la matrice de même nature de la trame précédente t - 1, afin d'assurer une cohérence maximale entre les matrices entre deux trames. On s'assure dans le bloc 620 en outre que la matrice de vecteurs propres de la trame courante t, ainsi corrigée par permutations signées, représente bien l'application d'une rotation.
- La matrice de vecteurs propres pour la trame courante t (qui est une matrice de rotation) est convertie dans un domaine approprié de paramètres de quantification (bloc 630). On prend ici le cas d'une conversion en 2 quaternions unitaires pour une matrice 4x4 ; on aurait un seul quaternion unitaire pour une matrice 3x3 dans le cas ambisonique planaire.

Puis ces paramètres sont codés selon une méthode de codage telle que décrite en référence à la figure 2a (bloc 640) sur un nombre de bits alloués à la quantification de paramètres.

- La trame courante est découpée en sous-trames, dont le nombre peut être fixe ou adaptatif - dans ce dernier cas, ce nombre peut être déterminé en fonction des informations issues de l'analyse PCA/KLT et il peut être transmis de façon optionnelle (bloc 650). La représentation par quaternion codée est interpolée (bloc 660) par sous-trames successives depuis la trame précédente $t$ - 1 jusqu'à la trame courante $t$, afin de lisser dans le temps la différence entre matriçage inter-trames. Les quaternions interpolés dans chaque sous-trame sont convertis en matrices de rotation (bloc 662) puis on applique les matrices résultantes de rotation décodées et interpolées (bloc 670). Dans chaque trame, on obtient en sortie du bloc 670 une matrice $n \times (L/K)$ représentant chacune des $K$ sous-trames des signaux des canaux ambisoniques pour décorréler autant que possible ces signaux avant le codage (par exemple un codage multi-mono). Une allocation binaire aux canaux séparés est également effectuée.

Ainsi dans le bloc 640 de quantification, on quantifie les quaternions unitaires obtenus en E630. On présente un premier mode de réalisation basé sur le premier mode de réalisation de la quantification vectorielle en dimension 4.

Etant donnés deux quaternions unitaires $q_i = (a_i, b_i, c_i, d_i)$, $i$ = 1, 2, on force d'abord un premier quaternion, par exemple $q_1$, à avoir une composante positive, ici la composante réelle ($a_1$). Pour ce faire on vérifie si la composante réelle $a_i$ est négative. Si c'est le cas, on remplace les deux quaternions $q_1$ et $q_2$ par leurs opposés $-q_1$ et $-q_2$. On rappelle que cette opération ne change pas la matrice de rotation 4D associée au double quaternion.

Ces deux quaternions unitaires $q_1$ et $q_2$ sont codés suivant le premier mode de réalisation de la quantification vectorielle sphérique sur la sphère $\mathbb{S}_3$, avec les paramètres suivants :

- $$N_1 = 2 \left\lceil \frac{90}{\alpha} \right\rceil + 1$$ avec a = 2 degrés, ce qui donne $N_1$ = 91

$$N_2(i) = \max\left(1, \left[\frac{180}{\alpha} \sin \hat{\phi}_1(i)\right]\right),$$ ce qui donne $N_2(i) = \max(1,[90 \sin(\hat{\phi}_1(i)])$

$$N_3(i,j) = \max\left(1, \left[\frac{360}{\alpha} \sin \hat{\phi}_1(i) \sin \hat{\phi}_2(i,j)\right]\right),$$ ce qui donne $N_3(i,j) = \max(1,[180 \sin \hat{\phi}_1(i) \sin \hat{\phi}_2(i,j)])$

On considère ici le cas préférentiel des dictionnaires de quantification scalaires uniformes pour $\hat{\phi}_1(i)$, $\hat{\phi}_2(i,j)$ et $\hat{\phi}_3(i,j,k)$.

L'indexation peut être réalisée avec les informations de cardinalité $offset_1(i)$ stockées et listées comme suit pour $i = 0, ..., N_1$ :

{ 0, 1, 9, 61, 163, 359, 685, 1125, 1747, 2519, 3521, 4713, 6183, 7883, 9809, 12093, 14633, 17575, 20807, 24343, 28181, 32487, 37121, 42097, 47405, 53057, 59061, 65421, 72137, 79205, 86625, 94415, 102345, 110629, 119263, 128017, 137097, 146515, 156043, 165637, 175551, 185515, 195535, 205837, 216183, 226545, 236911, 247273, 257619, 267921, 277941, 287905, 297819, 307413, 316941, 326359, 335439, 344193, 352827, 361111, 369041, 376831, 384251, 391319, 398035, 404395, 410399, 416051, 421359, 426335, 430969, 435275, 439113, 442649, 445881, 448823, 451363, 453647, 455573, 457273, 458743, 459935, 460937, 461709, 462331, 462771, 463097, 463293, 463395, 463447, 463455, 463456}

On ne détaille pas ici les informations de cardinalité $offset_2(i, j)$ par souci de concision. Dans des variantes, on pourra stocker les informations de cardinalité $offset_2(i, j)$ dans une table unidimensionnelle avec d'abord $offset_2(0,0)$, puis $offset_2(1, j)$, $j = 0, ...,N_2(1)$, etc. - à cause de la symétrie par rapport à l'équateur (d'indice $i = 45$ pour l'exemple donné), on pourra ainsi ne stocker qu'un sous-ensemble donné (par exemple 2692 valeurs) correspondant à l'hémisphère Nord et l'équateur avec $offset_2(i,j)$, $i = 0, ..., (N_1- 1)/2$, les valeurs correspondant à l'hémisphère Sud avec $offset_2(i,j)$, $i = (N_1-1)/2 + 1,...,N_1-1$ étant identiques à $offset_2(N_1 - 1 - i,j)$ ; l'utilisation d'une table unidimensionnelle nécessite de disposer d'une table supplémentaire de $N_1$ (=91) valeurs permettant de trouver le premier élément $offset_2(i, 0)$ pour chaque valeur de $i$.

Le codage de $q_1$ requiert selon l'invention un bit de moins que le codage de $q_2$, car on exploite la contrainte $a_1 \geq 0$. En effet le codage de $q_1$ aura des indices allant de 0 à 226544 (sur 18 bits), tandis que le codage de $q_2$ aura des indices allant de 0 à 463455 (sur 19 bits). Le codage des 2 quaternions requiert donc 37 bits. Les deux indices (18 et 19 bits) issus du bloc 640 sont multiplexés dans le bloc 690.

Dans des variantes, les rôles de $q_1$ et $q_2$ peuvent bien évidemment être intervertis pour forcer une composante (par exemple $a_2$) à être positive pour la quantification.

Dans des variantes, d'autres réalisations de la quantification vectorielle sphérique en dimension 4 selon l'invention seront possibles. En particulier, on pourra utiliser le troisième mode de réalisation où les indices $i,j,k$ pour chaque quaternion $q_1$ et $q_2$ sont multiplexés de façon séquentielle avec un simple codage binaire binaire séparé des indices. Pour l'exemple donné où

$$N_1 = 2\left[\frac{90}{\alpha}\right] + 1$$ avec a = 2 degrés, ce qui donne $N_1 = 91$

$$N_2(i) = \max\left(1, \left[\frac{180}{\alpha} \sin \hat{\phi}_1(i)\right]\right),$$ ce qui donne $N_2(i) = \max(1, [90 \sin \hat{\phi}_1(i)])$

$$N_3(i,j) = \max\left(1, \left[\frac{360}{\alpha} \sin \hat{\phi}_1(i) \sin \hat{\phi}_2(i,j)\right]\right),$$ ce qui donne $N_3(i,j) = \max(1, [180 \sin \hat{\phi}_1(i) \sin \hat{\phi}_2(i,j)])$

pour le quaternion $q_1$ on code et multiplexe l'indice i sur 6 bits car la contrainte $a_1 \geq 0$ force le quaternion dans l'hémispère Nord et $i$ est compris dans $i = 0, ..., (N_1 - 1)/2$, puis les indices $j$ et $k$ sont multiplexés sur un nombre de bits variable en fonction de $N_2(i)$ et $N_3(i,j)$. On procède de même pour le quaternion $q_2$ à la différence près que l'indice $i$ est codé et multiplexé sur 7 bits.

La **figure 7** illustre le décodage correspondant.

Les indices de quantification des paramètres de quantification de la matrice de rotation dans la trame courante sont dé-multiplexés (bloc 790) et décodés dans le bloc 700 selon une méthode de décodage telle que décrit en référence à la figure 3b.

On ne reprend pas ici les détails de l'exemple de réalisation en référence à la figure 6. Les mêmes paramètres sont utilisés qu'au codage. Dans cet exemple, le décodage de $q_1$ utilise les indices allant de 0 à 226544 (sur 18 bits), tandis que le décodage de $q_2$ utilise les indices allant de 0 à 463455 (sur 19 bits). Le démultiplexage (bloc 790) va donc lire 37 bits du train binaire pour séparer les deux indices, l'un sur 18 bits et l'autre sur 19 bits.

Dans des variantes, d'autres réalisations de la quantification vectorielle sphérique en dimension 4 selon l'invention seront possibles. En particulier, on pourra utiliser le troisième mode de réalisation où les indices respectifs $i,j,k$ pour chaque quaternion $q_1$ et $q_2$ sont démultiplexés de façon séquentielle avec un simple codage binaire binaire séparé des indices, l'indice i étant codé et multiplexé sur 1 bit de moins pour l'un des deux quaternions.

Les étapes de conversion et d'interpolation (blocs 760, 762) du décodeur sont identiques à celles effectuées à l'encodeur (blocs 660 et 662). Si le nombre de sous-trames d'interpolation est adaptatif, celui-ci est décodé (bloc 710) - autrement on fixe ce nombre de sous-trames d'interpolation à une valeur prédéterminée.

Le bloc 720 applique par sous-trame le matriçage inverse issu du bloc 762 aux signaux décodés (bloc 780) des canaux ambisoniques, en rappelant que l'inverse d'une matrice de rotation est sa transposée.

Dans des variantes, on pourra appliquer l'invention à un codage audio par transformée, par exemple mono, où le signal est par exemple divisé en sous-bandes fréquentielles qui sont codées par quantification vectorielle de type gain-forme. On prend ici à titre d'illustration le codage TDAC décrit à la section 6.6.9 (codage) et 7.3.5 (décodage) de la recommandation UIT-T G.729.1 pour au moins le codage d'une sous-bande à au moins un débit de codage, par exemple la sous-bande d'indice 17 de 8 coefficients pour le débit de 16 bits. L'homme de l'art saura adapter l'invention à ce codage dans au moins une sous-bande (par exemple de dimension n=8) et à un débit donné (par exemple 16 bits).

Dans des variantes, l'invention pourra être appliquée à d'autres codeurs et décodeurs audio par transformée, mono ou dans des exemples multi-mono.

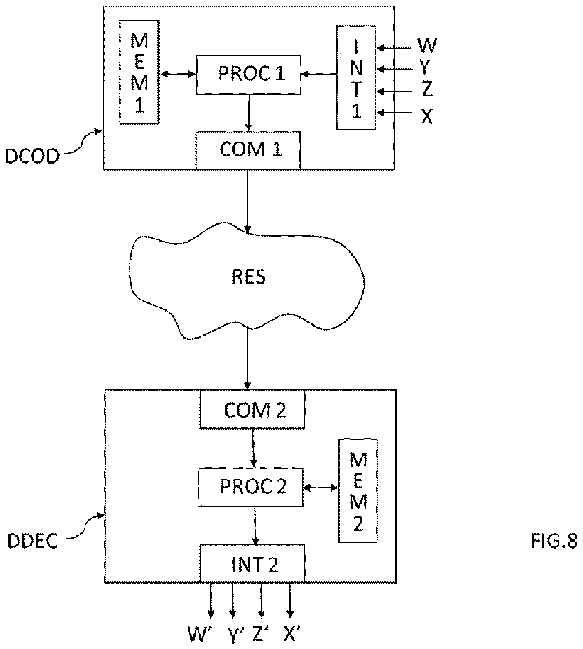

On a illustré sur la **figure 8,** un dispositif de codage DCOD et un dispositif de décodage DDEC, au sens de l'invention, ces dispositifs étant duals l'un de l'autre (dans le sens de « réversibles ») et reliés l'un à l'autre par un réseau de communication RES.

Le dispositif de codage DCOD comporte un circuit de traitement incluant typiquement :

- une mémoire MEM1 pour stocker des données d'instructions d'un programme informatique au sens de l'invention (ces instructions pouvant être réparties entre le codeur DCOD et le décodeur DDEC) ;
- une interface INT1 de réception d'un signal multicanal d'origine **B,** par exemple un signal ambisonique réparti sur différents canaux (par exemple quatre canaux W, Y, Z, X à l'ordre 1) en vue de son codage en compression au sens de l'invention ;
- un processeur PROC1 pour recevoir ce signal et le traiter en exécutant les instructions de programme informatique que stocke la mémoire MEM1, en vue de son codage ; et
- une interface de communication COM 1 pour transmettre les signaux codés via le réseau.

Le dispositif de décodage DDEC comporte un circuit de traitement propre, incluant typiquement :

- une mémoire MEM2 pour stocker des données d'instructions d'un programme informatique au sens de l'invention (ces instructions pouvant être réparties entre le codeur DCOD et le décodeur DDEC comme indiqué précédemment) ;
- une interface COM2 pour recevoir du réseau RES les signaux codés en vue de leur décodage en compression au sens de l'invention ;
- un processeur PROC2 pour traiter ces signaux en exécutant les instructions de programme informatique que stocke la mémoire MEM2, en vue de leur décodage ; et
- une interface de sortie INT2 pour délivrer les signaux décodés par exemple sous forme de canaux ambisoniques W...X, en vue de leur restitution.

Bien entendu, cette figure 8 illustre un exemple d'une réalisation structurelle d'un codec (codeur ou décodeur) au sens de l'invention. Les figures 1 à 6 commentées ci-dessus décrivent en détails des réalisations plutôt fonctionnelles de ces codecs.

## Revendications

1. Procédé de codage d'un point d'entrée sur une sphère de dimension n par codage de n-1 coordonnées sphériques de ce point d'entrée pour définir une grille sphérique, le procédé comportant les opérations suivantes :

   a) quantification scalaire séquentielle des n-1 coordonnées sphériques (E102-1 à E102-(n-1)), définissant une grille sphérique, comportant pour une coordonnée sphérique à coder :

      - détermination d'un nombre de niveaux de quantification scalaire (E103-1 à E103-(n-1)) en fonction de la coordonnée sphérique à coder et le cas échéant des coordonnées sphériques précédemment codées;

- quantification scalaire (E104-1 à E104-(n-1)) de la dite coordonnée sphérique en fonction dudit nombre de niveaux correspondant à ladite coordonnée sphérique, avec pour n-2 coordonnées, la détermination de 2 candidats les plus proches pour la coordonnée sphérique à coder et donnant deux indices de quantification fonction des indices de quantification déterminés pour les coordonnées sphériques précédentes, afin d'obtenir au plus $2^{n-2}$ candidats à l'issue de la quantification scalaire séquentielle des n-1 coordonnées (E105) ;

b) sélection (E106) du meilleur candidat qui minimise une distance entre le point d'entrée et les au plus $2^{n-2}$ candidats, et détermination des indices de quantification séparés issus de la quantification scalaire séquentielle desdites coordonnées sphériques dudit meilleur candidat;
c) codage séquentiel (E107) des indices de quantification séparés dudit meilleur candidat.

2. Procédé selon la revendication 1, dans lequel le codage séquentiel des indices de quantification séparés comprend la détermination d'un indice de quantification global par addition d'au moins une information de cardinalité à l'indice de quantification d'une coordonnée sphérique.

3. Procédé selon la revendication 1, dans lequel la quantification scalaire d'une des n-1 coordonnées sphériques inclut un décalage prédéfini.

4. Procédé selon la revendication 1, dans lequel la détermination du nombre de niveaux de quantification pour au moins une coordonnée sphérique s'effectue en fonction d'un nombre total de points de la grille sphérique et de la surface d'une zone sphérique de la sphère en dimension n.

5. Procédé selon la revendication 2, dans lequel la détermination d'une information de cardinalité pour au moins une coordonnée sphérique s'effectue en fonction d'un nombre de points de la grille sphérique et de la surface d'une zone sphérique de la sphère en dimension n.

6. Procédé selon la revendication 1, dans laquelle pour au moins une coordonnée sphérique, le nombre de niveaux est forcé à une valeur impaire pour un nombre différent de 1.

7. Procédé de codage d'un signal audio multicanal utilisant une matrice de rotation représentée par au moins un quaternion unitaire dans lequel le codage d'au moins un quaternion unitaire est effectué selon le procédé de codage conforme à l'une des revendications 1 à 8 avec une valeur de n=4.

8. Procédé de codage d'un signal audio multicanal utilisant des informations de direction d'arrivée de sources audio et dans lequel le codage de ces informations est effectué selon le procédé de codage conforme à l'une des revendications 1 à 8 avec une valeur de n=3.

9. Procédé de codage d'un signal audio utilisant une transformation en sous-bandes fréquentielles dans lequel le codage d'au moins une sous-bande est effectué selon le procédé de codage conforme à l'une des revendications 1 à 8 avec une valeur de n à la taille de la sous-bande.

10. Procédé de décodage d'un point d'entrée sur une sphère de dimension n, par décodage de n-1 coordonnées sphériques de ce point d'entrée, définissant une grille sphérique, le procédé comportant le décodage séquentiel des coordonnées sphériques (E111-1 à E111-(n-1), à partir d'un indice de quantification global ou de n-1 indices multiplexés (E110), par les opérations suivantes :

- détermination d'un nombre de niveaux de quantification (E112-1 à E112-(n-1)) en fonction de la coordonnée sphérique à décoder et le cas échéant des coordonnées sphériques précédemment décodées ;
- détermination des indices séparés issus de la quantification séparée desdites coordonnées sphériques (E113-1 à E113-(n-1)) en fonction des nombres de niveaux déterminés puis obtention des coordonnées sphériques correspondantes (E114-1 à E114-(n-1)) pour reconstruire un point décodé sur la sphère de dimension n (E116).

11. Procédé de décodage selon la revendication 10, dans lequel la détermination des indices séparés s'effectue à partir d'informations de cardinalité définies pour lesdites coordonnées sphériques.

12. Procédé de décodage selon la revendication 10, dans lequel le décodage d'une des n-1 coordonnées sphériques inclut un décalage prédéfini

**13.** Procédé de décodage selon la revendication 11, dans lequel les informations de cardinalité sont obtenues de façon analytique à partir d'un nombre de points de la grille sphérique et de la surface d'une zone sphérique de la sphère en dimension n.

**14.** Dispositif de codage comportant un circuit de traitement pour la mise en œuvre des étapes du procédé de codage selon l'une des revendications 1 à 9.

**15.** Dispositif de décodage comportant un circuit de traitement pour la mise en œuvre des étapes du procédé de décodage selon l'une des revendications 10 à 13.

**16.** Support de stockage, lisible par un processeur, mémorisant un programme informatique comportant des instructions pour l'exécution du procédé de codage selon l'une des revendications 1 à 9 ou du procédé de décodage selon l'une des revendications 10 à 13.

E100 $x = (x_1, ..., x_n)$

E101 Sph. $(1, \phi_1, ..., \phi_{n-1})$

E103-1 $N_1$

E103-2 $N_2$

$\cdots$

E103-(n-1) $N_{n-1}$

E104-1 quant. $\phi_1$

E104-2 quant. $\phi_2$

$\cdots$

E104-(n-1) quant. $\phi_{n-1}$

E102-1

E102-2

E102-(n-1)

E105 $2^{n-2}$ cand. $(1, \hat{\phi}_1(i_1), ..., \hat{\phi}_{n-1}(i_{n-1}))$

E106 Min dist. $(i_1(m \gg (n-3)),, ..., i_{n-1}(m))$

E107 MUX IND.

FIG1a

E110 DEMUX IND.

E112-1 $N_1$

E112-2 $N_2$

$\cdots$

E112-(n-1) $N_{n-1}$

E113-1 dec. $i_1$

E113-2 dec. $i_2$

E113-(n-1) dec. $i_{n-1}$

E114-1 dec. $\phi_1$

E114-2 dec. $\phi_2$

$\cdots$

E114-(n-1) dec. $\phi_{n-1}$

E111-1

E111-2

E111-(n-1)

E115 Sph. $(1, \hat{\phi}_1(i_1), ..., \hat{\phi}_{n-1}(i_{n-1}))$

E116 $x = (\hat{x}_1, ..., \hat{x}_n)$

FIG.1b

50

FIG2a

FIG.2b

E300 — $x = (w, x, y, z)$

E301 — Sph. $(1, \phi_1, \phi_2, \phi_3)$

E102-1

E303-1 — $N_1$

E304-1 — quant. $\phi_1$

E303-2 — $N_2$

E304-2 — quant. $\phi_2$

E302-2

E303-3 — $N_3$

E304-3 — quant. $\phi_3$

E302-3

E305 — $(1, \hat{\phi}_1(i_1(m \gg 1)), \hat{\phi}_2(i_1(m \gg 1), i_2(m)),$
$\hat{\phi}_3(i_1(m \gg 1), i_2(m), i_3(m))), m=0,1,2,3$

E306 — Min dist.
$(i_1(m \gg 1), i_2(m), i_3(m))$

E307 — MUX IND.

FIG3a

E310 — DEMUX IND.

E312-1 — $N_1$

E313-1 — dec. $i$

E314-1 — dec. $\phi_1$

E311-1

E312-2 — $N_2$

E313-2 — dec. $j$

E314-2 — dec. $\phi_2$

E311-2

E312-3 — $N_3$

E313-3 — dec. $k$

E314-3 — dec. $\phi_3$

E311-3

E315 — Sph. $(1, \hat{\phi}_1(i), \hat{\phi}_2(i,j), \hat{\phi}_3(i,j,k))$

E316 — $(\hat{w}, \hat{x}, \hat{y}, \hat{z})$

FIG.3b

EP 4 120 255 A1

FIG.4

FIG.5

FIG.6

FIG.7

FIG.8

Europäisches
Patentamt

European
Patent Office

Office européen
des brevets

# RAPPORT DE RECHERCHE EUROPEENNE

Numéro de la demande

EP 21 30 5987

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 1 879 179 A1 (SIEMENS AUDIOLOGISCHE TECHNIK [DE]) 16 janvier 2008 (2008-01-16) | 1,4, 7-10, 14-16 | INV.<br>G10L19/035<br>G06T9/00 |
| A | * abrégé; figures *<br>* alinéas [0001], [0020], [0023], [0034], [0041] – [0043] *<br>----- | 2,3,5,6, 11-13 | H04N19/124<br>H04N19/597<br>H04N19/94 |
| Y | Adrien Daniel ET AL: "Spatial Auditory Blurring and Applications to Multichannel Audio Coding",<br>,<br>23 juin 2011 (2011-06-23), XP055104301,<br>Extrait de l'Internet:<br>URL:http://tel.archives-ouvertes.fr/tel-00623670/en/<br>* page 69 *<br>----- | 1,4, 7-10, 14-16 | ADD.<br>G10L19/038<br>G10L19/008 |

**DOMAINES TECHNIQUES RECHERCHES (IPC)**

G10L
G06T
H04N

Le présent rapport a été établi pour toutes les revendications

| Lieu de la recherche | Date d'achèvement de la recherche | Examinateur |
|---|---|---|
| La Haye | 15 décembre 2021 | Scappazzoni, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 30 5987

15-12-2021

| Document brevet cité au rapport de recherche | Date de publication | Membre(s) de la famille de brevet(s) | Date de publication |
|---|---|---|---|
| EP 1879179 A1 | 16-01-2008 | AT 450857 T<br>DK 1879179 T3<br>EP 1879179 A1<br>US 2008015852 A1 | 15-12-2009<br>12-04-2010<br>16-01-2008<br>17-01-2008 |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2020177981 A

**Littérature non-brevet citée dans la description**

- **P. MAHÉ ; S. RAGOT ; S. MARCHAND.** First-order ambisonic coding with quaternion-based interpolation of PCA rotation matrices. *Proc. EAA Spatial Audio Signal Processing Symposium,* Septembre 2019, 7-12
- **P. MAHÉ ; S. RAGOT ; S. MARCHAND.** First-Order Ambisonic Coding with PCA Matrixing and Quaternion-Based Interpolation. *Proc. DAFx, Birmingham,* Septembre 2019

- **V. PULKKI.** Spatial sound reproduction with directional audio coding. *Journal of the Audio Engineering Society,* 2007, vol. 55 (6), 503-516
- **PEROTIN et al.** CRNN-based multiple DoA estimation using acoustic intensity features for Ambisonics recordings. *IEEE Journal of Selected Topics in Signal Processing,* 2019